# EUROPÄISCHE PATENTSCHRIFT

(11) **EP 0 780 801 B1**
(45) Veröffentlichungstag und Bekanntmachung des Hinweises auf die Patenterteilung: **25.04.2007**
(21) Anmeldenummer: 96118760.6
(22) Anmeldetag: 22.11.1996
(51) Int. Cl.: G07B 15/00, G07F 7/10

(54) **Verfahren und Vorrichtungen für die Verwendung und Verrechnung von elektronischen Zahlungsmitteln in einem offenen und interoperablen System zur automatischen Gebührenerhebung**
Method and devices for using and billing of electronic payment means in an open and interoperable system for automatic fee charging
Procédé et dispositifs pour l'utilisation et la facturation de moyens de paiement électroniques dans un système ouvert et interopérable pour la taxation automatique de frais

(30) Priorität: 19.12.1995 WO PCT/EP95/05019
(43) Veröffentlichungstag der Anmeldung: 25.06.1997
(73) Patentinhaber: GZS Gesellschaft für Zahlungssysteme mbH, 61118 Bad Vilbel (DE)
(72) Erfinder: Wolfart, Peter, 61267 Neu-Anspach (DE); Alles, Peter, Dr., 65824 Schwalbach (DE)
(74) Vertreter: Maiwald, Walter

(56) Entgegenhaltungen:
- EP-A- 0 152 198
- EP-A- 0 401 192
- EP-A- 0 542 297
- EP-A- 0 577 328
- EP-A- 0 609 453
- EP-A- 0 616 302
- WO-A-91/18354
- WO-A-93/09621
- WO-A-95/10147
- WO-A-95/30211
- GB-A- 2 278 704
- US-A- 4 303 904
- US-A- 4 578 530
- US-A- 5 450 087

## Beschreibung

Die Erfindung betrifft Verfahren und Vorrichtungen für die Verwendung und Verrechnung von elektronischen Zahlungsmitteln in einem offenen und interoperablen System zur automatischen Gebührenerhebung. Spezieller betrifft die Erfindung solche Verfahren und Vorrichtungen, bei denen die Verwendung des elektronischen Zahlungsmittels berührungsfrei durch eine autonome nutzerseitige Vorrichtung erfolgt.

Bargeldlose Zahlungsvorgänge sind von stark zunehmender Bedeutung im geschäftlichen Verkehr, auch und gerade für den Endverbraucher. Speziell die bevorstehende Einführung von elektronischen Geldbörsen und deren erwarteter Einfluß auf die Endverbraucher-Zahlungsgewohnheiten sowie die stetig wachsende Zahl von Kredit- und Debitkartenbesitzern zeigen dies ebenso wie die rapide Zunahme von Terminals für solche Karten im Einzelhandels- und Dienstleistungssektor.

Entsprechend wächst das Interesse an, und der Bedarf für, bargeldlose Zahlungsmöglichkeiten auch im Bereich der Gebührenerhebung für Eintritt und Benutzung von Anlagen, wie Gebäuden, Straßen, Brücken, von Transportsystemen und Beförderungsmitteln usw. Schon national, und erst recht international, unterliegt die Entwicklung entsprechender bargeldloser Zahlungseinrichtungen der realen Bedingung, daß die als Gebührenentrichter in Frage kommenden Personen für eine Vielzahl unterschiedlicher Zahlungssysteme mit verschiedenen Techniken ausgestattet sind. Ein akzeptables Gebührenerhebungssystem muß mit möglichst vielen solcher Zahlungssysteme kooperieren können, also offen und interoperabel ausgestaltet sein.

Die Erfindung betrifft solche offenen und interoperablen Systeme zur automatischen Abwicklung von Zahlungsvorgängen, insbesondere von Gebührenerhebungen. Spezieller betrifft die Erfindung Verfahren zur automatischen Abwicklung von bargeldlosen, vorzugsweise berührungsfreien, Zahlungsvorgängen, insbesondere zur automatischen Erhebung von Gebühren und dergleichen, zwischen einem Leistungs- oder Dienstanbieter und einem Nutzer dieser Leistungen bzw. dieses Dienstes, der dafür mit einem bargeldlosen, insbesondere elektronischen Zahlungsmittel bezahlt. Ein Beispiel ist die Verwendung bei der automatischen Erhebung von Gebühren, die für die Benutzung von Straßen, Parkhäusern und sonstigen damit im Zusammenhang stehenden Mehrwertdiensten durch Fahrzeuge verlangt werden.

Auf politischer Ebene wird die Einführung einer streckenbezogenen automatischen Gebührenerhebung (AGE) auf Autobahnen diskutiert. Diese soll bargeldlos unter Wahrung des Datenschutzes und der Verkehrssicherheit erfolgen. Am Beispiel dieses AGE-Systems werden die Voraussetzungen und Anforderungen an erfindungsgemäße Verfahren nachfolgend dargestellt.

Das AGE-Zahlungssystem soll vorzugsweise auf universell, vielseitig einsetzbaren und international standardisierten Mikroprozessorkarten oder auch Smartcards basieren, die auch als ICC (Integrated Circuit Cards) oder einfach als Chipkarte bezeichnet werden. Eine ICC kann mit verschiedenen Applikationen wie beispielsweise Fahrscheine, Identifizierungsdaten (Paß), elektronische Geldbörse, Nachbezahlungsfunktion (Debit- und Kreditkarten) usw. ausgestattet werden.

Das für AGE und andere solche Anwendungszwecke zu entwickelnde Zahlungssystem kann sowohl ein universelles oder auch transportspezifisches Zahlungssystem mit den Varianten Nachbezahlung und Vorausbezahlung sein. Das Zahlungssystem kann sowohl regional (z. B. Kundenkarte) als auch überregional (z. B. nationale oder internationale Geldbörse, Kreditkarte) einsetzbar sein.

Im allgemeinen ist die ICC eine Einheit eines komplexen Gesamtsystemes, das IC- (reiner Chip) und ICC-Hersteller, Karten- und Applikations-Emittenten, Dienstanbieter, Clearing- und Processing-Unternehmen, Load Agents und weitere Komponenten/Institutionen umfaßt.

Die Hauptanforderung, die das System und die hierfür definierten Schnittstellen erfüllen müssen, ist die Wahlfreiheit des Nutzers für die in Chipkarten zu ladenden Applikationen und das für die Bezahlung von Leistungen und Diensten (hier: AGE-Diensten) einzusetzende Zahlungsmittel.

Zur Gewährleistung des Datenschutzes, zum Schutz gegenüber Manipulationsversuchen bei der Auf- und Abbuchung und zum Nachweis der Leistungs- und Zahlungsverweigerung sind für alle am System teilnehmenden Institutionen/Komponenten ausgefeilte Sicherheitsanforderungen technischer, rechtlicher und organisatorischer Art erforderlich.

Das System muß in der Praxis eine sichere, dabei aber schnelle Abwicklung der einzelnen Zahlungsvorgänge ermöglichen. Bekannte Verfahren und Vorrichtungen für point-ofsale Systeme z.B. zur Zahlung mit Bezahlkarte, bei denen die Karte in ein Lesegerät eingeführt, dort ausgelesen und nach erfolgter Transaktion wieder ausgegeben werden muß, scheiden schon wegen ihres Zeitaufwands aus. Erst recht muß auf online-Kontrollabfragen üblicher Art verzichtet werden, ohne daß sich Sicherheitsprobleme ergeben dürfen.

Wesentliche Anforderungen an das System, hier das AGE-System, werden nachfolgend in zwei Gruppen beschrieben, nämlich solche, die unter Datenschutzaspekten und solche, die sich aus anderen funktionalen Aspekten ergeben.

### Hauptanforderungen aus dem Datenschutz

Der Datenschutz nimmt bei der Entwicklung und Implementierung eines Systems für die automatische Gebührenerhebung eine wesentliche Rolle ein.

Im folgenden werden die Hauptanforderungen des Datenschutzes, die sich auf das Zahlungssystem und das Sicherheitskonzept beziehen, näher skizziert.

### 1. Anonymität

Unter Anonymität ist zu verstehen, daß personenbezogene Daten nur beim Nutzer gespeichert werden. Auch die anonyme Zahlung und die Abrechnung sind hier entsprechend zu berücksichtigen. Ein Abgleich der personenbezogenen Daten mit zentralen Dateien ist zu unterbinden. Im Falle des Enforcements dürfen nur bei begründetem Verdacht personenbezogene Daten aufgedeckt werden.

### 2. Vertraulichkeit

Vertraulichkeit bedeutet, daß personenbezogene Daten vor unberechtigter Kenntnisnahme geschützt werden müssen. Der Zugriff auf personenbezogene Daten darf nur durch autorisierte Stellen stattfinden (mit Hilfe eines entsprechenden Schlüssels). Auch gegenüber einem Zugriff von dritten Parteien ("Hacker") muß das System entsprechend geschützt sein.

### 3. Integrität

Integrität beinhaltet, daß der Nutzer nicht zu unrecht belastet werden darf und daß die Systembeteiligten sich darauf verlassen können, daß alle Daten fehlerfrei und ordnungsgemäß erzeugt, verarbeitet, gespeichert und weitergeleitet werden. Auch das Erkennen und die Abwehr von Manipulationsversuchen sind unter dem Schutz der Integrität zu subsummieren.

### 4. Transparenz

Die Nachvollziehbarkeit und Steuerbarkeit des Verfahrens für den Entscheidungsträger und den Nutzer ist das ausschlaggebende Kriterium für die Akzeptanz des Systems. Darunter zu verstehen ist insbesondere die Anzeige oder der Nachweis von Abbuchungen, Änderungen, Funktionsstörungen und erschöpfte Konten sowie die Erkennbarkeit von Enforcementmaßnahmen. Außerdem sollte der Nutzer über die Informationen, die bei ihm dezentral gespeichert sind, informiert sein.

### 5. Rücknahmefestigkeit

Unter Rücknahmefestigkeit des Datenschutzes ist zu verstehen, daß das System eine Verankerung des Datenschutzes beinhaltet, die keine unkontrollierte Möglichkeit der Veränderung durch Betreiber oder Dritte zuläßt.

### Weitere Hauptanforderungen:

### 1. Interoperabilität

Das eingesetzte System soll interoperabel sein. Interoperabilität beschreibt dabei die Fähigkeit eines automatischen Gebührenerhebungssystemes, mit anderen Systemen im Umfeld der Erhebung von Nutzungsentgelten für Nutzer und Betreiber effektiv zusammenzuwirken. Die Interoperabilität bezieht sich im Beispiel der AGE auf Dienstleistungen der Straßenbenutzung und von Mehrwertdiensten, auf Zahlungssysteme (unterschiedliche Issuer), auf Übertragungstechniken (Mikrowelle, Infrarot, Zellularfunk etc) und den pan-europäischen Einsatz. Das Gesamtsystem soll für eine beliebige Anzahl von AGE-Betreibern und Zahlungsmittelemittenten ausgelegt sein, wobei eine organisatorische Zusammenfassung unterschiedlicher Systemfunktionen möglich sein muß.

### 2. Kosteneffizienz

Desweiteren muß das System kostengünstig sein, d.h. Nutzung von vorhandenen Infrastrukturen, gleiche externe Schnittstellen der Systemkomponenten für alle Zahlungssysteme.

### 3. Zuverlässigkeit

Das System muß den allgemeinen Anforderungen an ein System, hier ein AGE-System in Bezug auf die Zuverlässigkeit im Betrieb entsprechen (Fehlfunktionen dürfen nicht zu Lasten des Nutzers gehen).

### 4. Mehrwertdienste

Die Integration von Mehrwertdiensten (ÖPNV, Verkehrslenkung etc.) nach Wahl des Nutzers ist entweder über die Akzeptanz des Zahlungssystemes oder über spezielle Applikationen vorzusehen.

### 5. Störungsfreier und sicherer Verkehrsablauf

Natürlich muß das AGE-System auch den verkehrstechnischen Forderungen genügen, d.h. eine zuverlässige Gebührenerhebung muß bei allen Verkehrssituationen und unter allen Umgebungsbedingungen gewährleistet sein.

Aus diesen Anforderungen resultieren unmittelbar speziellere Anforderungen an die Komponenten des (AGE)-Systems, wie folgt:

### Übergreifende Anforderungen

### 1. Manipulationsschutz

Bewußte (Sabotage, Betrug) und unbewußte Manipulationen (Funktionsstörungen) sind zu erkennen und weitestgehend zu verhindern. Zum Schutz vor unbewußter Manipulation eignen sich verschiedene technische Maßnahmen, wie
a) Verwendung von zugelassenen und zertifizierten Geräten,
b) Einfachheit und Robustheit der Geräte und Systeme,
c) Schutz von Daten durch Codierung mit Fehlererkennungs- und -behebungseigenschaften,
d) Überwachung der straßenseitigen und zentralen Einrichtungen gegen Ausfälle und Störungen,
e) Bereitstellung eines leistungsstarken Vertriebs- und Servicecenters.

Schutz vor bewußter Manipulation kann dagegen durch die genannten Maßnahmen nur unzulänglich erreicht werden. Stattdessen müssen hierfür kryptographische Codes eingesetzt werden, die innerhalb der Kommunikation zwischen den Systembeteiligten zu verwenden sind.
2. Erhebung und Enforcement sind organisatorisch voneinander zu trennen.
3. Die Rollentrennung zwischen Enforcement, Zahlungsabwicklung, Kontenverwaltung und Kommunikationsabwicklung muß systematisch, vorzugsweise auch gesetzlich verankert werden.

Anforderungen an das Zahlungssystem

### 1. Offenheit des Zahlungssystemes

Das Zahlungssystem muß hinsichtlich des verwendbaren Zahlungsmittels offen sein, d.h. neben transportspezifischen Zahlungsmitteln muß auch der Einsatz von universellen bargeldlosen Zahlungsmitteln möglich sein.

### 2. Zahlungssysteme

Als Basisverfahren steht die Vorausbezahlung mit anonymer Guthabenkarte zur Verfügung, alternativ dazu Nachbezahlung. Die Wahlmöglichkeit soll beim Nutzer liegen, dabei darf keines der beiden Verfahren benachteiligt werden (Abwicklungsgebühren, Endgerätepreise etc.).

### 3. Wahlfreiheit des Nutzers

Der Nutzer entscheidet über die Zahlungsart (vorausbezahlt oder nachbezahlt, universell oder transportspezifisch), d.h. er muß wissen, welche Zahlungssysteme zugelassen sind.

### 4. Unterschiedliche Nutzer-Ausstattung

Der Nutzer wird üblicherweise mit einer Bezahlvorrichtung (OBE, On-Board Equipment) versehen sein, die er in seinem Fahrzeug mit sich führt und die technisch und funktional unterschiedlich ausgestattet sein kann. So kann z.B. die Applikation zur Verarbeitung, Speicherung und Übertragung von AGE-Daten (OBU, On-Board Unit bzw. Transponder) vom Zahlungsmittel (z.B. Chipkarte) prinzipiell getrennt sein, oder das Zahlungsmittel kann in einem Speicher der Bezahlvorrichtung z.B. als eine feste Abrechnungsnummer oder als Werteinheitenzähler gespeichert sein.

### 5. Zahlungsgarantie

Nachbezahlung: Der Zahlungsmittelherausgeber muß dem Dienstanbieter eine zuverlässige Zahlungsgarantie geben; Vorausbezahlung: die Zahlungsgarantie erfolgt durch das System, d.h. die technischen Bedingungen sowie die organisatorischen Abläufe müssen die Zahlung des geforderten Betrages sicherstellen.

### 6. Quittung

Der Nutzer muß einen prüfsicheren Nachweis über die erfolgte Zahlung (abschließende Quittung) bzw. seine Zahlungswilligkeit (vorläufige Quittung) erhalten, dessen Aufbewahrungspflicht beschränkt sein sollte.

### 7. Mißbrauchssicherheit

Die Mißbrauchssicherheit innerhalb des Zahlungssystemes muß gewährleistet sein. Dazu zählen, daß:
a) das System nicht zugelassene Zahlungsmittel erkennen muß,
b) nur autorisierte und autorisiert geladene Zahlungsmittel zulässig sind,
c) das System die Sperrmöglichkeit von Einzelkarten und/oder Gruppen ermöglicht,
d) das System sicher ist gegenüber unautorisierter Abbuchung und
e) das System geschützt ist gegen Zahlungsvortäuschung z.B. durch Wiedereinspielung bereits verwendeter Zahlungen und gegen das Auslesen vertraulicher Daten durch Unbefugte.

### 8. Revisionssicherheit

Die Revisionssicherheit muß bei allen Zahlungsarten gegeben sein. Dies bedeutet, daß alle Forderungen nachvollziehbar sind und die Eindeutigkeit von Ort, Zeit und Beteiligten der Zahlungsvorgänge gewährleistet ist.

### 9. Abwicklung

Die Abwicklung zwischen den beteiligten Partnern muß schnell erfolgen. Dies bedeutet eine echtzeitnahe Verbuchung auf dem Zahlungsmedium (z.B. Chipkarte) bei Vorausbezahlung und kurzfristige Wertstellung bei allen Systemen zugunsten der Verrechnungsstelle.

### 10. Rückwirkungsfreiheit

Die Anonymität darf Zuverlässigkeit, Revisionssicherheit und Zahlungsgarantie nicht negativ beeinflussen.

### 11. Benutzerfreundlichkeit

Das System muß benutzerfreundlich sein, d.h. Chipkarten müssen wiederverwendbar und Abrechnungen müssen übersichtlich sein.

### Anforderungen an die Sicherheitsarchitektur

### 1. Trennbarkeit von Sicherheitsdomänen

Grundsätzlich ergibt sich eine Sicherheitsarchitektur, die durch zwei trennbare Sicherheitsdomänen charakterisiert ist: Die (AGE)-Abwicklung und das Zahlungssystem. Die Zahlungsfunktion muß unter Berücksichtigung universeller und transportspezifischer voraus- und nachbezahlter Zahlungsmittel von der (AGE)-Applikation sicherheitstechnisch getrennt werden können. Durch die Architektur muß erreicht werden, daß sowohl ein Dienstanbieter sein eigenes Zahlungsmittel emittieren und akzeptieren und damit auch die Sicherheitsverfahren selbst bestimmen kann, als auch der Einsatz von universellen Zahlungsmitteln unabhängiger Emittenten mit übergeordneten Sicherheitsstrukturen ermöglicht wird.

2. Sicherheitsarchitektur der (AGE)-Abwicklung Kommunikationsschnittstellen müssen technisch und organisatorisch abgesichert sowie abgestimmt auf die genutzten Zahlungssysteme sein. Dazu gehört auch, daß alle Systemkomponenten in ein institutionalisiertes Verfahren zur Zulassung, Prüfung und Systemkontrolle eingebunden sind. Es muß für die Verrechnungsstelle überprüfbar sein, ob die Zahlungsdatensätze aus einem authentischen und zugelassenen Zahlungsmittel stammen. Die dazu notwendigen Protokolle und die dazugehörige Schlüsselverwaltung müssen standardisiert werden.

### 3. Sicherheitsarchitektur der Zahlungssysteme

Der Emittent verwaltet die Geldwerte eigenverantwortlich. Die Schlüssel zur Absicherung der Zahlungsverfahren befinden sich beim Emittenten bzw. bei von ihm beauftragten Instanzen und im Zahlungsmittel. Das (AGE)-System muß in der Lage sein, die Zahlungsdatensätze inkl. der benötigten Zertifikate transparent weiterzuleiten.

4. Implementierung einer Zulassungsstelle Implementierung einer Zulassungsstelle, die zuständig ist für Wahrung der Systemintegrität, Interoperabilität, Zahlungsgarantie und sichere Zusammenarbeit. Dies bedingt eine Institutionalisierung der Zulassung, Prüfung und Systemkontrolle von beteiligten Funktionseinheiten, eingesetzten Komponenten und zugelassenen Zahlungsmitteln; die Zulassung kann sich auf lokalen, nationalen oder internationalen Einsatz beziehen. Diese Aufgabe kann auch durch nationale/internationale Clearingstellen übernommen werden, die sowohl das nationale und internationale Clearing abwickeln (bilaterale Vereinbarungen zum Austausch anderer Daten (Apportionment) oder bilateral geregelte Zahlungsabwicklungen sollen selbstverständlich möglich sein).

### 5. Zuverlässigkeit

Die Zuverlässigkeit des Systems muß hoch sein, d.h. alle zentralen Komponenten müssen fehlertolerant sein. Zur Erreichung der geforderten Zuverlässigkeit sollen auch kryptographische Verfahren eingesetzt werden.

### Anforderungen an das Enforcement

### 1. Systemfehler

a) Nutzer, die korrekt gezahlt haben, dürfen nicht als Falsch- oder Nichtzahler behandelt werden,
b) Nutzer, die bezahlen wollten, dürfen nicht als Falsch- oder Nichtzahler behandelt werden.

### 2. Zugriff des Enforcements

Das Enforcement sollte lediglich eine Zugriffsmöglichkeit auf die letzte Transaktion haben. Dabei werden beispielsweise bei einem Verfahren, das mit einer nutzerseitigen Bezahlvorrichtung und einer anbieterseitigen Erhebungsvorrichtung arbeitet, folgende Faktoren überprüft: Vorhandensein einer zugelassenen Bezahlvorrichtung (OBE), Vorhandensein einer funktionierenden Erhebungsvorrichtung (Road Side Equipment, RSE), Zeitpunkt, Ort, Höhe/Tarif der letzten Zahlung, Gültigkeit des Zahlungsmittels, Tarifeinstufung hinsichtlich der Kfz-Klassifizierung, ggf. der tatsächlichen Nutzung, Fahrweg zum Zeitpunkt der Zahlung, Fahrzeit beim Durchfahren, Verkehrssituation bei der Erhebung, Zugehörigkeit zu Gruppen. Analoge Prüfungen erfolgen bei einem Verfahren, bei dem ohne Erhebungsvorrichtung (virtuelle Zahlstellen) vorgegangen wird und die wesentlichen Funktionen der Erhebungsvorrichtung in eine autonome Bezahlvorrichtung hineinverlegt sind.

### 3. Fahrscheininhalt

Der Fahrschein sollte folgenden Minimalinhalt aufweisen: ID der letzten Zahlstelle, Datum und sekundengenaue Zeitangabe, bezahlter Betrag und Währung, Zählnummer des Fahrscheines, Klassifizierungsmerkmale, Zertifikat des Dienstanbieters.

### 4. Aufbewahrungspflicht

Die Aufbewahrungspflicht des Fahrscheines sollte bis zur nächsten Ausfahrt beschränkt sein.

Anforderungen an Bezahlvorrichtungen, insbesondere in Form von OBUs

### 1. Anzeigemöglichkeiten

Die Bezahlvorrichtung sollte folgende Anzeigemöglichkeiten aufweisen:
a) Gebührenhöhe
b) Guthaben
c) Abbuchung erfolgt/nicht erfolgt
d) Überprüfbarkeit der Funktionen durch Nutzer (Störanzeige).

### 2. Transaktionsspeicheranzeige bzw. -druck

Die Bezahlvorrichtung soll je nach Realisierungsform in der Lage sein, den Transaktionsspeicher (Fahrscheine, Abbuchungsvorgänge und -versuche) nur für den Nutzer anzuzeigen bzw. auszudrucken.

### 3. Manipulationsschutz

Zum Schutz vor Manipulationen müssen Sicherheitsvorkehrungen logischer, technischer und physikalischer Art für die Bezahlvorrichtung getroffen werden.

Die Realisierung des erfindungsgemäßen Systems erfolgt unter der Geltung schon existierender, genereller Standards, die den Rahmen des Datenaustausches bei solchen Transaktionen vorgeben. Zu nennen sind insbesondere die folgenden, überwiegend nicht öffentlichen Working Items (WI) der europäischen Normierungsorganisation CEN im Technical Committee 278:
WI 1.1.1 Integration of payment systems
WI 1.1.2 Interface specification for clearing between operators
WI 1.2.1 AFC requirements for DSRC
WI 1.2.3 AFC interface definition for DSRC
WI 9.2.1 DSRC layer 7
WI 9.2.2 DSRC medium and layer 1
WI 9.2.3 DSRC layer 2

Dazu kommt das sog. Basispapier (Anforderungen an automatische Gebührenerhebungssysteme) des GK 717 AK 1 als deutschem Spiegelausschuß zum CEN TC 278 WG 1, der auch das deutsche Transaktionsmodell für die Luftschnittstelle festgelegt hat.

Diese Standards definieren die Komponenten des Systems, insbesondere die Dateninhalte und deren Verwendung, nur begrenzt bzw. nicht.

Im Stand der Technik sind diverse Vorschläge für Verfahren zur automatischen Abwicklung von bargeldlosen Zahlungsvorgängen veröffentlicht worden.

Aus der internationalen Patentanmeldung WO 95/10147 der Amtech Corporation ist ein System für die Gebührenerfassung in Echtzeit für Autobahn-Mautstellen u.dgl. bekannt. Im Vordergrund dieser Veröffentlichung steht die möglichst vollständige Anonymisierung des Zahlungsvorganges, bei dem jeder Rückschluß auf die Fahrzeugbewegung unmöglich gemacht werden soll. Das System arbeitet mit nutzerseitigen Bezahlvorrichtungen, die hier als "in-vehicle units" bezeichnet werden und mit Erhebungsvorrichtungen in Form von "roadside collection stations" zusammenarbeiten. Prinzipiell erfolgt die Zahlung durch Übergabe von in Chipkarten der OBEs gespeicherten elektronischen Schecks in kryptographisch versiegelten "Umschlägen" mit zugehörigen "Öffnern" ("cryptographically sealed envelopes with openers", basierend auf Chaums Technologie der "blind signatures" mit asymmetrischer Verschlüsselung). Der Bezahlungsvorgang verläuft in drei Schritten und verwendet spezielle Datenstrukturen für die Verschlüsselung von Geldbetrag und bestimmten Authentisierungsdaten, wobei sich die so strukturierten Daten ausschließlich für die Kommunikation an der Zahlstelle einsetzen lassen. Weist die Chipkarte den für die Zahlung benötigten Betrag nicht mehr auf, muß sie an einem Bankcomputer oder dergleichen erst wieder aufgeladen werden, was aber offenbar datenmäßig völlig getrennt von den für den Zahlungsvorgang verwendeten speziell strukturierten Daten erfolgt. Für den Fall, daß der Benutzer, statt die Chipkarte an der Zahlstelle zunächst wieder aufzuladen, ohne Zahlung die Erhebungsvorrichtung passiert, soll ein post-payment dadurch ermöglicht werden, daß spezielle Fahrzeug- oder Fahreridentitätsdaten, die in der Bezahlvorrichtung gespeichert sind, mittels einer speziellen Freischaltung dem Anbieter zugänglich gemacht werden.

Dieses System stellt zwar im Regelfall sicher, daß sich die Inanspruchnahme der Leistung durch den Nutzer nicht auf diesen zurückverfolgen läßt, was jedoch nur eine, und keineswegs immer die wichtigste, Anforderung an ein solches System ist. Die Offenheit des Systems für Zahlungsmittel, die geradezu eine gegenüber der Dienstbezahlung nachgeschaltete und unabhängige Zahlungsmittelidentifizierung ermöglichen muß, ist eine andere, äußerst wichtige Anforderung, und dieser Anforderung kann ein grundsätzlich geschlossenes System wie in WO 95/10147 beschrieben, notwendigerweise nicht gerecht werden.

Aus EP-A1 0 401 192 ist ein automatisches Gebührenerhebungssystem für den Einsatz einer elektronischen Geldbörse für Straßen-Benutzungsgebühren bekannt. Auch hier wird eine fahrzeugseitige Bezahlvorrichtung beschrieben, die mit einer Erhebungsvorrichtung des Leistungsanbieters zusammenwirkt. Als Zahlungsmittel sind vorbezahlte Werteinheiten, Kreditkarten und auch Lastschrifteinzug erwähnt.

Der eigentliche Bezahlungsvorgang umfaßt eine ZweiSchritt-Kommunikation ohne Quittungsübergabe und mit kryptographischem Schutz nur für die Datenübertragung. Obwohl dies im einzelnen nicht beschrieben ist, scheinen die Verrechnungsdaten, die zwischen Erhebungsvorrichtung und Bezahlvorrichtung ausgetauscht werden, speziell für die Abwicklung an der Schnittstelle zwischen beiden Vorrichtungen strukturiert zu sein. Eine Datenstruktur, die die glatte und problemlose Weiterverarbeitung der Daten im Gesamtkreislauf einschließlich Emittent, Verrechnungsstelle u.dgl. ermöglichen würde, ist in dieser Vorveröffentlichung weder gefordert noch beschrieben. Auch bildet diese Art der Zahlungstransaktion in keinster Weise die üblichen Gepflogenheiten eines Zahlvorgangs in mehreren Schritten durch Bekanntgabe des Dienstleistungsangebots (a), Erklärung des Kauf- und Zahlwillens (b), Festlegung des Preises (c), Durchführung der Zahlung (d) und Bereitstellung des Zahlungsbelegs (e) ab.

Aus EP-A2 0 577 328 (AT&T) ist wiederum ein automatisches Zahlungssystem, insbesondere eine elektronische Mauterhebung, der oben schon erwähnten Art bekannt. Dieser Stand der Technik beschreibt eine Fünf-Schritt-Kommunikation zwischen Bezahlvorrichtung und Erhebungsvorrichtung, bei der mit einer periodisch geänderten Zufallszahl ein spezielles Verschlüsselungssystem unter Verwendung eines individuellen Chipkartenschlüssels eingesetzt wird.

Irgendeine Aussage über die Datenstruktur der Verrechnungsdaten, hinsichtlich deren späterer Weiterverarbeitung beim Acquirer bzw. Emittenten u.dgl. wird nicht vorgenommen.

Aus EP-A2 0 616 302 ist ein elektronisches Erhebungssystem für Verkehrsgebühren bekannt, wobei eine Bezahlvorrichtung, insbesondere mit vorbezahlten Chipkarten eingesetzt wird. Zwar werden in dieser Vorveröffentlichung auch Begriffe verwendet, wie sie in einem offenen System, bei dem beliebige elektronische Zahlungsmittel einsetzbar sind, eine Rolle spielen würden, jedoch wird nicht dargelegt, wie dies zu realisieren wäre. Auf die hierfür wesentliche übereinstimmende Datenstruktur in allen Verarbeitungsschritten des Zahlungskreislaufs wird nicht eingegangen.

Ähnlich allgemeine Offenbarungen zu einerseits Verfahren zur automatischen Abwicklung von bargeldlosen Zahlungsvorgängen, andererseits zu speziellen Technologien für solche Zwecke, finden sich in US 5,450,087; US 4,303,904; EP-A2 0 152 198; GB-A 2 278 704; WO 91/18354;
WO 93/09621 und EP-A1 0 609 453

D5 offenbart ein Verfahren und eine Anordnung zur Ermittlung von Nutzungsgebühren für Verkehrswege und/oder Verkehrsflächen, wobei mit Hilfe einer in einem Fahrzeug befindlichen Einrichtung aufgrund von Positionsdaten und Tarifdaten Nutzungsgebühren berechnet und über ein Datenübertragungssystem an eine Zentralstelle übertragen werden. Die Nutzungsgebühren werden hierbei in der Fahrzeugeinrichtung aufsummiert, bis sie eine vorgegebene Höhe erreichen. Daraufhin stellt die Fahrzeugeinrichtung über ein Mobilfunknetz eine Verbindung zur Zentralstelle her. Entsprechende Gebührendaten und Daten, welche die zu belastende debitorische Geldbörse identifizieren, werden an die Zentralstelle übertragen. Weiterhin wird der Speicher in der Fahrzeugeinrichtung um den berechneten Betrag zurückgesetzt. In anderen Worten wird die entsprechende Gebühr zunächst lokal in einer Chip-Karte von einem Zwischenkonto abgebucht (intern) und dann zusammen mit anderen Daten an eine Zentralstelle übertragen und von einem Nutzerkonto abgebucht.

Allen diesen Veröffentlichungen ist gemeinsam, daß sie wesentliche Voraussetzungen für ein möglichst unaufwendig und dabei sicher betreibbares offenes und interoperables System nicht ansprechen oder sogar durch ihre konkreten Maßnahmen ausschließen. Keine dieser Entgegenhaltungen beschreibt ein Verfahren der erfindungsgemäßen Art, bei dem trotz gewährleisteter Sicherheits- und Anonymitätsstandards die Abwicklung des Bezahlvorganges zwischen Nutzer und Leistungs- bzw. Dienstanbieters so ausgelegt ist, daß die dabei verwendeten Datenstrukturen sich ohne aufwendige Transformationsvorgänge oder andere Verarbeitungsschritte auch für die weiteren Abwicklungsvorgänge, zwischen Anbieter und Acquirer, zwischen Acquirer und Emittent einerseits, sowie zwischen Nutzer und Verkaufsagentur bzw. dieser und dem Emittenten einsetzen lassen, wie im folgenden noch näher erklärt werden wird.

Eine wesentliche Aufgabe der Erfindung ist es, diese auch in der Standardisierung noch verbliebenen Lücken auszufüllen, insbesondere hinsichtlich Erzeugung, Funktion und vereinheitlichter Verwendung von zahlungsrelevanten Daten, einerseits im Zusammenwirken der erfindungsgemäß verwendeten Hardware, andererseits im Kontext des erfindungsgemäßen Systems.

Es ist eine weitere wesentliche Aufgabe der Erfindung, Verfahren und Vorrichtungen der eingangs genannten Art anzugeben, mit denen eine zuverlässige und sichere, automatisierte bargeldlose Zahlung unter Wahrung des Datenschutzes in kürzester Zeit möglich ist.

Aufgabe der Erfindung ist es auch, eine bargeldlose automatische Gebührenerhebung ohne wesentliche Beeinträchtigung des Verkehrsflusses und der Fahrzeuggeschwindigkeit zu ermöglichen.

Verfahren und Vorrichtungen müssen zur Lösung dieser Aufgaben so geartet sein und so interagieren, daß sowohl spezielle als auch universelle, voraus- und nachbezahlte Zahlungsmittel zur Bezahlung in einem System zur automatischen Zahlung bzw. Gebührenerhebung verwendet werden können, wobei für das Clearing weitestgehend die heute schon praktizierten Zahlungsverkehrswege zwischen Dienstanbietern und der Bankenwelt einzuhalten sind.

Diese Aufgaben werden erfindungsgemäß durch die Merkmale der unabhängigen Ansprüche gelöst.

Vorteilhafte Ausführungsformen ergeben sich aus den jeweils abhängigen Unteransprüchen.

Das Systemmodell, an dem sich die Entwicklung der erfindungsgemäßen Verfahren, speziell des nachfolgend beschriebenen AGE-Zahlungssystems orientiert, liegt dem Standardentwurf des CEN TC 278 "Interface Specification for Clearing between Operators" zugrunde. Dieses in Diagramm 1 dargestellte Modell unterscheidet die folgenden fünf Komponenten:
- Benutzer, der unter Einsatz eines Zahlungsmittels eine Dienstleistung nutzt,
- Dienstanbieter, der eine Dienstleistung Benutzern anbietet,
- Verrechnungsstelle, die Transaktionsdaten von unterschiedlichen Dienstanbietern entgegennimmt und an die entsprechenden Emittenten von Zahlungsmitteln weiterleitet,
- Emittent, der ein Zahlungssystem betreibt, und
- Collection Agent, der für einen Emittenten den Verkauf oder das Laden von Zahlungsmitteln durchführt (Verkaufsagentur, Ladeinstanz).

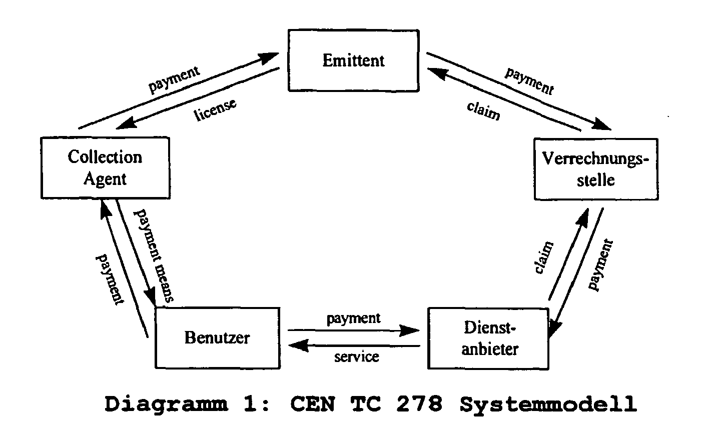

Die Verrechnungsstelle wird im folgenden auch als Acquirer bezeichnet.

Im dargestellten Systemmodell entsprechen die Pfeile des inneren Kreises dem Fluß der zahlungsrelevanten Daten, die Pfeile im äußeren Kreis den monetären und sachlichen (Kauf- oder Dienstleistungs-)Beziehungen.

Die für die Konzeption des AGE-Zahlungssystems entscheidende funktionale Trennung zwischen den Applikationen Zahlungssystem und automatische Gebührenerhebung ist bereits in diesem Modell durch die grundsätzliche Unterscheidung zwischen Emittent (des Zahlungsmittels) und Dienstanbieter vorbereitet.

In einem weiter differenzierten Modell, das die eigentliche Grundlage für die Entwicklung des Konzepts bildet, ist zu berücksichtigen, daß
- die Verwendung eines Zahlungsmittels in einem Umfeld wie dem AGE-Umfeld nur "kontaktlos" (berührungsfrei) möglich ist, da der zahlungsrelevante Datenaustausch über eine Funkübertragung im Mikrowellen- oder Infrarotbereich (DSRC - Dedicated Short Range Communication) oder über Zellularfunk (z.B. GSM - Global System for Mobile Telecommunication) erfolgt,
- die aus Datenschutzgründen geforderte Trennung von Bewegungs- von Zahlungsdaten und die aus Kostengründen gewünschte Beschränkung von Daten, die in den Zahlungsverkehr eingeleitet werden, i.a. nur durch eine entsprechende Aggregation von Transaktionsdaten in einer Konzentratorstelle des Dienstanbieters möglich sind, und
- die Interessen aller Systembeteiligten auch durch organisatorische und rechtliche Maßnahmen geschützt werden müssen.

Die Erfindung ermöglicht dies bei dem beanspruchten Verfahren, gemäß dem beigefügten Anspruch1.

Bei den in Anspruch 1 definierten Verfahren wird das obige Modell ergänzt durch die Komponenten
- Zahlungsmittel (Payment Means), anhand dessen der Bezahlvorgang vom Benutzer durchgeführt wird,
- Bezahlvorrichtung in Form eines On-Board Equipment (OBE), die einerseits die Zahlungsoption eines Benutzers (Börsenzahlung oder Kontozahlung je nach eingesetztem Zahlungsmittel) entgegennimmt, andererseits die tatsächliche Zahlung von AGE-Gebühren im Auftrag des Benutzers und auf explizite oder implizite Anforderung des Dienstanbieters über den Transponder (OBU, On-Board-Unit) durchführt,
- Zahlstelle in Form eines physischen Road-Side Equipment (RSE), das die AGE-Zahlstelle eines Dienstanbieters (Service Provider) darstellt und entweder Gebühren von passierenden Fahrzeugen erhebt oder Eintrittstickets ausstellt, oder in Form eines virtuellen Road-Side-Equipment, das in einer nutzerseitigen Erkennungsvorrichtung die autonome Zahlungsauslösung und -vornahme durch den Nutzer ermöglicht;
- Konzentrator eines Dienstanbieters, der die Bewegungs- von den Zahlungsdaten aus AGE-Transaktionen trennt und kumulierte Forderungen an die Acquirer weiterleitet,
- AGE-Kontrollstelle (Enforcement), die eine Bezahlvorrichtung (OBE) zum Nachweis der zuletzt getätigten Zahlung veranlassen kann, und
- Zulassungsinstanz (Certification Authority), die sicherstellt, daß nur solche Systemkomponenten eingesetzt werden können, die alle notwendigen Auflagen wie z.B. des Datenschutzes, der IT-Sicherheit, der Revisionsfähigkeit und der Justitiabilität von Vereinbarungen (Vertragsbeziehungen) erfüllen.

Das Systemmodell ist im Diagramm 2 näher veranschaulicht.

In einem interoperablen, übernationalen und (bezüglich der Zahlungsmittel) offenen AGE-System kann die Sicherheit aller Systemteilnehmer nur durch eine Kombination technischer, organisatorischer und rechtlicher Maßnahmen gewährleistet werden, deren Einhaltung durch eine Zulassungsinstanz kontrolliert wird, was zu einer Institutionalisierung des Gesamtsystems führt.

Ohne das Zusammenwirken von Technik, Organisation, Recht und Institutionalierung ist eine offene Systemgestaltung, die allen Systemteilnehmern im Rahmen der allgemein verbindlichen Rahmenbedingungen weitestgehende Entscheidungsautonomie läßt, nicht realisiert.

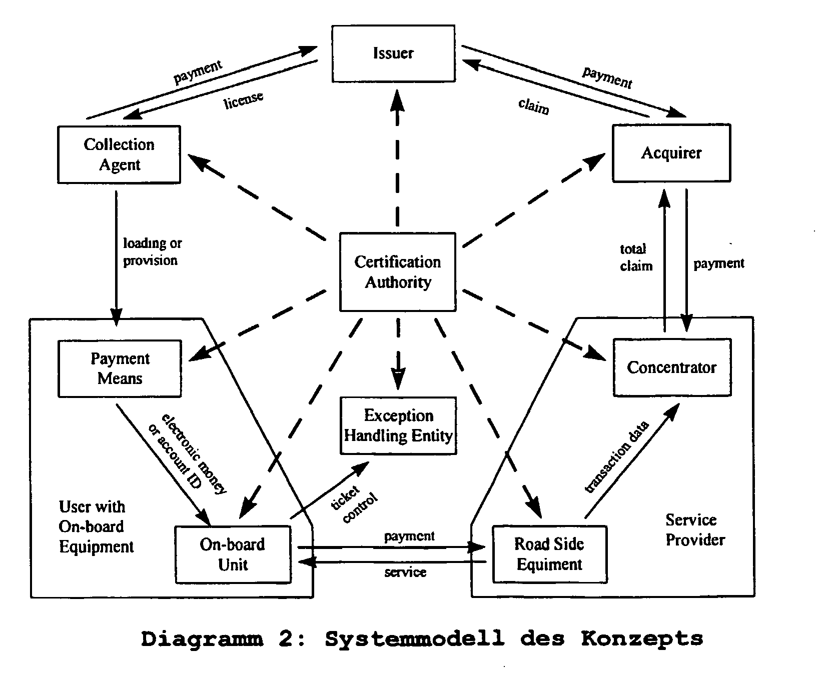

Bei dem automatischen Gebührenerhebungsverfahren bzw. - system (AGE) ist grundsätzlich gefordert, daß keine unmittelbaren personen- und fahrzeugbezogene Daten verarbeitet und gespeichert werden dürfen. Der gesamte, in sich geschlossene Erhebungsvorgang ist so gestaltet, daß keine verfolgbaren Datenspuren entstehen. Im Prinzip teilt sich das AGE-Verfahren in drei getrennte Bereiche auf, bei denen jeweils diese Forderung zu berücksichtigen ist:
1) die Gebührenermittlung mit den Schritten Bekanntgabe des Dienstleistungsangebots (a), Erklärung des Kauf- und Zahlwillens (b), Festlegung des Preises (c)
2) der Bezahlvorgang
3) die Quittungsübergabe

Die Gebührenermittlung kann dabei im Dialog zwischen der Bezahlvorrichtung, im Beispielsfall dem transportablen Transponder bzw. OBU (On-Board-Unit) mit der Zahlungskarte, und der Erhebungsvorrichtung, im Beispielsfall dem ortsfesten Abfragesender bzw. RSE (Road-Side-Equipment) erfolgen. Gemäß Anspruch 2 erfolgt die Gebührenermittlung in der Bezahlvorrichtung des Nutzers ohne externe Einwirkung (d.h. autonom) aufgrund der Auswertung einer gespeicherten Tabelle oder des Ergebnisses eines entsprechenden Algorithmus. Übermittlung von (Einzel-)Personen- und Fahrzeugdaten sowie Speicherung von Daten sind nicht notwendig.

Vorteilhafterweise kann beim Bezahlvorgang der Benutzer darüber entscheiden, welches (zugelassene) Zahlungsmittel er einsetzt.

Im folgenden werden die einzelnen Systemkomponenten
- Zahlungsmittel,
- On-Board Equipment,
- Road-Side Equipment,
- Konzentrator,
- Acquirer,
- Emittent,
- Collection Agent
- AGE-Kontrollstelle (Enforcement) und
- Zulassungsinstanz (Institutionalisierung)
bezüglich ihrer Funktion und Realisierungsoptionen näher beschrieben.

### Zahlungsmittel

Der Begriff Zahlungsmittel bezeichnet die Art und Weise, wie ein Benutzer, d.h. Dienstnehmer im AGE-System (bargeldlos) die Dienstleistung eines Dienstanbieters bezahlt, und umfaßt alle für den Zahlvorgang und seine Absicherung notwendigen Funktionen und Daten. Prinzipiell sollen für die automatische Gebührenerhebung beliebige Zahlungsmittel bzw. -optionen zugelassen werden, wobei der Benutzer grundsätzliche Wahlfreiheit haben muß (d.h. gleiche Gebührenhöhe für alle zugelassenen Zahlungsmittel):
- Vorausbezahlung (Prepayment) durch Einsatz einer elektronischen Geldbörse oder Nachbezahlung (Postpayment) durch Angabe eines Kredit- oder Debitkontos,
- Einsatz eines universellen (d.h. dienstunabhängigen) oder eines transportspezifischen (z.B. AGE-) Zahlungsmittels,
- Einsatz eines Zahlungsmittels, das entweder regional (z.B. regional gültiges Zahlungsmittel eines Autobahnbetreibers) oder überregional (z.B. nationale Geldbörse) oder international (d.h. übernational von der Zulassungsinstanz als von allen AGE-Dienstanbietern zu akzeptierendes Zahlungsmittel vorgeschrieben) akzeptiert wird.

Die grundlegende Trennung zwischen den Applikationen Zahlungsmittel und automatische Gebührenerhebung und die Verwendbarkeit eines universellen Zahlungsmittels bei der automatischen Gebührenerhebung machen es erforderlich, daß als Träger für das Zahlungsmittel ein technisch ausgereiftes, preiswertes, allgemein akzeptiertes und vor allem sicheres Medium verwendet wird. Daher wird im Konzept davon ausgegangen, daß das Zahlungsmittel im allgemeinen eine Applikation in einer multifunktionalen Standard-Chipkarte darstellt. Solche universal einsetzbaren Chipkarten werden als Träger elektronischer Geldbörsen in wenigen Jahren zum Bargeldersatz weit verbreitet sein und müssen daher prinzipiell auch für die AGE-Gebührenentrichtung zugelassen werden.

Durch diesen Ansatz ist in der technischen Ausprägung der Bezahlvorrichtung, i.e. des On-Board Equipments (OBE) wie z.B. im Diagramm 2, die Möglichkeit eröffnet, daß die Chipkarte nicht nur Träger des Zahlungsmittels sein darf, sondern auch die Applikation automatische Gebührenerhebung beinhalten kann (vgl. den folgenden Abschnitt).

Andererseits soll durch diesen Ansatz nicht ausgeschlossen werden, daß in der einfachsten Realisierungsform ein transportspezifisches Zahlungsmittel integraler (funktionaler) Bestandteil des On-Board Equipments ist. Beispielsweise muß es möglich sein, bei Grenzübertritt ein OBE leihweise zu erwerben, in dessen Speicher (z.B. EEPROM-Chip) ein bestimmter vorausbezahlter Verfügungsbetrag geladen ist.

Grundsätzlich muß beim Einsatz eines Zahlungsmittels in einem AGE-System (wie bei der Bezahlung für jeden anderen Dienst auch) sichergestellt sein, daß die rechtlichen Vereinbarungen, die zwischen den Zahlungsmittelemittenten, den Acquirern und den Dienstanbietern zu treffen sind, nicht durch die Technik unterlaufen werden. Insbesondere müssen die sicherheitsrelevanten Anforderungen, die der Zahlungsgarantie gegenüber dem Dienstanbieter zugrunde liegen, erfüllt werden, was durch die Institutionalisierung sicherzustellen ist. Daher müssen die verschiedenen Interessen von Emittenten und Dienstanbietern prinzipiell durch getrennte Sicherheitsdomänen gewahrt werden können.

Folglich wird im Konzept davon ausgegangen, daß sowohl die Applikation Zahlungsmittel als auch die Applikation Automatische Gebührenerhebung grundsätzlich ihre eigenen, voneinander separierten Sicherheitsverfahren besitzen können, die in der Standardisierung (z.B. für die elektronische Geldbörse) als Security Application Module (SAM) bezeichnet werden.

Ein SAM ist immer dann einzusetzen, wenn zum Schutz von Transaktionen besonders sensible Sicherheitsfunktionen vorhanden sein müssen, und besteht aus einer Software- und einer Hardwarekomponente. Die Softwarekomponente besteht aus einer Ablaufkontrolllogik für die zu schützende Anwendung und enthält Verschlüsselungsalgorithmen, geheime kryptographische Schlüssel und sonstige sicherheitsrelevante Daten und Parameter, während die Hardwarekomponente dem Schutz der Sicherheitsfunktionen selbst dient.

Erfindungsgemäß können die beiden SAMs identisch sein. Dies ermöglicht es, daß im Falle einer einfachen OBE-Realisierungsform oder im Falle, daß ein AGE-Dienstanbieter sein eigenes Zahlungsmittel emittiert, beide Applikationen eine gemeinsame Sicherheitsdomäne bilden und daher die gleichen Sicherheitsmechanismen und Schlüssel nutzen.

Erfindungsgemäß wird vorzugsweise vorgesehen, daß eine Chipkarte, die Träger des Zahlungsmittels, nicht jedoch der AGE-Applikation ist, ein eigenes SAM besitzt, über das die Rechtmäßigkeit der Verwendung des Zahlungsmittels in einem AGE-System geprüft bzw. sichergestellt werden kann.

Es wird weiterhin bevorzugt, daß aus Gründen der Akzeptanz und Interoperabilität nur Chipkarten eingesetzt werden, deren physikalischen und elektrischen Eigenschaften im ISO-Standard 7816, Teil 1-3 bzw. in der CEN-Pränorm prENV 1855 festgelegt sind. Das chipinterne logische Datenmodell ist in 7816-5 durch eine Baumstruktur vorgegeben, die auf der höchsten Ebene ein Hauptverzeichnis (Master File, MF) besitzt, unter dem einzelne Dateien (Elementary File, EF) oder Unterverzeichnisse (Dedicated File, DF) angesiedelt sind. Dieser Art der Datenstrukturierung wird vorzugsweise auch für die in der OBU angesiedelten Applikationen und Daten vorgesehen, vor allem im Falle der OBE-Realisierungsoption I "Kompakt-Lösung", die weiter unten beschrieben ist.

Das MF wird vom Kartenhersteller angelegt und vom Kartenemittenten personalisiert, d.h. mit den direkt untergeordneten EFs beschrieben oder - falls schon vorhanden - geändert. Das Hauptverzeichnis der Karte enthält allgemeine Informationen zur Karte und ihren Eigenschaften (Daten zur Chip-, Modul- und Kartenherstellung, technische Kenngrößen, verfügbare Applikationen und Selektionsmöglichkeiten, Aktivierungs- und Verfalldatum, Länderkennung etc.), zum Kartenbesitzer (Name, Sprachpräferenz, PIN-Schutz usw.) und zu den applikationsunabhängigen Sicherheitsmechanismen und -daten.

Jedes Unterverzeichnis auf der nächsten Ebene entspricht einer Applikation und wird nach Wahl des Kartenbesitzers und unter Verantwortung des Kartenemittenten angelegt bzw. unter Verantwortung des Applikationsemittenten personalisiert und ggf. aktualisiert. Ein Unterverzeichnis kann aus weiteren Unterverzeichnissen oder einzelnen Dateien bestehen.

Mit dieser logischen Datenstrukturierung ist es möglich, die funktionale Trennung zwischen den verschiedenen Beteiligten bei der Modulherstellung, der Kartenvorbereitung und der Karten- und Applikationsherausgabe sowie die rechtliche Unabhängigkeit zwischen verschiedenen Applikationsemittenten auch technisch so zu unterstützen, daß z.B. ungewollte Wechselwirkungen zwischen verschiedenen Applikationen und deren Sicherheitsmechanismen zuverlässig unterbunden werden können. In diesem Zusammenhang ist von besonderer Bedeutung der ISO-Standard 10202, der die Sicherheitsarchitektur von Kredit- und Debitkarten festlegt.

### On-Board Equipment (OBE)

Ein wesentliches Element der Erfindung ist die Vornahme von Zahlungsmittel-Benutzungshandlungen durch die Bezahlvorrichtung statt durch den Nutzer, so daß die Handlungen automatisiert werden. Für AGE-Systeme und vergleichbare Systeme, die mit erfindungsgemäßen Verfahren arbeiten, wird die Bezahlvorrichtung vorzugsweise in Form des schon genannten On-Board-Equipment (OBE) realisiert. Die Bezahlvorrichtung übernimmt in jeweils unterschiedlichem Maß die Abwicklung des Bezahlvorgangs und entsprechend unterschiedlich wird die OBE ausgestattet.

Die Bezahlvorrichtung kann z.B. im wesentlichen nur die dem Nutzer vorgehaltenen Verfahrensschritte übernehmen, während die für den Anbieter typischen Verfahrensschritte von der Erhebungsvorrichtung durchgeführt werden.

Gemäß Anspruch 1 übernimmt die Bezahlvorrichtung zusätzlich auch die wesentlichen Funktionen der Erhebungsvorrichtung, insbesondere die Bereitstellung der Daten, die die zu zahlende Gebühr etc. repräsentieren, sowie die Durchführung und Registrierung der Zahlung und die Erstellung und Speicherung der Quittung.

Die in beiden Fällen seitens des Anbieters wünschenswerte Kontrolle der tatsächlichen Zahlung ist im Prinzip gleichartig, kann aber technisch unterschiedlich ausgeprägt sein. So ist beispielsweise die Überprüfung der in der Bezahlvorrichtung gespeicherten Daten zu den Zahlungsbelegen nur stichprobenartig oder fallweise oder im Fall des Anspruch 1 auch periodisch, z.B. jeweils nach einer konfigurierbaren Anzahl von Bezahlvorgängen automatisch durch Aufbau einer geeigneten Kommunikationsschnittstelle mit einer (virtuellen) AGE-Kontrollstelle möglich. Auf jeden Fall wird man es bei der Realisierung der Erfindung zur Vermeidung eines unverhältnismäßigen Aufwands meist vorziehen, die Kontrollfunktion nicht mit der Erhebungsvorrichtung fest zu verbinden (sog. abgesetzte Kontrolle im Gegensatz zur integrierten Kontrolle). Solche Kontrollen werden auch meist dem erfindungsgemäßen Ablauf der Zahlungsabwicklung örtlich und zeitlich nachgeschaltet durchgeführt werden.

Im folgenden wird die Erfindung zunächst an einem Ausführungsbeispiel einer OBE näher beschrieben, bei der Bezahlvorrichtung und Erhebungsvorrichtung eine Kommunikationsschnittstelle bilden, wobei sich für den Fachmann jedoch ohne weiteres ergibt, daß erhebliche Teile dieser Beschreibung auch für die Realisierung gemäß Anspruch 1 zutreffen.

Da für die automatische Gebührenerhebung zwischen dem Trägermedium des Zahlungsmittels und der Gebührenerhebungsanlage des Dienstanbieters ein kontaktbehafteter Datenaustausch für den Zahlvorgang ausscheidet, erfolgt die Kommunikation zwischen den beiden Systemkomponenten über eine Funkübertragung, die auf Seiten des Benutzers durch das On-Board Equipment (OBE) im Fahrzeug durchgeführt wird (Luftschnittstelle).

Neben den harten Zeitrestriktionen im Falle einer Kurzdistanz-Kommunikation über die Luftschnittstelle bei Höchstgeschwindigkeit sind die datenschutzrechtliche Anforderung der Trennung von Bewegungs- und Zahlungsdaten und die Wirtschaftlichkeitsanforderung der Beschränkung der zahlungsrelevanten Datenmengen die wichtigsten Gründe, daß beim Einsatz eines universellen Börsen-Zahlungsmittels im allgemeinen, d.h. im Falle getrennter Sicherheitsdomänen, zwischen dem zertifizierten Verfügungsbetrag, der im On-Board Equipment verwaltet wird, und den davon zu diskontierenden Einzelgebühren zu unterscheiden ist.

Insbesondere bedeutet dies, daß für den Zahlvorgang meist keine direkte Kommunikation zwischen Zahlungsmittel und Gebührenerhebungsstelle möglich ist, sondern die Zahlungsbestätigung einer AGE-Gebühr zusammen mit dem zertifizierten Verfügungsbetrag oder der zertifizierten Kontoinformation an die Gebührenerhebungsstelle übergeben wird. Vor der Weiterleitung der Einzelforderung (d.h. jeder einzelnen automatisch eingezogenen Gebühr) durch den Dienstanbieter an den Acquirer erfolgt eine Aggregation der zahlungsrelevanten Informationen bezüglich der vom Zahlungsmittel zertifizierten Daten.

In Fällen, in denen eine direkte Kommunikation zwischen dem Zahlungsmittel und der Gebührenerhebungsstelle möglich ist (z.B. durch eine Ende-zu-Ende-Kommunikation zwischen der Chipkarte und dem Road-Side-Equipment) oder ein Dienstanbieter sein eigenes Zahlungsmittel emittiert, kann evtl. auf eine zusätzliche Zertifizierung des Abbuchungsbetrages während einer AGE-Zahlung verzichtet werden.

Konzeptionell besteht das On-Board Equipment aus den folgenden logisch zu separierenden Funktionseinheiten:
- Kommunikationssystem: dieser technische OBE-Teil wickelt den übertragungsbezogenen Teil des Kommunikationsprotokolls auf der Luftschnittstelle (z.B. DSRC oder GSM) und eventuell - abhängig von der technischen Realisierungsform, s.u. - das Chipkartenprotokoll (z.B. T=1 gemäß ISO 7816-3) ab und ist für die Ansteuerung der Bedienelemente, Display, Kontrolleuchten usw. zuständig;
- AGE-Anwendung: diese logische Funktionseinheit wird aufgrund von Aktionen aktiv, die vom Benutzer, von den Gebührenerhebungssystemen eines Dienstanbieters, der Ortungskomponente für virtuelle Zahlstellen oder den AGE-Kontrollstellen angestoßen werden, wickelt die Verarbeitung und Speicherung von AGE-bezogenen Daten und den anwendungsbezogenen Teil der Kommunikation mit anderen Systemkomponenten ab und verwaltet einen oder mehrere Ticketspeicher; integraler Bestandteil dieser Funktionseinheit kann das AGE-SAM sein, das mit kryptographischen Mechanismen insbesondere die Authentizität und Ordnungsmäßigkeit einer Gebührenerhebung, des Zahlvorganges und des Zahlungsnachweises sicherstellt; und
- Zahlungsmittel: von der AGE-Anwendung separiert ist die logische Funktionseinheit des Zahlungsmittels, die auf Anstoß der AGE-Anwendung oder einer Ladeinstanz aktiv wird und mit diesen in Interaktion tritt; das Zahlungsmittel besitzt im allgemeinen ein eigenes SAM, das die zahlungsrelevanten Transaktionen mit der externen Welt (z.B. Kartenakzeptanzstelle oder Ladeinstanz, hier: AGE-Anwendung) absichert.

Die technischen OBE-Komponenten wie Tasten, Display, Kontakte etc. werden in diesem Zusammenhang nicht erläutert, da sie für die funktionale Konzeption irrelevant sind. Diese Komponenten sind im Stand der Technik grundsätzlich bekannt.

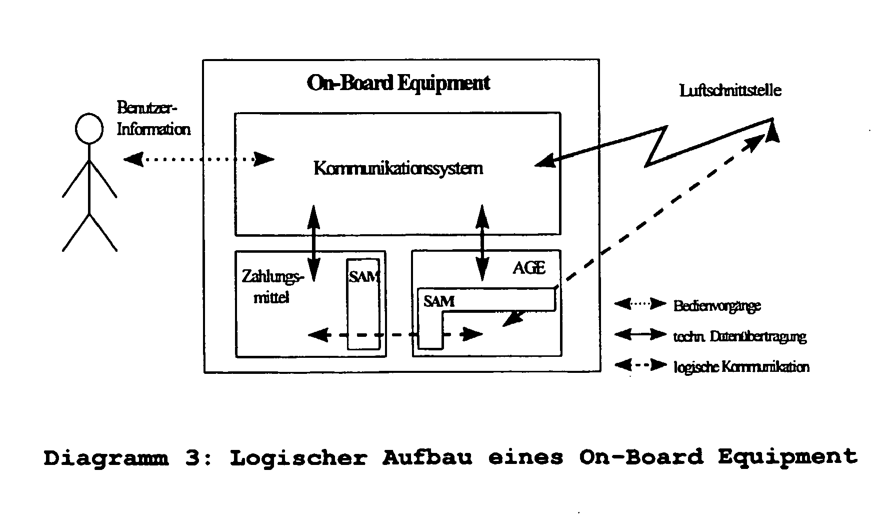

Der logische Aufbau des OBE ist im Diagramm 3 veranschaulicht.

Erfindungsgemäß sind durch diese Konzeption mehrere Realisierungsoptionen möglich.
- Option I: "Kompakt-Lösung"
   In der einfachsten Realisierungsform besteht das OBE aus einer einzigen technischen Einheit, die alle logischen Funktionseinheiten integriert (OBE und OBU koinzidieren in diesem Fall und bilden die Bezahlvorrichtung). Diese Form kann z.B. dazu verwendet werden, um beim Grenzübertritt leihweise ein OBE zu erwerben, das in einem internen Speicher mit einem bestimmten vorausbezahlten Verfügungsbetrag geladen ist, der sukzessive aufgebraucht und an speziellen Ladegeräten wieder aufgeladen werden kann. Dies entspricht den Eigenschaften eines vorausbezahlten, transportspezifischen und nationalen Zahlungsmittels.
   Diese Variante ist auch adäquat, wenn z.B. Großkunden mit Dienstanbietern Sonderkonditionen vereinbaren und die Zahlung über ein Zentralkonto erfolgt. Dies entspricht den Eigenschaften eines nachbezahlten, transportspezifischen und regionalen oder überregionalen Zahlungsmittels.
   In dieser Realisierungsform kann mit besonderem Vorteil vorgesehen werden, daß das logische Daten- und Applikationsmodel der OBU wie im Falle einer Chipkarte aufgebaut ist, da alle logischen Funktionseinheiten aus Kostengründen sinnvollerweise auf einem einzigen Chip vereint sind. Weiterhin kann ein Chip aufgrund seiner technischen und logischen Eigenschaften unter bestimmten Voraussetzungen als Hardware-Sicherheitsmodul eingesetzt werden, so daß prinzipiell die beiden Applikations-SAM funktional zusammengefaßt werden können, da letztlich nur die Kommunikation über die Luftschnittstelle abzusichern ist.
- Option II: "Transponder-Lösung"
   In dieser Realisierungsform ist das Kommunikationssystem technisch getrennt vom Zahlungsmittel und der AGE-Applikation, die gemeinsam auf einer Standard-Chipkarte vereint sind. Im Falle eines transportspezifischen Zahlungsmittels ist es auch bei dieser Variante möglich, das AGE-SAM und das Zahlungsmittel-SAM funktional zu vereinen.
   Andererseits ist es denkbar, daß die Emittenten der AGE-Anwendung und des Zahlungsmittels juristisch unabhängige Institutionen sind oder das Zahlungsmittel universellen Charakter hat, so daß die rechtliche Beziehung zwischen AGE-Dienstanbieter und Zahlungsmittelemittent auch sicherheitstechnisch (d.h. kryptographisch) geschützt werden muß. In diesem Fall können beide Anwendungen zur Trennung der Sicherheitsdomänen prinzipiell ihr eigenes SAM besitzen, wobei die Interaktion der SAMs über ein entsprechendes Keymanagement kontrolliert werden muß.
- Option III: "Standard-Lösung"
   Eine weitere Alternative besteht darin, daß das Kommunikationssystem zusammen mit der AGE-Anwendung in der On-Board Unit residieren, während das Zahlungsmittel davon völlig getrennt in einer Standard-Chipkarte integriert ist. Damit wird im Konzept auch die Zahlung mit universellen elektronischen Geldbörsen unterstützt, die zukünftig als Bargeldersatz weite Verbreitung finden werden. Ebenfalls kann jedes andere universelle zugelassene Zahlungsmittel auf Basis von Standard-Chipkarten im Konzept zur AGE-Gebührenzahlung verwendet werden.
- Option IV: "2-Chipkarten-Lösung"
   Die aufwendigste Realisierungsform, die aber auch die größte Flexibilität bietet, ermöglicht getrennte Chipkarten für die Applikationen Zahlungsmittel und AGE-Anwendung, was ohne die rechtliche Unabhängigkeit der entsprechenden Emittenten wenig sinnvoll ist. Daher ist hierbei grundsätzlich von der Existenz eines Zahlungsmittel-SAM und eines davon getrennten AGE-Anwendungs-SAM auszugehen, da unabhängig von den Zahlungsmitteleigenschaften immer die rechtliche Beziehung zwischen den Emittenten auch technisch zu verankern und abzusichern ist. In diesem Fall reduziert sich die OBU funktional auf das Kommunikationssystem, das z.B. fest in ein Fahrzeug eingebaut und mit zwei Chipkartenlesern ausgestattet ist.
   Grundsätzlich ist vorgesehen, daß die jeweils letzten AGE-Transaktionen (die Gesamtzahl ist unabhängig von der Realisierungsform des OBE) ständig im Transaktionsspeicher gespeichert bleiben, damit dem Benutzer die Möglichkeit gegeben ist, die letzten Zahlungen zu prüfen. Neben der Kontrolle der Tickets per Display wird für jede Option ein Verfahren vorgesehen, zusätzlich die Zahlungsbelege auszudrucken.
   Bei Option I kann dies z.B. dadurch ermöglicht werden, daß die OBU aus dem Fahrzeug entnommen und an einem Lesegerät (der Ladeeinsatz oder Verkaufsagentur) der Transaktionsspeicher ausgedruckt wird. Im Fall der Optionen II, III und IV kann statt dessen der Transaktionsspeicher in einer Chipkarte liegen und entsprechend an einem externen Chipkartenlesegerät ausgedruckt werden.
   Darüber hinaus verfügt das OBE über weitere optische und akustische Anzeigen, mit denen bestimmte Betriebs- und Transaktionszustände (Gebührenhöhe, Guthaben, Zahlung erfolgt oder nicht erfolgt, Spannungsabfall, Enforcement etc.) signalisiert werden können.

### Road-Side Equipment

Als Road-Side Equipment (RSE) wird in diesem Konzept generell dasjenige Endgerät eines AGE-Dienstanbieters bezeichnet, das zur automatischen Gebührenerhebung an einer Zahlstelle oder zur Ausstellung von Eintrittstickets an einer Einfahrtsstelle in eine Kommunikationsbeziehung mit einem On-Board Equipment eines Dienstnehmers tritt.

Die typische Realisierungsform zur Erhebung von Straßenbenutzungsgebühren basiert auf Erhebungsstationen, die an der Straße installiert sind und über Mikrowelle oder Infrarot in einen Datenaustausch mit passierenden Fahrzeugen treten. Durch dieses Konzept werden jedoch auch solche AGE-Systeme unterstützt, die nicht der Erhebung von Straßenbenutzungsgebühren, sondern z.B. von Park(haus)gebühren dienen.

Daneben gibt es GNSS-basierte AGE-Systeme (Global Navigation Satellite System, z.B. GPS), die entweder (im Sinne des Ausführungsbeispiels gemäß Anspruch 1) autonom funktionieren (d.h. Gebührenentrichtung nur durch eine interne Datenverarbeitung der Bezahlvorrichtung, insbesondere ohne externe Kommunikation) oder in eine Funkkommunikation z.B. über GSM mit einer externen Erhebungsstelle treten. In diesen Fällen erfolgt der Anstoß für die Gebührenentrichtung durch Erreichen einer bestimmten geographischen Position, die von einem fahrzeuginternen Ortungsmodul festgestellt wird (z.B. durch Empfang von GPS-Signalen und Abgleich mit einer digitalen Landkarte), so daß häufig auch von virtueller Zahlstelle oder virtuellem Road-Side-Equipment gesprochen wird.

Die wichtigsten Funktionseinheiten des RSE sind:
- AGE-Steuerungsmodul, das sowohl periodisch als auch ereignisorientiert die anwendungsbezogene Kommunikation über die Luftschnittstelle abwickelt, die automatische Gebührenermittlung und -erhebung oder Ticketausstellung für erfaßte Fahrzeuge durchführt und die zahlungsrelevanten Daten aufbereitet; integraler Bestandteil dieser Funktionseinheit kann ein SAM sein, das mit kryptographischen Mechanismen die Integrität und Authentizität von Daten, Ereignissen und Kommunikationspartnern zuverlässig kontrolliert.
- Kommunikationssystem, das einerseits die Sende- und Empfangseinrichtung für den übertragungstechnischen Teil des Kommunikationsprotokolls auf der Luftschnittstelle beinhaltet und andererseits die Weiterleitung oder Übertragung von Transaktionsdateien zur Einleitung in den Zahlungsverkehr abwickelt, und
- ggf. ein Transaktionsspeicher, in dem die zahlungsrelevanten Daten aus AGE-Transaktionen gesammelt, zwischengespeichert und evtl. vorkonzentriert werden können.

Im allgemeinen Fall ist das RSE über eine Kommunikationsleitung mit einem Host des Dienstanbieters (z.B. Konzentrator) verbunden, über die periodisch, z.B. täglich, die lokal gesammelten zahlungsrelevanten Daten in einem entsprechenden Protokoll übertragen werden. In speziellen Systemen (z.B. Parkhausautomat) ist es auch möglich, daß der Transaktionsspeicher als Chipkarte oder Diskette realisiert ist, dessen Inhalt durch Austausch des Speichermediums in den Zahlungsverkehr eingeleitet werden kann, oder daß der Transaktionsspeicher durch eine Funkkommunikation entleert wird.

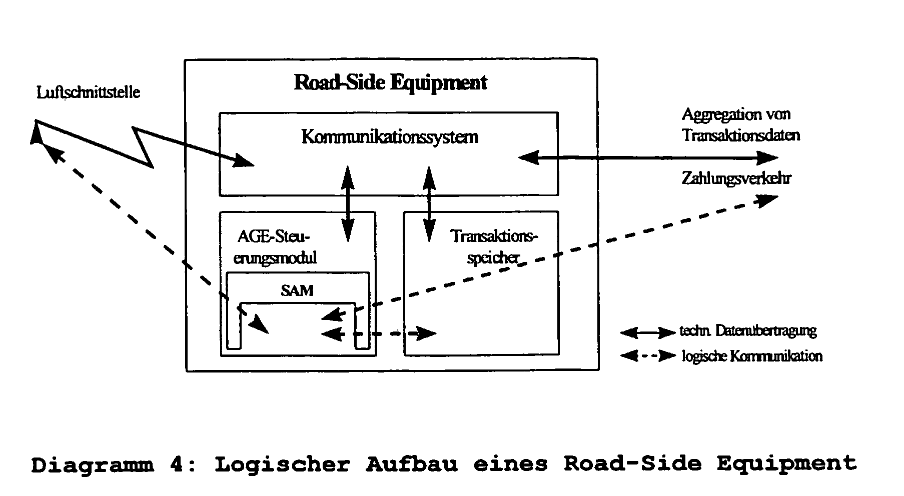

Die logische Konzeption des RSE ist im Diagramm 4 veranschaulicht.

Im Falle eines anonymen, transportspezifischen und vorausbezahlten Zahlungsmittels kann im AGE-Steuerungsmodul eine Voraggregation der zahlungsrelevanten Daten so erfolgen, daß nur noch die Gebührensummen an den Host weitergeleitet werden.

Die Sicherheitsmechanismen des SAM werden vom AGE-Steuerungsmodul vorzugsweise dazu verwendet, um sowohl die automatischen Zahlungsvorgänge über die Luftschnittstelle gegen unbefugte Manipulation zu schützen als auch die zahlungsrelevanten Daten, die zur Aggregation an den Konzentrator des Dienstanbieters weitergeleitet werden, vor unerkannter Veränderung oder Duplizierung abzusichern.

Konzentrator

Der Konzentrator stellt in diesem Systemmodell die Kopfstelle des Dienstanbieters gegenüber der Clearingstelle dar. Seine Aufgabe besteht darin, von allen RSE des Dienstanbieters die zahlungsrelevanten Transaktionsdaten entgegenzunehmen bzw. abzurufen, daraus die zahlungsrelevanten Einzeldaten zu extrahieren und soweit möglich bezüglich der Zahlungsmittel zu aggregieren. Je nach vertraglicher Beziehung zwischen Dienstanbieter, Zahlungsmittelemittenten und Acquirern werden die Daten bezüglich der Zahlungssysteme so getrennt und aufbereitet, daß sie an den oder die Acquirer weitergeleitet werden können.

Da im Konzentrator eine Vielzahl von Einzeldaten zusammenkommt, die zur Ableitung von Bewegungs- und Verhaltensinformationen mißbraucht werden könnten, unterliegen diese Daten und ihre Verarbeitungsmöglichkeiten einer strengen Zweckbindung, die nach datenschutzrechtlichen Bestimmungen gewährleistet und kontrolliert werden muß. Insbesondere müssen die Transaktionsdaten, die aus revisionstechnischen Erfordernissen langfristig gespeichert bleiben, wirksam gegen unbefugte Einsichtnahme, Verwendung und Veränderung geschützt werden.

Im Falle der Verwendung eines nachbezahlten Zahlungsmittels im AGE-System kann prinzipiell ein Benutzer eine Einzelaufschlüsselung der Transaktionsdaten, die ihm von seiner Bank (Emittent) in Rechnung gestellt werden, verlangen. Aus datenschutzrechtlichen Gründen ist dies jedoch nur dann möglich, wenn der Benutzer sein kontoführendes Institut explizit ermächtigt, diese Daten von den AGE-Dienstanbietern einzuholen. Der Emittent kann in diesem Fall diese Daten beispielsweise zu einer monatlichen Rechnung mit Einzelgebührennachweis zusammenstellen und dem Benutzer zustellen.

### Acquirer

Ein Acquirer ist im AGE-Systemmodell diejenige Institution, die von allen Dienstanbietern die kumulierten Forderungen bezüglich der von ihm verarbeiteten Zahlungssysteme aufkauft und die Zahlung vornimmt (Gutschrift). Die Forderungen werden auf Echtheit und Integrität geprüft, wobei insbesondere die Authentizität der Zahlungsmittel anhand der Zertifizierungsdaten, die mit den Forderungen mitgeliefert werden, verifiziert wird. Nach der entsprechenden Umsortierung und Aufbereitung werden die Forderungsdaten an die jeweiligen Emittenten weitergeleitet, damit der Zahlungsausgleich (Lastschrift) erfolgen kann. Die Acquirer-Funktion kann z.B. von einem Kreditinstitut, einer Kartengesellschaft oder einem Processing-Dienstleister erbracht werden.

Das Modell ermöglicht die Einbindung eines oder mehrerer Acquirer. z.B. ist es denkbar, daß ein Acquirer ein oder mehrere universelle Zahlungsmittel verarbeitet oder als nationale oder internationale Kopfstelle für ein oder mehrere transportspezifische Zahlungsmittel fungiert. Im Fall der juristischen Identität eines Zahlungsmittelemittenten und eines Dienstanbieters kann die Acquirer-Funktion auch vom Dienstanbieter selbst erbracht werden.

### Emittent

Der Begriff Emittent ist im AGE-Systemmodell als Oberbegriff für den Betreiber oder Herausgeber eines Zahlungsmittels oder ein kontenführendes Kreditinstitut zu verstehen. Je nach Zahlungsmitteleigenschaft kann als Emittent ein Kreditinstitut, eine Kartengesellschaft, ein ÖPNV-Verbund, ein Autobahnbetreiber etc. fungieren.

In diesem Zusammenhang ist eine Funktion des Emittenten die Erstellung und Verteilung von Sperrenlisten für solche Zahlungsmittel, die z.B. aufgrund von Diebstahl, Fehlfunktion oder sonstiger Sicherheitsverletzungen nicht mehr akzeptiert werden dürfen. Die dazu notwendigen Informationen können z.B. von den Acquirern erhoben werden, da diese dienstunabhängig Sicherheitsverletzungen im Zahlungsverhalten detektieren können (als Outsourcing-Aufgabe, die Verantwortung liegt jedoch bei den Emittenten). Im Konzept ist vorgesehen, daß solche Sperrinformationen bis zu den RSE-Einrichtungen weitergeleitet und von dort optional und selektiv auch an OBUs übertragen werden können. Für vorausbezahlte Zahlungsmittel kann der Zahlungssystem-Emittent darüber hinaus Schattensalden bezüglich der sich im Umlauf befindlichen Zahlungsmittel (z. B. elektronische Geldbörsen) überwachen, um eventuelle Angriffe auf die Sicherheit erkennen zu können.

### Collection Agent

Diese Modellkomponente ist von Bedeutung, wenn z.B. vorausbezahlte Zahlungsmittel in einem AGE-System eingesetzt werden. Dabei kann es sich um eine vom entsprechenden Emittenten lizenzierte Verkaufsagentur für Chipkarten oder On-Board Units oder eine Ladeinstanz für elektronische Geldbörsen (Ausgabeautomat für elektronisches Geld) handeln.

### AGE-Kontrollstelle (Enforcement)

Die AGE-Kontrollstelle ist eine prinzipiell von der Gebührenerhebung getrennte Systemkomponente. Sie hat die Aufgabe,
- das Vorhandensein und die Authentizität des jeweils letzten erforderlichen Zahlungsnachweises zu prüfen,
- zu prüfen, ob dabei die Tarifierung ordnungsgemäß war,
- ggf. und nur im Falle einer nicht oder falsch erfolgten Zahlung Daten für die Beweissicherung und die nachträgliche Gebührenzahlung zusammenzustellen, und
- eine möglichst automatisierte Eintreibung nicht gezahlter Gebühren und evtl. Zusatzgebühren zu veranlassen.

Die AGE-Kontrollstelle kann entweder stationär zur Prüfung mobiler Verkehrsteilnehmer oder mobil zur Prüfung mobiler oder stationärer Verkehrsteilnehmer sein und kommuniziert über die Luftschnittstelle mit On-Board Units.

Technisch kann eine AGE-Kontrolle auch mit einem RSE gekoppelt sein, damit die Beweissicherung für Nicht- oder Falschzahler mit anschließender Nachzahlung direkt veranlaßt werden kann. Dies wird auch als integriertes Enforcement bezeichnet. Im Gegensatz dazu wird, wie oben erläutert, das abgesetzte Enforcement durch eine von der Gebührenerhebung technisch getrennte, zeitlich nachgeschaltete und meist nur stichprobenartige Kontrolle realisiert.

### Zulassungsinstanz (Institutionalisierung)

Unabdingbare Voraussetzung für die Teilnahme aller Systemkomponenten in einem AGE-System ist, daß sicherheitsrelevante Architekturanforderungen bei der Realisierung von Komponenten des AGE-Zahlungssystems vollständig und korrekt in technische, organisatorische und rechtliche Maßnahmen umgesetzt und diese Maßnahmen beim Betrieb auch eingehalten werden.

Sicherheitsrelevante Anforderungen ergeben sich daraus, daß die Manipulations- und Revisionssicherheit, die Einhaltung der Datenschutzbestimmungen und der ordnungsgemäße Fluß aller Zahlungsströme zu gewährleisten sind, da in den verschiedenen Komponenten des Gesamtsystems eine Vielzahl von kunden-, zahlungs- und dienstbezogenen Daten erzeugt, vorgehalten, weitergeleitet, ausgewertet und gespeichert wird und damit auch einer Vielfalt von Bedrohungen ausgesetzt ist.

Die Zulassungsinstanz muß folgende Aufgaben erfüllen:
- Für alle Systemkomponenten und juristischen Personen muß die Teilnahme am Gesamtsystem durch ein Zulassungsverfahren reglementiert werden, das den Einsatz nicht-zugelassener Systeme (Chipkarten, Anwendungen, Endgeräte, Dienstanbieter etc.) wirksam, d.h. auch mit technischer Zwangsläufigkeit in den automatisierten Abläufen verhindert. Damit einher geht ein Abnahmeverfahren für alle Systemkomponenten.
- Immer da, wo Zahlungsvorgänge entstehen und entsprechende Datenflüsse erfolgen, muß die Zulässigkeit, die Authentizität und ggf. die Vertraulichkeit gewährleistet werden können. Insbesondere müssen Maßnahmen getroffen werden, die ein unautorisiertes Aufladen von Zahlungsmitteln oder Abbuchen von Beträgen und die Vortäuschung oder Wiedereinspielung bereits erfolgter Zahlungen verhindern sowie die Sperrung von einzelnen Teilnehmern oder Teilnehmergruppen (Chipkarten, Anwendungen, Zahlungsmittel, Geräte) ermöglichen.
- Die Eindeutigkeit von Zahlungsvorgängen muß sichergestellt werden, und alle Transaktionen und Forderungen müssen revisionssicher nachvollziehbar sein. Dabei müssen die besonderen datenschutzrechtlichen Anforderungen zur Erhebung, Speicherung, Verarbeitung und Übermittlung von personenbezogenen oder -beziehbaren Daten (enge Zweckbindung) beachtet werden.
- Die technische Ausprägung der Systeme und die organisatorischen und technischen Abläufe müssen so gestaltet sein, daß i.a. alle Zahlungen zwischen zugelassenen Systemteilnehmern garantiert werden können. Dies muß durch entsprechende vertragliche Vereinbarungen (z.B. zwischen Dienstanbieter, Acquirer und Emittent) reglementiert werden.

Zur Betriebszulassung müssen ähnlich den Reglements für das Geldausgabeautomaten- oder electronic-cash-System der deutschen Kreditwirtschaft Verträge für beliebige Teilnehmer, die auf lokaler, nationaler oder europäischer Ebene einen Dienst anbieten, ausgearbeitet werden. Darin müssen insbesondere zur Abnahme von Systemkomponenten obligatorische Prüfungen bzw. Gutachten zur IT-Sicherheit von Chipkarten, Anwendungen, On-Board Equipment, RSE, Netzkonzepten, Abrechnungsstellen etc. verlangt werden.

Kriterien dieser Prüfungen müssen u.a. die Manipulationsfreiheit von AGE- und zahlungsrelevanten Anwendungen an den unterschiedlichsten Einsatzstellen im Gesamtsystem sowie die Unabhängigkeit und Rückwirkungsfreiheit unterschiedlicher Applikationen beim Einsatz multifunktionaler Chipkarten sein. Es muß geprüft werden, daß in allen regulären und irregulären Anwendungssituationen die Interessen aller Systemteilnehmer bei jedem Verarbeitungsschritt entweder zum jeweiligen tatsächlichen Zeitpunkt oder zumindest retrospektive gewahrt bleiben und die Zahlungsgarantie für alle ordnungsgemäßen Gebührenerhebungen gewährleistet wird.

Zwei den Zulassungsfunktionen nachgeordneten Aufgaben können im Bereich des Managements kryptographischer Schlüssel gesehen werden:
- Im Falle unabhängiger Zahlungsmittelemittenten und Dienstanbieter muß die Zulassung eines Zahlungssystems für das AGE-System über das Keymanagement etabliert werden, das zur Aktivierung der SAMs erforderlich ist. Hierfür ist es sinnvoll, ein über alle Emittenten und Dienstanbieter harmonisiertes Sicherheitsverfahren mit kompatibler Schlüsselarchitektur anzustreben, was idealerweise im Rahmen der Zulassungsprozeduren koordiniert werden kann.
- Bei Einsatz asymmetrischer Verschlüsselungsverfahren zur Partnerauthentisierung und Erzeugung digitaler Unterschriften ist eine Zertifizierungsinstanz notwendig, die jedem zugelassenen Partner einen Schlüssel so zuordnet, daß die Rechtmäßigkeit der Zuordnung von jedem beliebigen anderen Systemteilnehmer festgestellt werden kann.

Im Falle einer internationalen Ausdehnung bzw. Öffnung des AGE-Systems muß die Zulassungsinstanz und das Schlüsselmanagement-System hierarchisch implementiert werden, um die jeweils nationalen Aufgaben und Zuständigkeiten in ein internationales Zulassungsverfahren und einheitliches Schlüsselmanagement zu integrieren. Damit können auf Grundlage harmonisierter Sicherheitsanforderungen und Zulassungskriterien AGE-Systemteilnehmer auf nationaler Ebene für den internationalen Einsatz zugelassen werden.

Bezüglich des Bezahlungsvorganges bei der Dienstnahme über die Luftschnittstelle und der Vorbereitung dieses Vorganges im On-Board Equipment muß unterschieden werden, ob es sich um ein börsenartiges (Vorausbezahlung) oder ein kontobasiertes (Nachbezahlung) Zahlungsmittel handelt.

Ausgangspunkt für die Festlegungen ist in einer erfindungsgemäß besonders bevorzugten Ausführungsform dabei, daß aufgrund der getrennten Sicherheitsdomänen - ohne Rücksicht auf eine etwaige organisatorische Identifikation von Systemkomponenten (z.B. Koinzidenz vom Emittent und Dienstanbieter) - im Normalfall nur der Zahlungsmittelemittent die Schlüssel zur Zertifizierung von Zahlvorgängen besitzt und diese - außer beim Einsatz von asymmetrischen Kryptoverfahren - nur dem Acquirer zur Echtheitsprüfung für von Dienstanbietern eingereichte Forderungen zur Verfügung stellt.

### Börsenzahlung:

Beim Einsatz universeller Börsen können Daten komprimiert nur dann in den Zahlungsverkehr eingeleitet werden, wenn nicht jede einzelne AGE-Gebühr vom Zahlungsmittel zertifiziert ist, sondern wenn vorab, d.h. vor der ersten Gebührenerhebung ein bestimmter Verfügungsbetrag zertifiziert und der AGE-Anwendung im OBE zur Abzahlung der folgenden Einzelgebühren zur Verfügung gestellt wird.

Daher ist im Konzept in einer erfindungsgemäß besonders bevorzugten Ausführungsform vorgesehen, daß im Falle einer Zahlung mit einer universellen Börse, wie es die Börse der deutschen Kreditwirtschaft darstellt, vor Fahrtbeginn ein Verfügungsbetrag von der Börse abgebucht und in zertifizierter Form an die AGE-Applikation im On-Board Equipment - unabhängig davon, ob sich diese auf derselben Chipkarte, in einer anderen Chipkarte oder in der On-Board Unit befindet - übergeben wird. Der Verfügungsbetrag kann entweder vom Benutzer gewählt oder durch einen z.B. vom Emittenten bestimmten Systemparameter festgelegt sein, oder er kann sich aus dem gesamten verfügbaren Betrag der Börse ergeben.

Dieser Verfügungsbetrag, der die tatsächlichen AGE-Gebühren in der Regel deutlich übersteigt und in der OBE-AGE-Applikation sicher verwaltet werden muß, dient als Referenzwert zur Zusammenführung der zugehörigen Einzelgebühren beim Dienstanbieter vor der Einleitung der AGE-Forderungen in den Zahlungsverkehr und darf daher von der Summe der Einzelgebühren nicht überschritten werden. Vom Verfügungsbetrag werden in der OBE-AGE-Applikation die Einzelgebühren solange diskontiert, bis der Betrag aufgebraucht und ein erneuter Abbuchungsvorgang erforderlich ist. Ein nach Fahrtende verbleibender Restbetrag kann entweder in der AGE-Applikation verbleiben oder als Teilstorno an die Börse zurückgeführt werden. Daher ist es im Rahmen der AGE-Zulassung des Zahlungsmittels "universelle Geldbörse" erforderlich, daß die geräte- und softwareseitigen Sicherheitsabläufe eingehalten werden und die Emittenten mit den Dienstanbietern eine Verpflichtung eingehen, daß alle so gebildeten Summenforderungen auch beglichen werden.

Wenn die Börse und die AGE-Applikation identische Sicherheitsdomänen besitzen, was im Normalfall nur bei einer transportspezifischen Börse möglich ist, kann auf eine Zertifizierung des Verfügungsbetrages dann verzichtet werden, wenn das Zahlungsmittel nur von dem emittierenden Dienstanbieter akzeptiert wird, da in diesem Fall der Zahlungsverkehr vom Dienstanbieter selbst oder einem von ihm beauftragten Dienstleister durchgeführt wird.

Im letztgenannten Fall oder im Falle GNSS-basierter Systeme oder allgemein, wenn es die Zeitanforderung an den Zahlvorgang oder die technische Leistungsfähigkeit von Chips und Übertragungstechniken zuläßt, kann auch eine direkte Kommunikation zwischen dem Zahlungsmittel und der Erhebungsvorrichtung stattfinden, so daß auf eine Vorab-Bereitstellung eines Verfügungsbetrages verzichtet werden kann. In diesem Fall wird bei jeder Gebührenentrichtung nur die tatsächlich fällige Gebühr aus dem Zahlungsmittel abgebucht, so daß ein Rückladen evtl. unverbrauchter Beträge entfällt.

### Kontozahlung:

Im Falle einer Kontozahlung ist es lediglich erforderlich, die Kontoinformation in zertifizierter Form der AGE-Applikation zu übergeben. Diese Daten können im fehlerfreien Fall dann solange zur Verrechnung genutzt und in den Zahlungsverkehr eingereicht werden, bis der Benutzer eine andere Zahlungsmittelwahl vornimmt. Diese Zahlungsvariante entspricht einem Lastschriftverfahren, für das der Dienstnehmer eine Abbuchungsgenehmigung für sein Konto erteilt.

Auch hier kann, wie oben für die Börsenzahlung beschrieben, sowohl auf eine Zertifizierung der Kontoinformation verzichtet als auch der Zahlvorgang in direkter Kommunikation zwischen dem Zahlungsmittel und der Erhebungsvorrichtung abgewickelt werden.

In beiden Zahlungsvarianten wird vor der Übergabe des zertifizierten Verfügungsbetrages oder der zertifizierten Kontoinformation geprüft, ob das Zahlungssystem generell von der AGE-Applikation akzeptiert wird - was eine entsprechende vertragliche Vereinbarung zwischen den AGE-Dienstanbietern und dem Zahlungsmittelemittenten voraussetzt - und ob insbesondere das konkrete Zahlungsmittel gültig ist (Prüfung von Verfalldatum und Sperrkennzeichen). Im Falle von getrennten Sicherheitsdomänen werden die Akzeptanz- und Gültigkeitsprüfung sowie die Abbuchung oder Lastschriftgenehmigung durch ein entsprechendes Keymanagement abgesichert.

In einer besonders bevorzugten Ausführungsform der Erfindung ist die Bezahlvorrichtung als On-Board Equipment (OBE) für ein Fahrzeug, besonders bevorzugt ein Automobil so ausgestaltet, daß sie eine On-Board Unit (OBU) umfaßt, welche mit einer Mikroprozessorkarte (ICC) des Nutzers bedient wird. Die ICC wird als vorbezahltes Zahlungsmittel in die OBU eingeführt; die OBU entnimmt dem Chip der ICC die Informationen, die das OBE zur automatischen Abwicklung des Zahlungsvorganges mit der Erhebungsvorrichtung benötigt.

Die Kommunikation zwischen einer ICC und einer OBU braucht im allgemeinen mehr Zeit, als die Kommunikation zwischen der OBU und der Erhebungsvorrichtung, typischerweise einer RSE-Einrichtung. Deshalb wird besonders bevorzugt schon, bevor ein Zahlungsvorgang zwischen der Bezahlvorrichtung und der Erhebungsvorrichtung zustandekommt, und sogar noch, bevor zwischen beiden die Kommunikationsschnittstelle entstanden ist, ein bestimmter Verfügungsbetrag in Form von Daten aus der Börsen-Applikation der ICC in die OBU geladen. Üblicherweise wird dies jedesmal dann bewirkt, wenn der Nutzer (und Karteninhaber) seine ICC in die OBU einführt. Weiterhin wird eine solche Aufladung üblicherweise dann vorgesehen werden, wenn der in der OBU noch verfügbare Betrag aufgrund bereits getätigter Zahlungen einen bestimmten Grenzwert unterschreitet, vorausgesetzt natürlich, daß die ICC in die OBU eingeführt ist und selbst noch einen genügenden Verfügungsbetrag aufweist.

Bei der Kommunikation zwischen ICC und OBU erfolgt auf jede Nachricht von der OBU zur ICC (Kommando) eine Nachricht von der ICC an die OBU (Antwort). Die folgende Kommandoreihenfolge beschreibt den Kommunikationsvorgang nach Einführen einer ICC in die Lesevorrichtung einer OBU:
- ATR: Durch das Answer to Reset Kommando mit zugehöriger Antwort werden technische Informationen hinsichtlich der ICC und der Verfügbarkeit von Applikationen zur Verfügung gestellt.
- SLA: Das Kommando Select Application selektiert die Börsen-Applikation der ICC durch die OBU. Die Antwort enthält die der Börsenapplikation entsprechenden Informationen.
- RIDL: Mittels des Kommandos Read ID/Limit kann die gegenwärtig in der Börsen-Applikation der ICC gespeicherte Geldmenge ausgelesen werden, um zu überprüfen, ob die ICC noch über einen genügenden Verfügungsbetrag verfügt. In einer besonders bevorzugten Ausführungsform der Erfindung kann die OBU oder der Nutzer entscheiden, welcher Betrag tatsächlich aus der ICC in die OBU geladen werden soll. In einer anderen bevorzugten Ausführungsform, wenn die Abbuchung entweder autonom (d.h. ohne externe Kommunikation) oder in direkter Kommunikation mit der Erhebungsvorrichtung erfolgt, kann diese Information dazu verwendet werden, grundsätzlich die Nutzbarkeit des Zahlungsmittels festzustellen.
- GC: Bevor aus der Börsen-Application ein bestimmter Betrag entnommen werden kann, müssen, unabhängig voneinander, durch die ICC einerseits und die OBU oder die Erhebungsvorrichtung (RSE) andererseits, zwei Zufallszahlen bereitgestellt werden, die die gegenseitige Berechtigung von ICC und OBU bzw. RSE zur Übergabe des Geldbetrages belegen. Durch Kommando und Antwort Get Challenge wird die von der ICC erzeugte Zufallszahl an die Umgebung abgesandt.
- UA: Durch das Kommando Update Amount wird eine bestimmte Menge elektronischen Geldes von der ICC abgezogen. Dieses Kommando und seine Antwort sind durch einen geheimen Schlüssel geschützt, der die beiden Zufallszahlen benutzt, um eine nicht-autorisierte oder wiederholte Entnahme zu verhindern. Zusätzlich kann der entnommene Betrag von der ICC mit einem zweiten Schlüssel zertifiziert werden, der dem Dienstanbieter nicht bekannt ist, wohl aber dem Acquirer.
In einer besonders bevorzugten Ausführungsform können, nachdem ein zertifizierter Verfügungsbetrag in der OBU bereitgestellt worden ist, ggf. mehrere Auszahlungsvorgänge zwischen der OBU und einer oder mehreren Erhebungsvorrichtungen abgewickelt werden, ohne daß die ICC dabei involviert ist. Wenn keine Transaktionen mehr benötigt werden und die ICC aus der Lesevorrichtung der OBU entnommen werden soll, muß ein eventuell noch vorhandener Verfügungsbetrag wieder in die Börsen-Application der ICC zurückgeführt werden. Dies muß auch geschehen, wenn ein weiteres UA-Kommando übermittelt werden soll, um einen neuen Verfügungsbetrag bereitzustellen; auch dann muß zunächst ein Restbetrag des früheren Verfügungsbetrages wieder in die ICC geladen werden, bevor ein neuer Verfügungsbetrag in die OBU überführt wird.
- PR: Durch das Kommando Partial Reversal kann ein Restbetrag von der OBU wieder in die ICC zurückgeführt werden. Auch dieses Kommando ist gegen Mißbrauch durch einen Authentifikationscode geschützt, der mittels eines geheimen Schlüssels und zweier Zufallszahlen erzeugt wird, welche unmittelbar vor diesem Kommando erst erzeugt werden.

Im einzelnen werden für die Kommando- und Antwortsequenzen bei der Kommunikation zwischen ICC und OBU folgende Nachrichten verwendet, wobei "Input" solche Daten bedeutet, die durch eine Kommandonachricht zur ICC übertragen werden, während "Output" solche Daten bedeutet, die mittels einer Antwortnachricht von der ICC abgesandt werden:
- ATR: Kein Input;
Output: card_data
- SLA: Input: Name der Börsen-Application;
kein Output
- RIDL: kein Input;
Output: id_prevu, enthaltend ICC/PREVU_ID, 8 (oder mehr) Byte ganzzahlig; Betrag, 2 (oder mehr) Byte ganzzahlig
- GC: kein Input;
Output: 4 oder 8 Byte hexadezimale Zufallszahl
- UA: Input: das zugehörige Kommando umfaßt die Objekte type, ID, TA Counter, amount, random und mac1.
Type ist 1 Byte ganzzahlig;
ID ist 4 Byte ganzzahlig;
TA_Counter ist 2 Byte ganzzahlig und amount ist 2 (oder mehr) Byte ganzzahlig.
Random und mac1 sind 4 oder 8 Byte Hexadezimalzahlen.
Output: die zugehörige Antwort umfaßt die Objekte status, ICC/PREVU_ID, ICC_TA_counter, amount, mac2 und mac3.
Status ist eine 2 Byte Hexadezimalzahl;
ICC/PREVU_ID ist 8 (oder mehr) Byte ganzzahlig.
ICC_TA_counter und Amount sind 2 (oder mehr) Byte ganzzahlig;
mac2 und mac3 sind 4 oder 8 Byte Hexadezimalzahlen.
- PR: Input: das Kommando enthält die Objekte ID, TA counter, amount1, mac1, amount 2, random und mac2.
ID ist 4 Byte ganzzahlig.
TA_counter, amount1 und amount2 sind 2 (oder mehr) Byte ganzzahlig;
mac1, random und mac2 sind 4 oder 8 Byte Hexadezimalzahlen.
Die zugehörige Antwort (Output) umfaßt die Objekte status und mac3. Status ist eine 2 Byte Hexadezimalzahl, mac3 eine 8 Byte Hexadezimalzahl.

In einer anderen bevorzugten Ausführungsform der Erfindung, wenn z.B. ein Dienstanbieter sein eigenes Zahlungssystem ermittiert oder weniger harte Zeitanforderungen an den Zahlvorgang bestehen, ist es möglich, daß eine bezüglich der kryptographischen Sicherung direkte Kommunikation zwischen dem Zahlungsmittel z.B. in Form einer Mikroprozessorkarte und der Erhebungsvorrichtung stattfindet. In dieser Ausführungsform entfällt die Notwendigkeit einer Datenspeicherung und -verschlüsselung im Transponder, da dieser im wesentlichen nur zur Konvertierung von Übertragungsprotokollen eingesetzt wird. In diesem Falle sind die oben beschriebenen Kommandos UA und PR durch z.B. SD (Secure Decrease: gesichertes Abbuchen einer AGE-Gebühr vom Betragsspeicher der Börsenapplikation) und RF (Register Fee: abschließende Bestätigung der positiven Zahlungsquittierung und Erzeugung eines Logging-Eintrages) zu ersetzen:
- SD: Input: das Kommando umfaßt die Objekte ID, tarif, amount, random, mac1.
ID ist 4 (oder mehr) Byte ganzzahlig;
tarif ist 1 Byte ganzzahlig;
amount ist 2 (oder mehr) Byte ganzzahlig;
random und mac1 sind 4 oder 8 Byte Hexadezimalzahlen.
Output: die zugehörige Antwort umfaßt die Objekte status und mac2.
Status ist eine 2 Byte Hexadezimalzahl;
mac2 ist eine 4 oder 8 Byte Hexadezimalzahl.
- RF: Input: das Kommando umfaßt die Objekte Fahrzeugklasse, Quittungsnummer, amount, result, encMsg.
Fahrzeugklasse ist 1 Byte ganzzahlig;
Quittungsnummer ist eine 3 Byte Hexadezimalzahl;
amount ist 2 (oder mehr) Byte ganzzahlig;
result ist eine 2 Byte Hexadezimalzahl;
encMsg ist eine 8 oder 16 Byte Hexadezimalzahl, die einen verschlüsselten, 4 oder 8 Byte hexadezimalen mac3 enthält.
Output: die zugehörige Antwort umfaßt die Objekte status und mac4.
Status ist eine 2 Byte Hexadezimalzahl;
mac4 ist eine 4 oder 8 Byte Hexadezimalzahl.

### Luftschnittstelle:

Für die automatische Gebührenermittlung und -erhebung ist zu unterscheiden, ob es sich um ein offenes oder geschlossenes AGE-System handelt:
- Im offenen System ist an jedem RSE eine Gebührenzahlung möglich.
- Im geschlossenen System erhält der Verkehrsteilnehmer zuerst ein Eintrittsticket, das er beim Verlassen des Gebietes vorweisen muß und das die Grundlage für die Gebührenberechnung bildet (z.B. im Parkhaus).

Die Gebührenerhebung über die Luftschnittstelle erfolgt im offenen System und bei der Ausfahrt aus dem geschlossenen System prinzipiell in den folgenden, prinzipiell schon oben beschriebenen fünf Schritten, damit die Vorgänge zur Gebührenermittlung, zur Zahlung und zur Quittungsübergabe grundsätzlich getrennt werden können. Die Einfahrt in ein geschlossenes System erfolgt gemäß den ersten drei der folgenden fünf Schritte. Für die Protokollinhalte im Detail ist seitens des Dienstanbieters dabei zwischen einer Erhebungsvorrichtung vom Typ "Zahlungs-RSE" (offenes System und Ausfahrt aus geschlossenem System), an dem eine sofortige Gebührenzahlung durchgeführt wird, und vom Typ "Eintritts-RSE" (Einfahrt in geschlossenes System) zu unterscheiden, das nur Eintrittstickets ausstellt. Seitens des Dienstnutzers erfolgt die Zahlung durch eine Kommunikationsschnittstelle, die vom Übertragungsteil der Bezahlvorrichtung (Bestandteil des On-Board Equipment, OBE) gebildet wird.
- T:: Tender (entsprechend: Bekanntgabe des Dienstleistungsangebots)
Bei Annäherung eines Fahrzeuges wird die Bezahlvorrichtung vom Road-Side Equipment zuerst mit Informationen zu den vom AGE-Dienstanbieter akzeptierten Zahlungssystemen (List of Acceptable Payments) und evtl. mit Angaben zur Funktionalität, zum Level der Gebührenerhebungsstelle und zum Dienstanbieter versorgt. Die List of Acceptable Payments enthält für jedes regionale oder überregionale (d.h. nicht obligatorisch akzeptierte) Zahlungssystem einen vorzugsweise nach ISO 7816-5 strukturierten Eintrag (Issuer Identification Number oder Registered Application Provider Identifier), wenn dieses vom AGE-Dienstanbieter akzeptiert wird.
Zusätzlich kann es an einem Zahlungs-RSE notwendig sein, daß weitere Statusabfragen boolescher Art (List of Boolean Challenges) durchgeführt werden, um z.B. das Vorhandensein eines Eingangstickets oder eines Sperrkennzeichens abzufragen. Im Falle eines Eintritts-RSE wird statt dessen eine Zufallszahl gesendet (RSE Random Challenge), um im folgenden sicherzustellen, daß Eintrittstickets nur an authentische Bezahlvorrichtungen ausgeteilt werden.
- R:: Registration (entsprechend: Erklärung des Kaufund Zahlwillens)
Durch den Empfang einer T-Nachricht von einem Zahlungs-RSE wird die Bezahlvorrichtung aufgefordert, ihrerseits Angaben zur Fahrzeugklasse und zu Zahlungssonderkonditionen (z.B. Behindertentarif, Großkundenabo, hoheitliches Fahrzeug etc.; Vehicle and Driver Dependent Class Table), zum Gültigkeitszustand (Expire Date, Minimum des Gültigkeitsendes der AGE-Applikation und des eingesetzten Zahlungsmittels), zum Zahlungswunsch (Issuer Identifier und Requested Currency), zu den booleschen Statusabfragen (List of Boolean Responses) und - im geschlossenen System - zu einem evtl. vorhandenen verschlüsselten Eintrittsticket des entsprechenden Service-Levels an das RSE zu übertragen. Durch die Verschlüsselung des Eintrittstickets wird ein gezieltes Kopieren von Eintrittstickets durch Abhören der Luftschnittstelle verhindert. Das Ticket enthält Angaben zu Zeit und Ort des Eintritts und evtl. weitere, anonyme Plausibilitätsangaben (z.B. Fahrzeugklasse, Ticketnummer), damit die Rechtmäßigkeit seiner Verwendung geprüft werden kann.
Weiterhin werden mit der R-Nachricht Daten zum Verschlüsselungsverfahren (z.B. Gruppenschlüsselnummer) übergeben, die jedoch noch keine OBE-Identifikation zulassen. Das gesamte Protokoll zur Gebührenzahlung ist erfindungsgemäß besonders bevorzugt, daß zuerst eine RSE-Identifikation erfolgen muß. Außerdem wird zur RSE-Authentisierung eine Zufallszahl übergeben (OBE Random Challenge). Weiterhin wird in der R-Nachricht auch der Zeitpunkt der letzten Zahlung übertragen, falls diese an der gleichen Zahlstelle (Beacon ID) erfolgt ist.
Im Falle eines Eintritts-RSE sendet die Bezahlvorrichtung in der R-Nachricht Angaben zum Zahlungswunsch, eine eigene Zufallszahl (OBE Random Challenge), die zur anschließenden RSE-Authentisierung verwendet wird, die Gruppenschlüsselnummer sowie einen Authentikator zu diesen Angaben.
PD/TT: Price Definition (entsprechend: Festlegung des Preises) bzw. Ticket Transfer (entsprechen: Ausstellung des Eintrittstickets)
Falls am aktuellen RSE eine Gebührenzahlung erfolgen soll, kann das RSE nach Auswertung der Gültigkeit der AGE- bzw. Zahlungsmittelapplikation (Expire Date) aufgrund der von der Bezahlvorrichtung empfangenen Angaben in Abhängigkeit der Fahrzeugklasse, der Zahlungssonderkonditionen, des Zahlungszeitpunktes und eines eventuellen Eintrittstickets den aktuellen Gebührenbetrag (Fee) ermitteln, wobei die Gebührenhöhe unabhängig vom Zahlungsmittel sein muß, da der Benutzer im Prinzip die freie Auswahl aus der Liste der akzeptierten Zahlungsmittel hat.
Alternativ dazu kann (beim geschlossenen System) statt der Gebührenermittlung ein Eintrittsticket ausgestellt werden, das aus den obengenannten Gründen von RSE so verschlüsselt wird, daß es nur von einem RSE desselben Dienstanbieters wieder entschlüsselt werden kann. Zusätzlich können mit der Ticketübertragung auch bestimmte boolesche Werte festgelegt werden, wie z.B. Setzen einer Markierung in einer Bezahlvorrichtung, daß der Eintritt in ein geschlossenes System erfolgt ist. Nicht-boolesche Einträge, z.B. numerischer Art, dürfen aus Datenschutzgründen von einer Erhebungsvorrichtung nicht in einer Bezahlvorrichtung vorgenommen werden können, um systematische Teilnehmermarkierungen und -verfolgungen auszuschließen.
Die geforderte AGE-Gebühr oder das verschlüsselte Eintrittsticket wird zusammen mit der RSE-Identifikation, dem Datum und der Uhrzeit der Gebührenerhebung, einer Statusinformation (Error Code), dem angewandten Tarif und - im Falle einer anschließenden Gebührenzahlung - einer weiteren Zufallszahl zur OBE-Authentisierung (RSE Random Challenge) an die Bezahlvorrichtung gesendet.
Damit die Erhebungs- und die Bezahlvorrichtung authentisiert werden kann, ist die PD- bzw. TT-Nachricht entweder - im Falle eines Zahlungs-RSE - mit einem Authentikator (Signature oder Message Authentication Code) versehen oder - im Falle eines Eintritts-RSE - teilweise verschlüsselt, wobei in beiden Fällen ein "Sessionkey" verwendet wird, der von der Gruppenschlüsselnummer und den Zufallszahlen abhängt.
- P:: Payment (entsprechend: Durchführung der Zahlung)
Nach Erhalt eines Tickettransfer (geschlossenes System) wird zuerst die Nachricht entschlüsselt und der OBE Random Response geprüft, so daß das RSE und damit auch das verschlüsselte Eintrittsticket im positiven Fall als authentisiert gelten. Im Falle eines Eintritts-RSE ist damit der Vorgang beendet.
Nach Erhalt eines Price Definition wird zuerst der Authentikator verifiziert und damit die Erhebungsvorrichtung durch die Bezahlvorrichtung authentisiert. Die Daten einer authentisierten PD-Nachricht werden als Beleg des Zahlungswillens (Preliminary Receipt) bis zur nächsten Zahlung gespeichert, damit der Bezahlversuch im Falle eines evtl. gescheiterten Bezahlvorgangs gegenüber einer AGE-Kontrollstelle nachgewiesen werden kann.
Zur Durchführung des Bezahlvorgangs werden die AGE-Gebühr (Fee) und die zahlungsrelevanten Daten (Issuer Identifier und Payment Object) an das RSE übertragen, wobei diese Nachricht ebenfalls mit einem Authentikatorfeld versehen ist. Die möglichen Inhalte des Payment Object hängen ausschließlich von den bilateralen Vereinbarungen zwischen Emittent und Dienstanbieter ab und werden weiter unten näher diskutiert.
- CR:: Confirmation and Receipt (entsprechend: Bereitstellung des Zahlungsbelegs)
Nach Empfang des Payment und der Authentikatorprüfung im RSE kann - wenn im Payment Object die genaue Zahlungsmittelidentifikation enthalten ist - eine Sperrenprüfung für das eingesetzte Zahlungsmittel durchgeführt werden. Falls dabei ein Sperrvermerk erkannt wird, können einerseits der Bezahlvorrichtung in einer Statusinformation
(Error Code) eine Aufforderung zur Sperrung des Zahlungsmittels mitgeteilt und andererseits die im bisherigen Transaktionsverlauf ermittelten Informationen direkt ins Enforcement eingeleitet werden. Der Sperrvermerk kann in der OBE-AGE-Anwendung gesetzt bleiben, um einen erneuten Zahlungsversuch mit dem gesperrten Zahlungsmittel schon im Bezahlvorrichtung abzuwehren. Zusätzlich kann das Zahlungsmittel z.B. im Chipkartenfall zur Selbstsperrung veranlaßt werden.
Anderenfalls werden der Bezahlvorrichtung die erfolgte Zahlung quittiert und eine mit einem Authentikator versehene Enforcement-Quittung sowie gegebenenfalls boolesche Werte (z.B. zum Rücksetzen einer Eintrittsticket-Markierung) an die Bezahlvorrichtung übertragen. Diese Nachricht ist zur Abwehr von Abhörangriffen mit dem obengenannten Sessionkey teilweise verschlüsselt. Die Quittung enthält alle für eine AGE-Kontrolle (Enforcement) wichtigen Daten, wie RSE-ID, Datum und Uhrzeit, Quittungsnummer, Angaben zur Fahrzeugklasse, AGE-Gebühr etc. Der Authentikator der Enforcement-Quittung ist mit einem der Bezahlvorrichtung unbekannten Schlüssel erzeugt.
Nach Erhalt und Prüfung der CR-Nachricht wird die Quittung im OBE-Transaktionsspeicher so abgelegt, daß die jeweils letzte Quittung eines Service-Levels mit ihrem Authentikator auch als Zahlungsnachweis gegenüber einer AGE-Kontrollstelle verwendet werden kann.

### Payment Object

Das in der P-Nachricht enthaltene Payment Object besteht i.a. aus den folgenden vier Informationsteilen, die jedoch nicht für alle Zahlungssystemarten gleichartig belegt sein können.
- TR: Transaction Related Data, z.B. Verfügungs- oder Gebührenbetrag, Datum oder Sequenzzähler der Dienstleistung;
- PAY: Payment System Related Data, z.B. Kennung des Zahlungsverpflichteten, Lastschrift- oder Verrechnungskonto;
- ID: Identity Related Data, z.B. Zahlungsmittel-ID;
- SEC: Security Related Data, z.B. Verschlüsselungsparameter und Authentikator.

Mögliche Inhalte des Payment Object sind im folgenden für drei Zahlungsbeispiele angegeben.

### Anonyme, transportspezifische, vorbezahlte Wertkarte:

| | |
|---|---|
| TR | Gebühr, evtl. Abbuchungszähler oder Restbetrag |
| PAY | evt. Verrechnungskonto |
| ID | Wertkarten(gruppen)nummer |
| SEC | - |

### Anmerkungen:

- Das Datenfeld TR kann neben der eigentlichen AGE-Gebühr z.B. einen Abbuchungszähler oder den auf der Wertkarte vorhandenen Restbetrag enthalten, damit Einzelvorgänge unterscheidbar und evtl. Sicherheitsprüfungen erleichtert werden.
- Es ist denkbar, daß Wertkarten in Abhängigkeit vom Ausgabe- und/oder Verfalldatum über unterschiedliche Konten verrechnet werden. Dies kann entweder explizit über eine Kontoangabe im Datenfeld PAY, die im Rahmen der Abbuchung aus der Wertkarte ausgelesen wird, oder implizit über die Wertkarten(gruppen)nummer erfolgen.
- Zusätzliche Sicherheitsparameter sind im Falle eines anonymen, transportspezifischen Zahlungsmittels nicht erforderlich, so daß für diesen Zweck auch keine Einzelkartenidentifikation notwendig ist.

### ● Universelle Geldbörse von Finanzinstituten:

| | |
|---|---|
| TR | Verfügungsbetrag, Sequenzzähler, Terminal-ID |
| PAY | Börsenverrechnungskonto |
| ID | Börsennummer |
| SEC | Message Authentication Code (MAC) |

### Anmerkungen:

- Da die Kommunikation mit der Geldbörsen-Chipkarte aufgrund der ausgefeilten Sicherheitsprozeduren sehr zeitintensiv ist, kann die universelle Geldbörse als Zahlungsmittel in einem AGE-Umfeld evtl. nur durch eine Vorab-Abbuchung eines Verfügungsbetrages eingesetzt werden. Zur Bedeutung des Verfügungsbetrages im Datenfeld TR sei auf die vorstehenden Anmerkungen zur Zahlungsart "Börsenzahlung" verwiesen.
- Die sonstigen im Datenfeld TR vorgesehenen Daten werden von der universellen Geldbörse in die MAC-Bildung, die den Abbuchungsvorgang von der Geldbörse kryptographisch absichert, einbezogen und müssen daher an diejenige Stelle im Zahlungsverkehr (d.h. den zuständigen Acquirer), die den MAC verifiziert, weitergeleitet werden.

### ● Lastschriftverfahren:

| | |
|---|---|
| TR | Sequenzzähler und/oder Datum, Uhrzeit |
| PAY | Bankleitzahl und Kontonummer |
| ID | evtl. Chipkartennummer |
| SEC | Message Authentication Code oder elektronische Unterschrift |

### Anmerkungen:

- Die Zahlung erfolgt im nachhinein durch Abbuchung von einem Debit- oder Kreditkonto, das im Datenfeld PAY angegeben ist. Über das TR-Datenfeld kann dabei gesteuert werden, ob entweder jede einzelne AGE-Gebührenabbuchung vom Benutzer genehmigt wird, oder ob die Abbuchungsgenehmigung in bestimmten Zeitabständen (z.B. einmalig bei Fahrtbeginn oder täglich) erteilt wird.
- Die Erteilung der Abbuchungsgenehmigung muß fälschungssicher und nachprüfbar sein und verlangt daher die Erzeugung eines Message Authentication Code oder einer elektronischen Unterschrift, wobei die entsprechenden Schlüssel entweder über die Kontoidentifikation oder die Chipkarte als Zahlungsmittelträger zugeordnet werden.

In einer weiteren erfindungsgemäßen Ausführungsform kann die Gebührenermittlung insbesondere gemäß einem Ausführungsbeispiel des Anspruchs 1 der Erfindung ohne (d.h. autonom) oder mittels Kommunikation der nutzerseitigen Bezahlvorrichtung und einem sonstigen Sender/Empfänger z.B. über Zellularfunk (z.B. GSM - Global System for Mobile Telecommunications) erfolgen, wobei der Sender/Empfänger als sog. virtuelle Zahlstelle dabei einem oder mehreren ortsfesten Gebührenerhebungspunkten zugeordnet ist. In beiden Varianten erfolgt die Auslösung einer Gebührenzahlung über ein GNSS (Global Navigation Satellite System, z.B. GPS - Global Positioning System). Der Gesamtvorgang kann dabei ebenfalls in fünf, den oben beschriebenen Schritten analogen Schritten erfolgen.

In einem solchen System liefert ein GPS-Empfänger ständig Daten zur geographischen Position des Fahrzeugs an die Bezahlvorrichtung. Diese werden mit einer digitalen Karte, in der virtuelle Zahlstellen verzeichnet sind, verglichen. Diese Karten-Daten sind in der Bezahlvorrichtung gespeichert. Wird dabei eine Übereinstimmung festgestellt, d.h. befindet sich das Fahrzeug z.B. auf einer gebührenpflichtigen Straße, wird die über eine Tariftabelle oder einen Tarifalgorithmus ermittelte Straßenbenutzungsgebühr in der Bezahlvorrichtung registriert. Je nach eingesetztem Zahlungssystem und technischer Ausstattung der Fahrzeugausrüstung kann diese Gebühr z.B. unmittelbar in der Chipkarte ohne weitere externe Kommunikation (autonomes System) abgebucht werden. Alternativ wird nach einer bestimmten Anzahl von solchen Zahlvorgängen oder wenn eine bestimmte geographische Position erreicht ist oder wenn eine "Erfassungs-Bake" durchfahren wird, eine Kommunikation über GSM oder DSRC zur Übertragung der zwischenzeitlich gesammelten Abbuchungsdaten durchgeführt. Für GSMtaugliche Systeme kann die Akutalisierung von Tariftabellen sowie die Wiederaufladung eines vorbezahlten Zahlungsmittels über Mobilfunk erfolgen.

Sowohl im Falle der mikrowellenbasierten Gebührenerhebung als auch im Falle einer Gebührenerhebung über sonstige Übertragungstechniken können die fünf Schritte der Gebührenerhebung durch eine kommandoartige Kommunikation (Master-Slave anstatt Peer-to-Peer) zwischen der Erhebungs- und Bezahlvorrichtung realisiert werden. Im jeweiligen Schritt sendet dabei die Erhebungsvorrichtung ein oder mehrere Kommandos an die Bezahlvorrichtung, die diese verarbeitet und mit den für die Übertragung der für den nächsten Schritt geforderten Daten beantwortet. Damit können zusätzliche oder Sonderanforderungen leicht im Gesamtsystem berücksichtigt werden.

### Aufbereitung der zahlungsrelevanten Daten

Die in der Erhebungsvorrichtung gesammelten Transaktionsdaten werden periodisch zur Weiterleitung an den Konzentrator des Dienstanbieters aufbereitet. Dies geschieht in Form einer kryptographisch geschützten Transaktionsdatei mit Versionsnummer, Zeitstempel und RSE-Identifikation, damit im Konzentrator die Authentizität und Einmaligkeit der Einreichung geprüft werden kann.

Als Übertragungsverfahren gibt es prinzipiell zwei Möglichkeiten:
- Online-Übertragung nach einem Kommunikationsprotokoll, z.B. auf Grundlage der "Schnittstellenspezifikation für das Clearing zwischen Systembeteiligten" für AGE-Systeme (Standardentwurf des CEN/TC 278), oder
- Datenträgeraustausch z.B. durch Einsatz einer Diskette oder Speicher-Chipkarte für solche Erhebungsvorrichtungen, die nicht in ein Kommunikationsnetz eingebunden sind.

Im Konzentrator werden die entgegengenommenen oder abgerufenen Transaktionsdateien daraufhin geprüft, daß sie während der Übertragung nicht manipuliert wurden, daß sie vom richtigen Absender (RSE) erzeugt wurden und daß sie - außer im Fehlerfall - nicht schon einmal eingereicht wurden.

Für universelle, d.h. nicht-transport-spezifische Zahlungsmittel erfolgt in einer besonders bevorzugten Ausführungsform der Erfindung im Abrechnungszeitraum (z.B. arbeitstäglich) eine Sortierung aller Einzeltransaktionen bezüglich der Zahlungsmittelidentitäten, so daß alle Gebührenzahlungen, die entweder im Falle eines vorausbezahlten Zahlungsmittels bezüglich des gleichen zertifizierten Verfügungsbetrages oder im Falle eines nachbezahlten Zahlungsmittels bezüglich der gleichen zertifizierten Kontoidentifikation getätigt wurden, summiert und als Gesamtforderung weiterbearbeitet werden können.

Die zahlungsrelevanten Daten, die dann an den entsprechenden Acquirer weitergereicht werden, enthalten - außer wenn der Kunde dieses zur Erstellung eines Einzelgebührennachweises ausdrücklich wünscht - keinerlei Daten über Anzahl, Höhe und Fälligkeitsort der summierten Einzelgebühren. Diese Daten werden zur Übermittlung an einen Acquirer in Form einer kryptographisch geschützten Forderungsdatei mit Versionsnummer, Zeitstempel und Identifikation des Einreichers (Dienstanbieter) aufbereitet, damit der Acquirer die Authentizität und Einmaligkeit der Einreichung prüfen kann.

Für anonyme, transport- oder dienstanbieter-spezifische Zahlungsmittel kann im RSE bereits eine Vorsortierung und Aggregation so erfolgen, daß lediglich Gebührensummen an den Host des Dienstanbieters weiterzuleiten sind.

Die Datenstruktur für die Schnittstelle zwischen der RSE und dem Datenempfänger, üblicherweise einem Zentralcomputer des Dienstanbieters wird erfindungsgemäß so gewählt, daß sie auch für die Weiterverarbeitung beim Acquirer und beim Emittenten eingesetzt werden kann.

Die Struktur ist für Protokolldateneinheiten (Protocol data units, PDU) im folgenden Diagramm wiedergegeben, wobei grundsätzlich auch andere PDUs, wie beispielsweise gemäß ISO 8583, EDIFACT, integriert werden können:

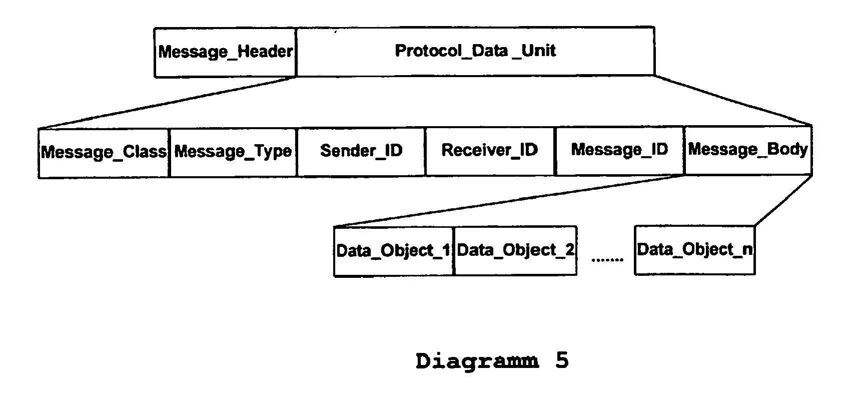

Beschreibung der Datenelemente:
- Message_Header:: Das Message_Header Datenelement umfaßt einen Versionsidentifikator. Dieser Identifikator ist eine ganze Zahl, die die geltende Version des Protokolls identifiziert.
- Message_Class:: Alle Datennachrichten sollten zu einer von sechs verschiedenen Nachrichtenklassen (message classes) gehören. Die jeweils angemessene Message_Class für die Transaction_ Files und für Fee_Claim_Files sind Advice und Advice Response.
- Message_Type:: Signalisiert die Wahl einer bestimmten Art von Nachricht. Im erfindungsgemäßen System handelt es sich bei Message_Type um den Nachrichtentyp Transaction.
- Sender_ID, Receiver_ID:: Innerhalb des Systems muß die Identität von Sender und Empfänger eindeutig festliegen. Erfindungsgemäß handelt es sich um eine 4-Byte Nummer.
- Message_ID:: Der Nachrichtenidentifikator Message Identifier identifiziert zusammen mit Sender_ID und Receiver ID eine bestimmte vorliegende Nachricht und wird selbst, vom Absender der Nachricht, als eine 4-Byte Zahl determiniert. Die Antwort des Nachrichtenempfängers muß die gleiche Message_Identifier Angabe enthalten.
- Message_Body:: Message_Body ist eine Sequenz von Data_Objects verschiedener Typen wie weiter unten definiert. Die Data Objects enthalten die geltenden "Automatic Fee Collection" (AFC) und mit dem Bezahlungsvorgang in Bezug stehenden Transaktionsdaten. Generell bezieht sich ein Data_Object auf einen
Zahlungsvorgang, der von der OBU erhalten wurde.

Die Message_Header, Message_Class und Message_Type Datenelemente sind alle 1-Byte Zahlen.

Die Übertragung von Zahlungsobjekten vom RSE zum Zentralcomputer des Dienstanbieters erfolgt mittels sogenannter Transaction Files. Ein Transaction File umfaßt einen Header_Record und die tatsächlichen positiven oder negativen Transaction_Records, und definiert daher verschiedene Typen von Data_Objects. Das Transaction_File wird als eine Nachricht der Klasse Advice übertragen, die in ihrem Message_Body ein einziges Data_Object vom Typ 1 enthält, dem eine Reihe von Data_Objects der Typen 2, 3 oder 4 folgt.

Ein zusätzlicher Objecttyp ist für die Nachrichtenart Advice Response reserviert, mit dem der Empfang eines Transaction_File quittiert wird.

Es wird davon ausgegangen, daß ein Abrufen der Übermittlung eines Transaction_File durch den Zentralcomputer auf einer niedrigen Protokollebene, beispielsweise innerhalb eines File_Transfer_Protokolls, erfolgt, so daß für diesen Zweck keine speziellen Nachrichten vorgesehen sind. Die Übertragung von Transaction_Files in diesem Sinne wird stets von einem RSE-Computer eingeleitet.

Das Data_Object vom Typ 1 umfaßt die Header Information für das Transaction_File, die von dem RSE Computer, insbesondere zum Zentralcomputer abgesandt wird.

Die Struktur des Data_Objects vom Typ 1 ist im Diagramm 6 gezeigt.

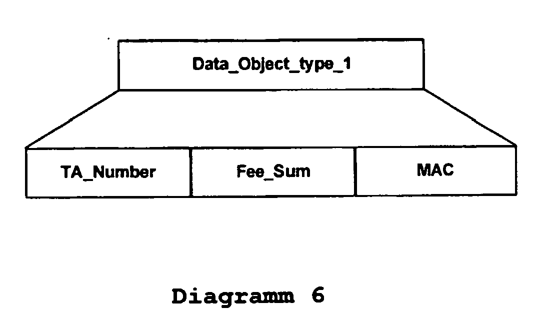

Dieser Object_Typ besteht aus den folgenden Datenelementen:
- TA_Number:: Dieses Datenelement enthält die Anzahl der Transaction_Records in dem Transaction_File und bestimmt daher die Anzahl von Data_Objects der Typen 2, 3 und 4 in der Nachricht.
- Fee_Sum:: Das Fee_Sum Datenelement enthält die Summe aller Gebühren, die im entsprechenden Datenelement Data_Objects (Typ 2 oder 3) des Transaction Records enthalten sind.
- MAC:: Dieses Datenelement enthält eine Message Authentication Code.

Die Datenelemente TA_Number und Fee_Sum sind beides 4-Byte Zahlen. MAC ist eine 8-Byte Hexadezimal-Zahl.

Das Data_Object vom Typ 2 enthält einen positiven Prepayment Transaction_Record des Transaction_File, das vom RSE Computer zum Zentralcomputer gesandt werden soll. Positiv bedeutet, daß die Transaktion zwischen dem RSE und OBU ordnungsgemäß abgeschlossen worden ist, d. h. die Zahlung ist erfolgt. Die Struktur des Data_Object vom Typ 2 ist im Diagramm 7 gezeigt.

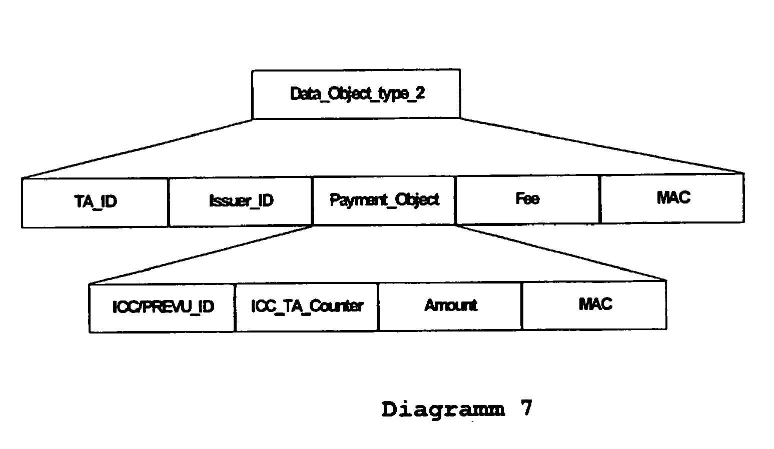

Dieser Data_Object-Typ besteht aus folgenden Datenelementen:
- TA_ID:: Dieses Datenelement dient zur Durchnumerierung der Transaction_Records des Transaction File. Das TA ID Datenelement ist eine 4-Byte Zahl.
- Issuer-ID:: Diese 4-Byte Zahl identifiziert den Emittenten des Zahlungsmittels, das zur Gebührenzahlung verwendet und mit der Payment-Nachricht übertragen wurde.
- PO:: Dieses Datenelement (Payment_Object) enthält zahlungsverkehrsrelevante Einzeldaten zu dem vorbezahlten Zahlungssystem. Es ist z.B. eine 20-Byte Information, die die vorausgegangene Ladung eines Verfügungsbetrages von der Smartcard in die OBU anzeigt. Es enthält vorzugsweise folgende vier Elemente:
ICC/PREVU ID: Identifikation der BörsenApplikation in der Smartcard, von welcher der Verfügungsbetrag in die OBU geladen wurde (4-Byte Zahl).
ICC TA Counter: Transaktionszähler, von der Smartcard bestimmt (2-Byte Zahl).
Amount: Der von der Smartcard in die OBU geladene Verfügungsbetrag (2-Byte Zahl).
MAC: Von der Smartcard erzeugter Message Authentication Code, der die Authentizität des geladenen Betrages zertifiziert (8-Byte Hexadezimal-Zahl).
- Fee:: Dieses Datenelement enthält die Gebühr, die für ein Fahrzeug verlangt wurde, welches die Bezahlstelle passiert hat, und die vom Verfügungsbetrag in der OBU abgezogen worden ist. Das Fee Datenelement ist eine 2-Byte Zahl.
- MAC:: Dieses 8-Byte lange Datenelement enthält einen Message Authentication Code.

Das Data_Object vom Typ 3 enthält einen positiven Post-Payment Transaction Record der Transaction File, die vom RSE Computer zum Zentralcomputer abgesandt werden soll. Positiv bedeutet, daß die Transaktion zwischen dem RSE und dem OBU wie vorgesehen abgeschlossen werden konnte, d. h. die Zahlung ist erfolgt.

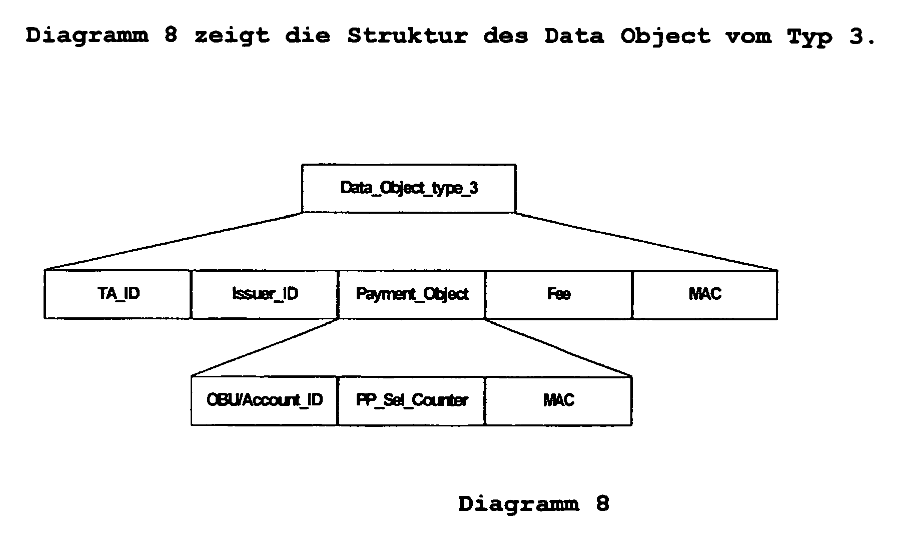

Dieser Data_Object Typ besteht aus den folgenden Datenelementen:
- TA_ID:: Dieses Datenelement hat die gleiche Bedeutung wie bei Diagramm 7.
- Issuer_ID:: Dieses Datenelement hat die gleiche Bedeutung wie bei Diagramm 7.
- PO:: Das Payment_Object enthält Daten zu dem nachbezahlten Zahlungssystem. Das PO Datenelement ist beispielsweise eine 18-Byte Information, die z. B. den in der OBU gespeicherten Post-Payment Account betrifft. Es umfaßt vorzugsweise drei Elemente. OBU/Account ID: Identifikation des Post-Payment Accounts (8-Byte Zahl).
PP_Sel_Counter: Dieser Zähler wird erhöht, wann immer sich der Fahrzeugführer zu einer Nachbezahlung entschließt, indem er eine entsprechende OBU Auswahlfunktion ausführt. Dieser Wert ist daher üblicherweise für alle OBU/RSE Transaktionen während einer Fahrt konstant.
MAC: Der von der OBU generierte Message Authentication Code, der die Authentizität der Kontenidentifikation bestätigt.
- Fee:: Dieses Datenelement enthält die Gebühr, die von einem Fahrzeug bei Passieren der Bezahlstelle verlangt worden ist. Das Fee Datenelement ist eine 2-Byte Zahl.
- MAC:: Dieses 8-Byte lange Datenelement enthält einen Message Authentication Code.

Das Data_Object vom Typ 4 enthält Informationen über negative Transaktionen. Eine Transaktion wird negativ genannt, wenn von einem Fahrzeug, das die Bezahlstelle passiert hat, keine Zahlung erfolgt ist. In diesem Fall könnte ein Enforcement ausgelöst worden sein. Dieses Data Object hat die in Diagramm 9 angegebene Struktur.

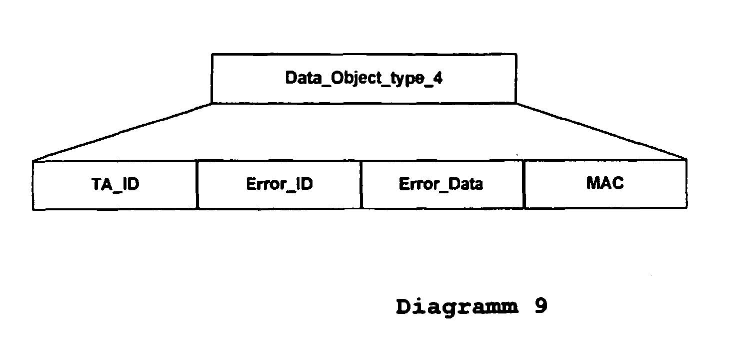

Dieser Typ eines Data_Object besteht aus den folgenden Datenelementen:
- TA_ID:: Dieses Datenelement hat die gleiche Bedeutung wie bei den vorausgegangenen Diagrammen.
- Error_ID:: Das Error_ID Element enthält spezifische Informationen bezüglich des Error-Typs, der aufgetreten ist, und daher bezüglich des Grundes für ein eventuelles Enforcement. Es ist eine 2-Byte Zahl.
- Error_Data:: Dieses Datenelement variabler Länge enthält spezifische Informationen bezüglich des tatsächlich aufgetretenen Errors.
- MAC:: Dieses 8-Byte lange Datenelement enthält einen Message Authentication Code.
Das Data_Object vom Typ 5 enthält Informationen, die bei Nachrichten von der Advice Response-Klasse vom Zentralcomputer zurück zum RSE übermittelt werden. Es zeigt entweder die erfolgreiche Übertragung und Prüfung der übertragenen Datei an, oder gibt spezielle Informationen im Falle eines Errors. Eine Nachricht der Advance Response-Klasse kann eines oder mehrere Data_Objects dieses Typs enthalten. Die Struktur eines Data_Objects vom Typ 5 ist im Diagramm 10 gezeigt.

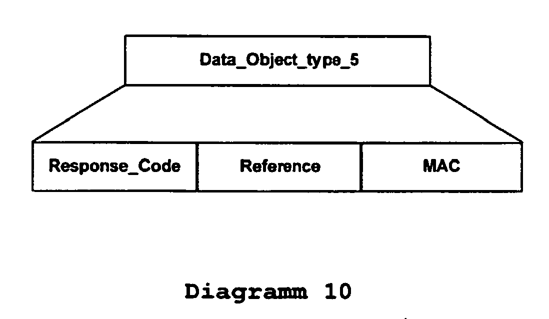

Dieser Data_Object Typ besteht aus den folgenden Datenelementen:
- Response_Code:: Dieses Datenelement enthält eine 2-Byte Zahl, die die Richtigkeit oder Unrichtigkeit der Übertragung angibt. Im Falle eines Errors definiert der Response_Code die Art des Errors.
- Reference:: Dieses Datenelement ist eine 4-Byte Zahl und kann sich entweder auf ein Datenelement des PDU, oder auf ein Data_Object, oder ein Data_Object Element im Message_Body beziehen, in welchem ein Error aufgefunden worden ist.
- MAC:: Dieses 8-Byte lange Datenelement enthält einen Message Authentication Code.

Eine Nachricht der Advice-Klasse vom oben definierten Typ enthält genau eine Transaction_File. Verschiedene Transaction_Files müssen mittels verschiedener Nachrichten übertragen werden. Wenn eine Begrenzung hinsichtlich der Länge einer Nachricht besteht, muß ein Transaction_File geschlossen werden, sobald eine bestimmte Anzahl von Transaction_Records angefallen ist.

In der beispielhaften Ausführungsform ist für die Absicherung der Übertragung eines Transaction_File, für die Authentisierung der Data_Objects und für die Authentisierung der Payment_Objects die Verwendung von Message Authentication Codes (MAC) vorgesehen, die mittels eines symmetrischen Verschlüsselungsalgorithmus wie z.B. des DEA (Data Encryption Algorithm) oder des IDEA (International Data Encryption Algorithm) erzeugt werden. Ein symmetrischer Verschlüsselungsalgorithmus zeichnet sich dadurch aus, daß sowohl der Sender als auch der Empfänger vertraulich und/oder integritätsgesichert zu übertragender Nachrichten über das gleiche kryptographische Geheimnis (Schlüssel) verfügen müssen.

In bestimmten Fällen kann es jedoch erforderlich sein, stattdessen asymmetrische Verschlüsselungsalgorithmen zu verwenden, wenn z.B. digitale Signaturen zum Einsatz kommen sollen, oder wenn das Keymanagement dadurch vereinfacht werden kann. Beim Einsatz asymmetrischer Verschlüsselungsalgorithmen verfügen beide Kommunikationspartner über unterschiedliche, jedoch in einem strengen mathematischen Zusammenhang zueinander stehende Schlüsselteile, von denen nur der geheim bleiben muß (der Signaturerzeugungsschlüsssel) und der andere öffentlich sein kann (der Signaturprüfschlüssel). In diesem Fall muß jedoch der öffentliche Schlüssel eines Teilnehmers von einer unabhängigen Instanz signiert (zertifiziert) werden, wie bereits oben bezüglich der Zertifizierungsinstanz ausgeführt wurde. Solche Schlüsselzertifikate können dann beispielsweise in ein öffentliches Verzeichnis (z.B. X.500 Directory) eingestellt werden.

Trotz der Beschreibung des Einsatzes der MAC-Technik sind die Ausführungen insbesondere zu den Datenstrukturen beispielhaft so zu verstehen, daß das jeweilige MAC-Feld als Platzhalter fungiert für beliebige Sicherheitsstrukturen ink1. sicherheitsbezogener Zusatzinformationen wie Algorithmenidentifikator, Schlüsseltyp und -nummer, Anwendungsmodus für Verschlüsselungsalgorithmus u.v.m. Diese Bemerkung trifft auch auf alle Datenstrukturen zu, die noch weiter unten beschrieben werden.

### Konzentrator ↔ Acquirer ↔ Emittent

Die in Form einer Forderungsdatei (Fee Claim File) aufbereiteten zahlungsrelevanten Daten werden von den entsprechenden Acquirern online nach dem gleichen Kommunikationsprotokoll entgegengenommen, das auch für die online-Übertragung zwischen RSE und Konzentrator eines Dienstanbieters vorgesehen ist. Da sich unterschiedliche Sicherheitsdomänen an dieser Schnittstelle begegnen, ist die Übertragung dieser Daten durch eigene Schlüssel abgesichert, die speziell und nur für diesen Zweck zwischen Dienstanbieter und Acquirer festzulegen sind.

Erfolgen die üblichen Prüfungen zur Authentizität und Einmaligkeit bzw. Neuheit der eingereichten Forderungsdaten mit positivem Ergebnis, tritt auf Grundlage der vertraglichen Vereinbarungen zwischen Dienstanbieter und Acquirer die Zahlungsgarantie in Kraft. Die Prüfungen beziehen auch die Authentisierung der eingesetzten Zahlungsmittel ein, indem die für einen Zahlungsvorgang zertifizierten Verfügungsbeträge bzw. Kontoinformationen verifiziert werden. Durch die Trennung der Sicherheitsdomänen zwischen Zahlungsmittel und AGE-Applikation können die Zertifikate beim Zahlungsvorgang nicht sofort von der OBU-bzw. RSE-AGE-Applikation verifiziert werden, sondern erst nach der Einreichung einer Forderungsdatei beim Acquirer, der in seiner Dienstleisterfunktion gegenüber dem Emittenten über die entsprechenden Schlüssel verfügt.

Hinsichtlich ihrer Struktur sind die Nachrichten und Daten an der Schnittstelle zwischen dem Dienstanbieter und der Verrechnungsstelle ähnlich zu denjenigen, die vorstehend schon für die Schnittstelle zwischen der RSE und dem Dienstanbieter bzw. dem CC beschrieben wurden.

Beispielsweise täglich schickt der Dienstanbieter eine Nachricht der Klasse Advice, die ein sog. Fee_Claim_File enthält, an den Acquirer. Dieses File besteht aus einem Header_Record, der durch ein Data_Object vom Typ 6 bestimmt ist, und den tatsächlichen Fee Claims, d.i. einzelnen Gebührenvorgängen, die durch Data_Objects vom Typ 7 oder 8 repräsentiert werden.

Die richtige oder unrichtige Übertragung wird von dem Acquirer mittels einer Nachricht der Advice Response-Klasse bestätigt, und diese Nachricht enthält eines oder mehrere Data_Objects vom oben definierten Typ 5.

Die Data_Objects der Typen 6, 7 und 8 sind durch die folgenden Strukturen und Inhalte definiert:

Das Data_Object vom Typ 6 enthält die Header Information für das Fee Claim File, das vom Dienstanbieter bzw. dessen Zentralcomputer an den Acquirer übersandt wird. Das Diagramm 11 zeigt die Struktur des Data_Objects vom Typ 6.

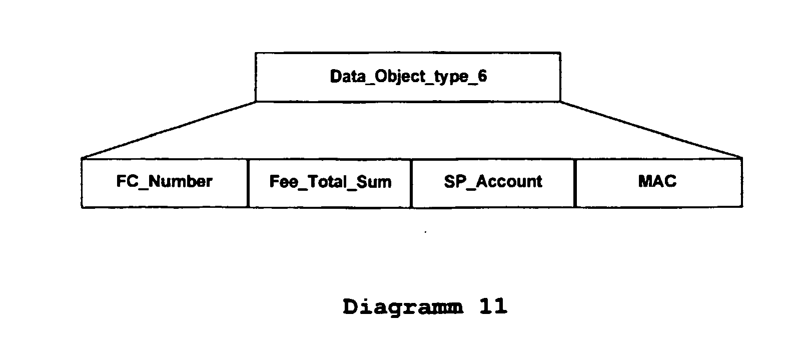

Dieser Data_Object Typ besteht aus den folgenden Datenelementen:
- FC_Number:: Dieses Datenelement enthält die Anzahl der vor- und nachbezahlungsbezogenen Fee Claim_Records im Fee Claim File und bestimmt insofern die Anzahl von Data_Objects vom Typ 7 und 8 in der Nachricht.
- Fee_Total_Sum:: Das Datenelement Fee_Total_Sum enthält die Summe aller Gebührenbeträge, die in dem entsprechenden Datenelement der Fee Claim Record Data Objects vom Typ 7 oder 8 enthalten sind.
- SP_Account:: Die Kontonummer (Account Number) des Dienstanbieters für die Gutschrift des Fee_Total_Sum Betrages.
- MAC:: Dieses Datenelement enthält den Message Authentication Code.

Die Datenelemente FC Number und Fee Total Sum sind beides 4-Byte Zahlen. Das Datenelement SP_Account ist eine 10-Byte Zahl. MAC ist eine 8-Byte Hexadezimal-Zahl.

Das Data Object vom Typ 7 enthält einen vorbezahlungsbezogenen Fee_Claim_Record des Fee Claim File, das vom Dienstanbieter an den Acquirer gesandt wird. Die Struktur des Data_Objects vom Typ 7 ist im Diagramm 12 gezeigt.

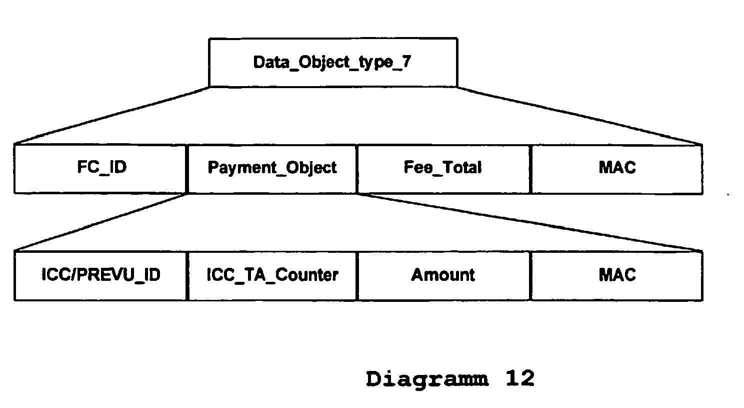

Dieser Data-Object Typ besteht aus den folgenden Datenelementen:
- FC_ID:: Dieses Datenelement zählt durchgehend die Fee_Claim Records des Fee Claim File. Das FC_ID Datenelement ist eine 4-Byte Zahl.
- PO:: Dieses Datenelement ist z.B. eine 20-Byte Information, entsprechend der Definition bei Diagramm 7, bezüglich des Data-Objects vom Typ 2.
- Fee_Total:: Dieses Datenelement enthält den Gesamtbetrag aus allen einzelnen Gebühren, die bezüglich desselben Payment Object von dem Verfügungsbetrag in einer OBU abgezogen worden sind. Das Fee_Total Data Element ist eine 2-Byte Zahl.
- MAC:: Dieses 8-Byte lange Datenelement enthält einen Message Authentication Code.

Das Data_Object vom Typ 8 enthält einen nachbezahlungsbezogenen Fee_Claim_Record des Fee Claim File, das vom Dienstanbieter zum Acquirer zu senden ist. Die Struktur des Data_Object vom Typ 8 ist im Diagramm 13 gezeigt.

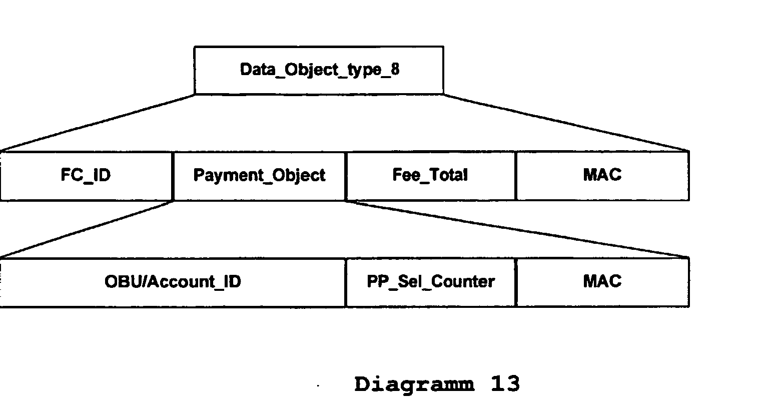

Dieser Data_Object Typ besteht aus den folgenden Datenelementen:
- FC_ID:: Dieses Datenelement hat die gleiche Bedeutung wie bei dem Data_Object vom Typ 7, Diagramm 12.
- PO:: Dieses Datenelement ist z.B. eine 18-Byte Information, entsprechend der Definition beim Data_Object vom Typ 3, Diagramm 8.
- Fee_Total:: Dieses Datenelement enthält die Gesamtsumme aller Gebühren, die in einer OBU bezüglich des gleichen PO abgezogen wurden. Das Datenelement Fee_Total ist eine 2-Byte Zahl.
- MAC:: Dieses 8-Byte lange Datenelement enthält einen Message Authentication Code.

Alle mit der Erfüllung der Zahlungsgarantie einhergehenden Vorgänge zur Veranlassung von Gutschriften für Dienstanbieter und Lastschriften für Emittenten sind im nationalen und internationalen Bankenverkehr übliche Abläufe im Zahlungsverkehr und brauchen daher an dieser Stelle nicht wieiter erläutert werden.

Es wird jedoch angenommen, daß die Weiterleitung der für den Zahlungsausgleich relevanten Informationen zu Gut- und Lastschriften nach dem in der deutschen Kreditwirtschaft üblichen Datenträgeraustauschverfahren (DTA-Verfahren) erfolgt.

Neben dem für den Zahlungsverkehr relevanten Datenaustausch zwischen Acquirern und Emittenten kann es im Falle des Einsatzes vorbezahlter Zahlungsmittel erforderlich sein, Lade- und Entladevorgänge betreffende Daten zur Überwachung der Systemsicherheit (bezogen auf das Zahlungssystem) bereitzustellen. Analog zur Organisation dieser Aufgaben für die universelle Geldbörse von Finanzinstituten ist gemäß der Erfindung vorgesehen, daß diese Überwachung vom Emittenten durchgeführt wird.

Zu diesem Zweck führt der Emittent für jedes entsprechende Zahlungsmittel ein Schattensaldo, das sich aus der Aufrechnung von Ladebeträgen gegenüber Bezahlbeträgen ergibt. Die Ladebeträge müssen dann von den Ladeagenturen oder - terminals an den Emittenten in Form sog. Lade-Avisen gemeldet werden. Die gegenzurechnenden Bezahlbeträge werden im Rahmen der Verarbeitung der oben beschriebenen Fee Claim Files ermittelt und an den Emittenten weitergeleitet.

Das Schattensaldo ist genau einem konkreten Zahlungsmittel zugeordnet, offenbart aber keinen Personenbezug, da die Zahlungsmittel-ID nicht personenbezogen ist. Im allgemeinen ist ein Schattensaldo immer positiv, und temporäre Ausnahmen sind nur dann möglich, wenn Lade-Avisen gegenüber Bezahltransaktionen verspätet verarbeitet werden. Dauerhaft negative Schattensalden dagegen deuten auf einen ernstzunehmenden Angriff auf das gesamte vorbezahlte Zahlungssystem hin.

Gemäß der Erfindung werden die Lade-Avisen in einem Load_File an den Emittenten gesendet. Diese Datei besteht aus einem Header_Record, der ein Data_Object vom Typ 9 bestimmt, und den eigentlichen Load_Records, d.i. den einzelnen Lade- und Entladebeträgen, die durch Data_Objects vom Typ 10 und 11 repräsentiert werden.

Das Data_Object vom Typ 9 ist strukturell identisch mit dem Data_Object vom Typ 6 und enthält die Header Information zum Load File.

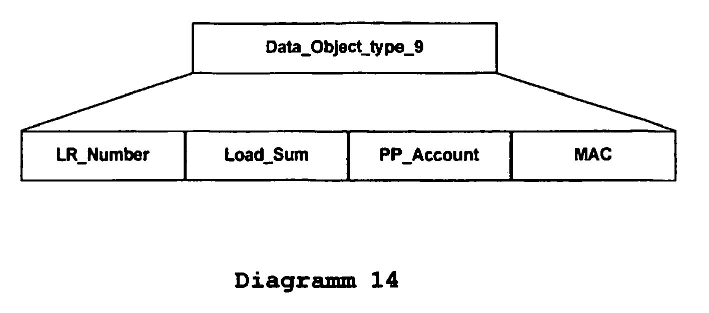

Dieser Data_Object Typ besteht aus den folgenden Datenelementen:
- LR_Number:: Dieses Datenelement enthält die Anzahl der Load_Records des Load_File und legt somit die Anzahl der Data_Objects vom Typ 10 und 11 fest.
- Load_Sum:: Dieses Datenelement entspricht der Summe aller Lade- und Entladebeträge, die in den folgenden Load_Records bezüglich der jeweiligen Zahlungsmittel enthalten sind.
- PP_Account:: Einer Vielzahl an vorbezahlten Zahlungsmitteln (z.B. elektronischen Geldbörsen) ist i.a. ein einziges Poolkonto zugeordnet, auf das die mit den entsprechenden Zahlungsmitteln getätigten Bezahlbeträge belastet werden, die von Dienstanbietern zur Gutschrift beim Acquirer eingereicht werden.
- MAC:: Dieses Datenelement enthält einen Message Authentication Code.

Die Datenelemente LR_Number und Load_Sum sind 4-Byte Zahlen. Das Datenelement PP_Account ist eine 10-Byte Zahl. Der MAC ist eine 8-Byte Hexadezimal-Zahl.

Das Data_Object vom Typ 10 enthält einen Load_Record des Load_File über einen Ladevorgang (z.B. zum Laden einer elektronischen Geldbörse), der an den Emittenten übertragen wird.

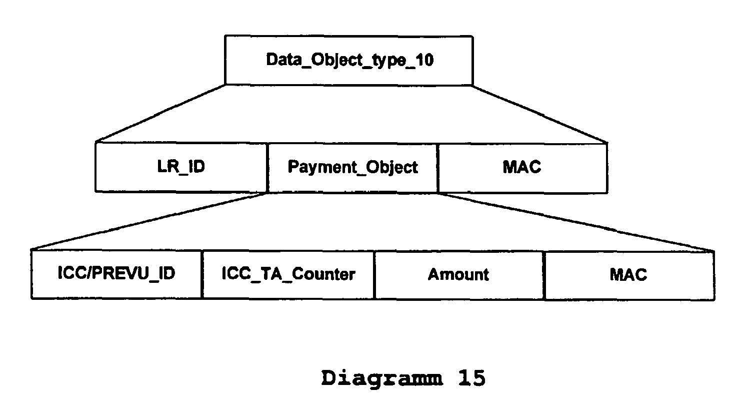

Dieser Data_Object Typ besteht aus den folgenden Datenelementen:
- LR_ID:: Dieses Datenelement zählt durchgehend die Load_Records des Load_File und ist eine 4-Byte Zahl.
- Payment_Object:: Dieses Datenelement ist z.B. eine 20-Byte Information, die das Laden eines Verfügungsbetrages in ein vorbezahltes Zahlungsmittel anzeigt. Es kann inhaltlich aus den gleichen vier Elementen bestehen, die auch für den Bezahlvorgang über die Luftschnittstelle bzw. die Einleitung in den Zahlungsverkehr für das Data_Object vom Typ 2 definiert sind.
- MAC:: Dieses Datenelement enthält einen Message Authentication Code.

Entladevorgänge, d.h. das Entladen von vorbezahlten Zahlungsmitteln, werden durch Data_Objects vom Typ 11 gemeldet, die strukturell identisch zu den Data_Objects vom Typ 10 sind.

Emittent ↔ Ladeinstanz/Verkaufsagentur ↔ Zahlungsmittel/On-Board Equipment

Die in diesem Zusammenhang festzulegenden Schnittstellen betreffen primär den Vertrieb von Zahlungsmitteln und On-Board Units, das Auf- oder Entladen von vorausbezahlten Zahlungsmitteln und die damit einhergehenden Kundenbeziehungen und brauchen daher hier nicht weiter erläutert zu werden.

Es muß jedoch darauf hingewiesen werden, daß beim Einsatz von multifunktionalen Chipkarten als Trägermedien für Zahlungsmittel und/oder AGE-Applikationen die schon angesprochenen technischen Abhängigkeiten zwischen verschiedenen Karten- und Applikationsemittenten und die damit einhergehenden sicherheitstechnischen Maßnahmen auch auf die rechtlich/organisatorischen Beziehungen abgebildet werden müssen.

Die Strukturen der an dieser Schnittstelle übertragenen Nachrichten und Datenobjekte entsprechen im wesentlichen den vorstehend schon beschriebenen.

### On-Board Equipment ↔ AGE-Kontrollstelle

Die Überprüfung des Vorhandenseins eines Zahlungsnachweises in einem On-Board Equipment durch eine mobile oder stationäre AGE-Kontrollstelle erfolgt in einer besonders bevorzugten Ausführungsform der Erfindung weitestgehend analog zum eigentlichen Zahlungsvorgang mit den schon definierten Protokollschritten:
- T: Tender
Zuerst wird die Bezahlvorrichtung (OBE) mit Angaben zur Funktionalität der AGE-Kontrollstelle und zum zugeordneten Dienstanbieter (Beacon Service Table) versorgt. Auch hier sind ähnlich wie im Falle eines Zahlungs-RSE zusätzliche Statusabfragen (List of Boolean Challenges) möglich.
- R: Registration
Bevor das OBE seinen Zahlungsnachweis präsentiert, muß aus Gründen des Datenschutzes die Authentizität der AGE-Kontrollstelle verifiziert werden. Zu diesem Zweck wird eine Zufallszahl (OBE Random Challenge) generiert und zusammen mit der Gruppenschlüsselnummer sowie einer Angabe des für die letzte Zahlung (des entsprechenden Service-Levels) verwendeten Zahlungssystems an die AGE-Kontrollstelle übertragen. Ebenfalls können dabei Antworten (List of Boolean Responses) zu den booleschen Abfragen übermittelt werden.
- RQ: Receipt Request
Damit die AGE-Kontrollstelle durch das OBE authentisiert werden kann, werden die RSE-Identifikation, Datum und Uhrzeit der Kontrolle an das OBE gesendet. Diese Nachricht ist mit einem Authentikator versehen, der wie schon beschrieben von einem "Sessionkey" abhängt. Dabei wird zur späteren OBE-Authentisierung eine weitere Zufallszahl (RSE Random Challenge) mitgeschickt.
- RP: Receipt Presentation
Nach Erhalt einer RQ-Nachricht wird zuerst die AGE-Kontrollstelle vom OBE authentisiert, indem der Authentikator verifiziert wird. Danach wird in einer authentisierten Nachricht entweder (im Falle eines geschlossenen Systems) das zuletzt erhaltene, verschlüsselte Eintrittsticket des entsprechenden Service-Levels präsentiert oder (in einem offenen System) die zuletzt getätigte Zahlung (Enforcement-Quittung, ohne Verschlüsselung) bzw. im Falle einer gescheiterten Zahlung der letzte Zahlungsversuch (Preliminary Ticket) nachgewiesen.

- RC: Receipt Confirmation
Nach Empfang und Prüfung des Receipt Presentation signalisiert die AGE-Kontrollstelle ihr Prüfungsergebnis in einer verschlüsselten Nachricht an das OBE. Im Falle einer negativen Prüfung können die festgestellten Daten von der AGE-Kontrollstelle dann direkt zur Beweissicherung und nachträglichen Gebührenzahlung aufbereitet bzw. weitergeleitet werden. Optional können mit der Nachricht (verschlüsselt) boolesche Markierungen übertragen werden.
Prinzipiell könnte darüber hinaus auch die AGE-Kontrollstelle in der Lage sein, aufgrund der Identifikationsdaten zum eingesetzten Zahlungsmittel eine Sperrenprüfung durchzuführen. Falls dabei ein Sperrvermerk für das eingesetzte Zahlungsmittel erkannt würde, könnten einerseits dem OBE eine Aufforderung zur Sperrung des Zahlungsmittels mitgeteilt und andererseits die Identifikation des eingesetzten Zahlungsmittels zur Aktualisierung von Sperrenlisten aufbereitet und weitergeleitet werden.

Ein Zahlungsnachweis ist aufgrund der Sicherheitsabläufe im Übertragungsprotokoll nur dann möglich, wenn im OBE zum Zeitpunkt des Nachweises das AGE-Anwendungs-SAM aktiv ist. Im Falle der OBE-Realisierungsoptionen II und IV kann somit der Zahlungsnachweis dann scheitern, wenn die Chipkarte mit der AGE-Applikation zum Kontrollzeitpunkt nicht im OBE steckt.

Weitere Merkmale und Vorteile der Erfindung ergeben sich aus der folgenden Beschreibung eines Systems und des damit durchführbaren Verfahrens sowie aus den Zeichnungen, auf die Bezug genommen wird. Es zeigen:
- Figur 1: ein Blockdiagramm eines aus einem Abfragesender und einem Transponder bestehenden erfindungsgemäßen Systems;
- Figur 2: eine verallgemeinerte Seitenansicht einer typischen Anordnungsart eines Systems gemäß Figur 1;
- Figur 3: ein Blockschaltbild einer Transponder- und Abfragesenderanordnung zur Verwendung in einem System gemäß den Figuren 1 und 2;
- Figur 4: ein detaillierteres Blockschaltbild des Transponders gemäß Figur 3 zur Darstellung der Transponderkomponenten und einer Smartcard, die mit dem Transponder kommunizieren kann; und
- Figur 5: ein allgemeines Zeitdiagramm zur Darstellung des mit der Transponder/Smartcard-Anordnung durchführbaren Verfahrens.

In den verschiedenen Figuren werden gleiche Komponenten mit den gleichen Bezugszeichen und Symbolen versehen.

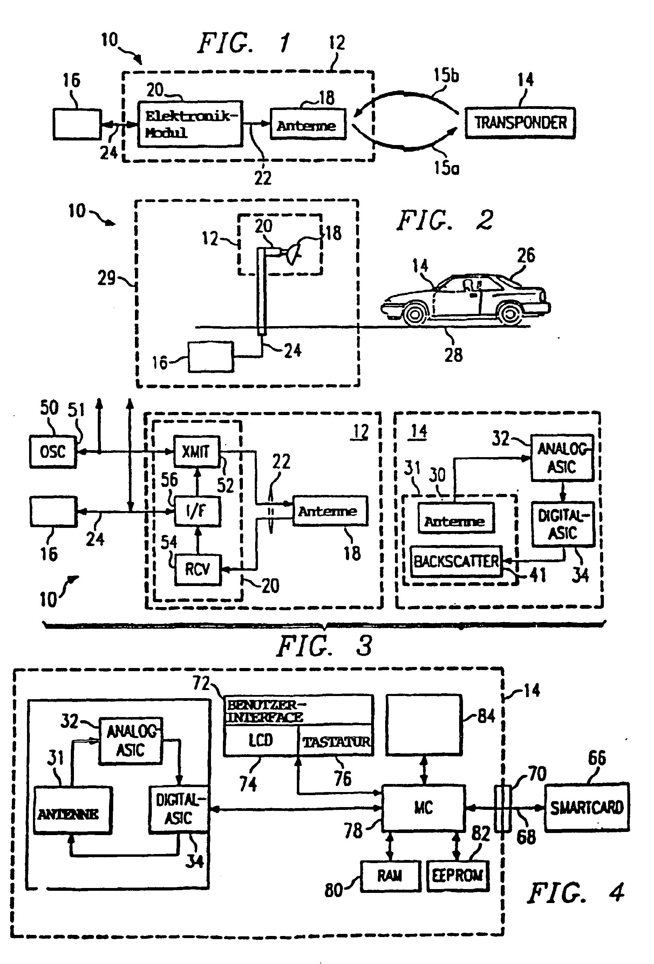

Figur 1 zeigt ein Blockdiagramm eines Systems 10 zur automatischen Gebührenerhebung am Beispiel einer Gebührenerhebung für die Straßenbenutzung, bei welchem ein Abfragesender 12 mit einem transportablen Transponder 14 durch Absenden eines Abfragesignals, einer Transaktionsabfrage und einer Transaktionsbestätigung 15a an den Transponder 14 kommuniziert, der ein Antwortsignal und eine Transaktionsantwort 15b an den Abfragesender 12 zurückschickt. Bei einem typischen AGE-System 10 kann der Abfragesender 12 relevante Teile dieser Information einem Zentralrechner (Host) 16 zur Verwaltung und Verarbeitung von Abrechnungsinformationen bezüglich des Transponders 14 und der zugeordneten Smartcard 66 (siehe Figur 4) zuleiten.

Wie in Figur 2 gezeigt, sind Fahrspuren 28 einem Verkehrsregelungspunkt, wie etwa einer Gebühreneinzugsstelle 29, zugeordnet. Dabei hat jede Fahrspur 28 einen ihr zugeordneten Abfragesender 12. Jeder Abfragesender 12 initiiert eine Kommunikation und hält diese über eine Funkverbindung mit Transpondern 14 aufrecht, die an Fahrzeugen 26 vorhanden sind, welche sich auf der dem Abfragesender 12 zugeordneten Fahrspur 28 bewegen. Die Abfragesender 12 können einheitliche innere elektrische Parameter haben, wie z.B. Abfragesenderfahrspurposition, Abfragesendesteuerparameter und Abfragereferenzfrequenz. Bei dieser Anwendung ist die Aufgabe des Abfragesenders 12, einen Transponder 14 anzustoßen oder zu aktivieren, ihn abzufragen oder den Transponder 14 zur Abgabe spezifischer Informationen anzuregen, und im Falle eines zulässigen Datenaustausches, diese Tatsache dem Transponder 14 zu bestätigen. Wie in den Figuren 1 und 2 gezeigt, hat der Abfragesender 12 eine Antenne 18, welche bevorzugt oberhalb der Straße befestigt ist. Die Abfragesenderelektronik 20 ist mit der Antenne 18 über ein geeignetes Kabel verbunden, beispielsweise ein Funkkoaxialkabel 22.

Der Abfragesender 12 kommuniziert drahtlos mit dem Transponder 14 durch Senden phasenkodierter und modulierter Signale, gefolgt von einem kontinuierlichen Hochfrequenzwellensignal. Der Transponder 14 kann dem Abfragesender 12 durch moduliertes Zurücksenden des kontinuierlichen Hochfrequenzwellensignals antworten, wie es beispielsweise in der DE-R 37 74 015 beschrieben ist. Weitere Einzelheiten der anschließenden Kommunikation zwischen dem Abfragesender 12 und dem Transponder 14 werden weiter unten beschrieben. Eine mögliche Aufgabe des Zentralrechners 16 besteht darin, die Operation des Abfragesenders 12 und die peripheren Funktionen der Gebühreneinzugsstelle zu steuern. Derartige periphere Funktionen können zur Steuerung von Verkehrsschranken und anderen Fahrbahnkontrollausrüstungen wie Kameras und Verkehrslichter dienen. Weitere periphere Funktionen könnten Kommunikationen zwischen Abfragesendern 12 und mit einem weiteren, nicht dargestellten Rechenzentrum (z.B. eines Acquirers) sein, das Abbuchungsinformationen verarbeitet. Die Anbindung 24 zwischen des Abfragesenders 12 an den Zentralrechner 16 kann über Ethernet, Tokenring, RS 232, RS 422 oder anders erfolgen.

Figur 2 zeigt eine typische Anordnung eines Systems 10. In dieser Figur fährt ein Fahrzeug 26 auf einer Fahrspur 28 und nähert sich dadurch der Antenne 18. Der Transponder 14 ist entweder auf oder innerhalb des Fahrzeuges 26 angeordnet. Bevorzugt ist der Transponder 14 an der Frontscheibe des Fahrzeugs befestigt. Bei bestimmten Anwendungen, wie etwa bei außergewöhnlich großen Fahrzeugen, können andere Anbringungsorte, wie etwa die Stoßstange eines LKW, geeignet sein, um die Variation der Anbringungshöhe des Transponders 14 zu reduzieren. Wie in der Figur gezeigt, nähert sich das den Transponder 14 tragende Fahrzeug 26 dem Abfragesender 12 der Gebührenerhebungsstelle 29. Weitere Einzelheiten bzgl. der Kommunikation zwischen dem Transponder 14 und dem Abfragesender 12 werden im folgenden näher behandelt werden. Ebenfalls werden die Komponenten des Abfragesenders 12 und des Transponders 14 mit größerer Genauigkeit beschrieben.

Figur 3 zeigt ein Blockdiagramm der Hauptkomponenten des Systems 10. Zunächst wird der Transponder 14 unter Bezugnahme auf Figur 4 im Zusammenhang mit den Figuren 2 und 3 beschrieben. Das System 10 umfaßt bevorzugt Richtantennen 18, wobei jede Antenne 18 auf eine ihr zugeordnete Fahrzeugspur 28 ausgerichtet ist. Ein oder mehrere Fahrzeuge 26 können auf jeder Fahrspur 28 fahren, wobei jedes Fahrzeug 26 einen oder mehrere Transponder 14 aufweist. Jeder Transponder 14 umfaßt bevorzugt: eine Antenne 30, ein Analog- oder Analog/Digital-ASIC 32, ein digitales ASIC 34 und einen Modulationsreflektor 41. Die Antenne 30 und der Modulationsreflektor 41 können eine einzige integrierte Antenne 31 bilden. Bevorzugt sind das ASIC 32 und das ASIC 34 in einem einzigen ASIC integriert.

Unter weiterer Bezugnahme auf Figur 3 ist erkennbar, daß die Transponderantenne 30 zum Empfang von Hochfrequenzübertragungen von dem Abfragesender 12 betrieben wird. Das analoge ASIC 32 konvertiert ein von der Transponderantenne 30 zugeführtes Signal in eine Spannung, die bei Überschreiten eines Schwellenwertes den Transponder 14 aktiviert. Bevorzugt erfaßt das analoge ASIC 32 eine Hochfrequenzmodulation, die über ein Signal von der Transponderantenne 30 gelagert ist, und wird auch nur dann den Transponder 14 aktivieren, wenn diese spezielle Modulationsfrequenz vorhanden ist. Dadurch ist der Transponder 14 relativ immun dagegen, von störenden Hochfrequenzübertragungen aktiviert zu werden, die nicht von dem Abfragesender 12 stammen, sondern er wird nur dann aktiviert, wenn eine spezielle Frequenz von dem Abfragesender 12 übertragen wird. Der Spannungsschwellenwert kann eingestellt werden.

Wie Figur 3 weiterhin zeigt, verarbeiten das analoge ASIC 32 und das digitale ASIC 34 typischerweise das von einem Transmitter 52 erhaltene Fragesignal und bilden die notwendigen Antwortdaten. Anschließend übergibt das digitale ASIC 34 einen formatierten Antwortdatenstrom an den Modulationsreflektor 41. Das ASIC 34 kann ein einfaches digitales System, das ein festes Format verwendet, oder ein aufwendigeres digitales Verarbeitungssystem sein, welches eine Vielzahl von Optionen aufweisen kann. Für ASIC 34 sind viele Funktionen denkbar, beispielsweise Datenspeicherung, Transkationshistorie, Datenaustauschprotokolle und Batteriekapazitätwarnsignale. Der Modulationsreflektor 41 wird moduliert durch Änderung seiner sichtbaren Wellenlänge - bevorzugt zwischen 1/4 und 1/2 der Trägerwellenlänge λ. Wenn die sichtbare Wellenlänge des Modulationsreflektors 41 1/2λ beträgt, reflektiert die Antenne 30 einen großen Teil der einfallenden Trägerenergie. Wenn der Modulationsreflektor 41 eine sichtbare Wellenlänge von 1/4λ aufweist, reflektiert er nur sehr wenig der einfallenden Trägerenergie. Wie allgemein bekannt, kann ein Schalten der Antenne zwischen 1/2λ und 1/4λ durch Verbinden oder Trennen von zwei 1/4-Stichleitungen durchgeführt werden. Bei der beschriebenen Ausführungsform liegt die Änderung des Reflektionsquerschnitts bevorzugt im Bereich von 45 cm² und 100 cm². Durch Variieren des Reflektionsquerschnitts gemäß dem spezifischen Format werden Daten vom Transponder 14 zum Abfragesender 12 geschickt. Für die hierfür notwendige Betriebsenergie kann im Transponder 14 eine Batterie vorhanden sein. Alternativ kann der Transponder 14 aber auch seine Betriebsleistung direkt von dem Hochfrequenzsignal erhalten, wie es beispielsweise in der DE-R 37 88 348 offenbart ist. Typischerweise können Transponder 14 in einer kleinen, kreditkartengroßen Bauform realisiert sein und können dadurch leicht mitgeführt werden.

Nachdem nun die Komponenten des Transponders 14 beschrieben worden sind, wird unter weiterer Bezugnahme auf die Figur 3 eine bevorzugte Ausführungsform des Abfragesenders 12 behandelt. Der Abfragesender 12 ist an einem spezifischen Ort angeordnet, an dem ein Datenaustausch gewünscht ist, beispielsweise eine Gebührenzahlstelle. Das System 10 kann einen allgemeinen Referenzoszillator 50 enthalten, der an seinem Ausgang 51 eine Referenzträgerwelle zur Koordination zwischen den Abfragesendern 12 erzeugt. Jeder Abfragesender 12 hat eine Richtantenne 18 und einen Sender 52, welcher ein Triggersignal mit ausreichender Feldstärke und vorgewählter Entfernung aussendet, um einen Transponder 14 anzustoßen oder zu aktivieren, der von einem Fahrzeug 26 auf der dem Abfragesender 12 zugeordneten Fahrspur 28 getragen wird.

Figur 4 zeigt ein Blockdiagramm einer bevorzugten Ausführungsform eines Transponders 14 im Zustand der Kommunikation mit einer Smartcard 66 über eine Schnittstelle 68. Die Smartcard 66 wird in die Chipkartenkontaktiereinheit 70 eingeschoben, so daß eine Kommunikation über die Schnittstelle 68 erfolgen kann. Der Transponder 14 umfaßt eine Benutzerschnittstelle 72, welche wiederum eine Flüssigkristallanzeige 74 und eine Tastatur 76 aufweist. Die Flüssigkristallanzeige 74 wird bevorzugt dazu verwendet, dem Benutzer den im Transponder 14 gespeicherten Geldbetrag oder die zuletzt abgezogene Gebühr darzustellen. Nachdem ein Mikrocontroller 78 des Transponders 14 geprüft hat, daß die Smartcard 66 mit dem Transponder 14 kompatibel ist, kann der Mikrocontroller 78 optional einen "Autorisierungsprozeß" starten, bei dem der Benutzer seine persönliche Identifikationsnummer (PIN) über die Tastatur 76 eingibt. Zur Sicherstellung, daß die Smartcard 66 mit dem Transponder 14 verwendet werden darf, können aber auch andere "Autorisierungsverfahren" verwendet werden. Durch die Eingabe der PIN, die vom Mikrocontroller 78 des Transponders 14 an die Smartcard 66 übergeben und von dieser mit einem in ihr gespeicherten Identifikationswert verglichen wird, wird sichergestellt, daß Geldbeträge oder andere Daten von der Smartcard 66 nur autorisiert abgegeben werden. Bevorzugt werden die zuvor genannte Prüfung und die "Autorisierung" über die Schnittstelle 68 durchgeführt, welche vorzugsweise eine serielle Schnittstelle ist.

Bei einer speziellen Ausführungsform der Erfindung kann die Smartcard 66 Daten übertragen, die einen Geldbetrag repräsentieren, der bevorzugt mehrfach größer ist als der typischerweise von dem Transponder 14 abzugebende Gebührenbetrag. In diesem Vorgang werden Daten zur Betragshöhe der Transaktion, zum Dienstanbieter, zur Smartcardidentifikation und zu anderen Informationen erzeugt.

Anfänglich wird also eine Information von der Smartcard 66 erzeugt und in dem Transponder 14 abgelegt. Die aktuell von der Smartcard 66 erzeugte Information wird Smartcardzertifikat genannt. Dieses Smartcardzertifikat umfaßt gewöhnlich: 1) einen Bereich unverschlüsselter Daten, die den Ort, die Zeit, die Smartcardnummer oder andere für den Systemverwalter notwendige Informationen zur Sicherstellung, daß ein gültiger Vorgang stattgefunden hat, repräsentieren; 2) einen verschlüsselten Bereich, der sicherheitsrelevante und andere Informationen umfaßt. Falls der Mikrocontroller 78 in der Lage ist, erfolgreich diesen verschlüsselten Bereich zu lesen, wird das Zertifikat im Transponder 14 unter Verwaltung des Mikrocontrollers 78 gespeichert. Dieses Smartcardzertifikat kann im RAM 80 oder im EEPROM 82 abgelegt werden. Der Vorteil einer Abspeicherung im EEPROM liegt in den permanenten, nicht flüchtigen Speichercharakteristiken eines EEPROM.

Aus Sicherheits- und Datenschutzgründen ist eine Verschlüsselungs-/Entschlüsselungseinrichtung 84 vorhanden, die mit dem Mikrocontroller 78 kommuniziert. Diese Verschlüsselungs/Entschlüsselungseinrichtung 84 wird von und zur Smartcard 66 übertragene Daten ver- und entschlüsseln bzw. authentisieren. Dadurch wird es Personen verwehrt, durch unerlaubte Eingriffe in den Transponder 14 die Verwendung der Smartcard 66 zu umgehen und so den im Transponder 14 abgespeicherten Geldbetrag zu erhöhen. Es wird dadurch ebenfalls nicht möglich sein, einen nachträglich vergrößerten Geldbetrag von dem Transponder 14 in die Smartcard 66 rückzuübertragen.

Bevorzugt bezieht der Transponder 14 seine Energie aus Batterien, kann sie aber auch vom Fahrzeug oder aus anderen Quellen erhalten. Zusätzlich kann der Transponder 14 in ein Fahrzeug oder in ein anderes System integriert sein.

Die Smartcard 66 kann von einem Benutzer zu einem Gerät ähnlich einem Geldautomaten gebracht werden, in welchem Geld eingegeben werden kann und diesen Geldbetrag repräsentierende Werteinheiten oder einen anderen Geldbetrag der Smartcard 66 übertragen werden. Alternativ kann Geld von einem Konto abgehoben oder einem Kreditkonto abgezogen werden, und es können diesen Geldbetrag repräsentierende Daten oder ein anderer Geldbetrag in die Smartcard 66 geladen werden. Nachdem diese Daten von dem externen Ladegerät der Smartcard übergeben worden sind, eingegeben worden sind, kann der Benutzer die Smartcard 66 als elektronische Geldbörse mit sich führen und sie in Verbindung mit seinem Transponder 14 oder vielleicht anderen Anwendungsmöglichkeiten benutzen.

Der Vorteil einer derartigen Verwendung einer Smartcard liegt darin, daß sie dem Benutzer einen gewissen Grad an Geheimhaltung bzw. Privatsphäre verleiht. Bei Systemen, bei denen externe Geräte wie Geldautomaten verwendet werden, kann beispielsweise Bargeld in diese Maschine direkt eingegeben werden, wodurch eine Identifikation des Benutzers nicht notwendig ist.

Bei einer typischen Zahltransaktion nach Eintritt in die Gebührenerhebungszone eines offenen AGE-Systems oder am Ausgang aus einem geschlossenen System (z.B. Parkhaus) wird der Abfragesender 12 den Transponder 14 befragen. Dies beginnt mit einer Annäherungs- oder Weckmeldung zur Warnung des Transponders 14, daß er sich in der Gebührenerhebungszone befindet. Das Annäherungssignal kann bereits Informationen zur Art, zum Service und zur Lokalität der Gebührenerhebungsstelle enthalten (Beacon Service Table). Nach Empfang des Annäherungssignals durch den Transponder 14 und seiner Aktivierung zeigt der Transponder 14 durch Senden eines Bereitsschaftssignals an den Abfragesender 12 seine Bereitschaft zur Abwicklung einer Transaktion an. Dieses Bereitschaftssignal kann seinerseits Informationen zur Art und zum Funktionsumfang des Transponders enthalten (Vehicle Service Table).

Dann schickt der Abfragesender 12 ein Abfragesignal (T), das Angaben zu den vom Dienstanbieter akzeptierten Verträgen und Zahlungsverfahren (Kredit- oder Debitkarte, Geldbörse etc.) und evtl. weitere Informationen zur Gebührenerhebungsstelle enthält.

Mit einem Antwortsignal (R) informiert der Transponder 14 den Abfragesender 12 über die Klasse des Fahrzeugs 26, über Zahlungssonderkonditionen (z.B. Behindertentarif, Großkunde, hoheitliches Fahrzeug etc.), über den Gültigkeitszustand von Transponder bzw. Zahlungsmittel (expiry date), über den Typ des einzusetzenden Zahlungsmittels sowie ein evtl. vorhandenes Eintrittsticket. Weiterhin enthält das Antwortsignal Daten zum Verschlüsselungsverfahren (z.B. Gruppenschlüsselnummer) sowie eine vom Transponder 14 oder von der Smartcard 66 erzeugte Zufallszahl zur Authentisierung des Abfragesenders 12. Zusätzlich können in dem Antwortsignal Informationen zum Zeitpunkt der letzten Zahlung übertragen werden, z.B. wenn diese an der gleichen Gebührenerhebungsstelle erfolgte.

Der Abfragesender 12 wird diese Information verarbeiten und eine Transaktionsabfrage (PD) zur Gebührenforderung zurücksenden. Der Transponder 14 wird dann einen geeigneten Moment finden, um von den im Transponderspeicher 80, 82 abgelegten, zur Zeit vorhandenen Gesamtwerteinheiten Abzüge durchzuführen. Alternativ kann auch ein System vorgesehen sein, bei dem die Gebührenhöhe abhängig ist von der gefahrenen Strecke. Dabei ist es bei dem Eintritt in diese gebührenpflichtige Zone lediglich notwendig, daß am Eintrittspunkt ein Ortscode bzw. ein Eintrittsticket im Transponder 14 gespeichert wird. Bei dieser Vorgehensweise wird bei der Annäherung an den Gebührenbereich der Transponder 14 seinen Eintrittspunkt dem Abfragesender 12 im Antwortsignal (R) angeben. Der Abfragesender 12 wird dann die sich daraus ergebende Gebühr berechnen und dem Transponder 14 in der Transaktionsabfrage (PD) mitteilen. Zu diesem Zeitpunkt wird die Gebührenhöhe von dem im Transponder 14 gespeicherten Betrag abgezogen werden, wie es bereits oben beschrieben wurde.

In Abhängigkeit vom aktuellen Zeitpunkt und aufgrund der im Antwortsignal (R) enthaltenen Daten zur Fahrzeugklasse, zu den Zahlungssonderkonditionen und zum Eintrittsticket (oder Eintrittsstelle, Aufenthaltsdauer etc.) wird im Abfragesender 12 die zu zahlende Gebühr ermittelt. Als nächstes sendet der Abfragesender 12 an den Transponder 14 eine Transaktionsabfrage (PD), welche die zu entrichtende Gebühr enthält sowie Datum und Uhrzeit des Transaktionszeitpunkts, einen Status oder Fehlercode, eine vom Transponder 12 generierte Zufallszahl zur Authentisierung des Transponders 14, sowie eine Information zu dem der Preisbestimmung zugrundegelegten Tarif. Ebenfalls enthält die Transaktionsabfrage einen Message Authentication Code (MAC), der einen verschlüsselten Sicherungscode unter Verwendung eines Verschlüsselungsverfahrens wie z.B. des Data Encryption Standards (DES) darstellt.

Nach Prüfung des in der Transaktionsabfrage (PD) enthaltenen MAC, d.h. der Authentisierung des Abfragesenders 12 durch den Transponder 14, wird der in den Transponderspeichern 80 bzw. 82 abgelegte Verfügungsbetrag um die geforderte Gebühr reduziert und das Verarbeitungsergebnis (Status) zusammen mit dem Smarcardzertifikat in einer Transaktionsantwort (P) an den Abfragesender 12 übertragen. Die Transaktionsantwort (P) enthält als Transponderzertifikat ebenfalls einen Message Authentication Code (MAC), der vom Transponder 14 erzeugt wird. Dieser wird vom Abfragesender 12 nach Empfang der Transaktionsantwort (P) geprüft, so daß im positiven Falle der Transponder 14 als authentisch gilt.

Zur Beendigung der Transaktion sendet der Abfragesender 12 anschließend eine teilweise verschlüsselte Transaktionsbestätigung (CR) an den Transponder 14, die mindestens eine Bestätigung der erfolgten Zahlung (Status), Informationen zum Zahlungsort und -zeitpunkt, eine Quittungsnummer und einen Authentikator (z.B. MAC) enthält. Nach der erfolgreichen Entschlüsselung der Transaktionsbestätigung (CR) werden die Quittungsdaten in den Transponderspeichern 80 bzw. 82 so abgelegt, daß sowohl eine zusätzliche Nutzerinformation als auch ein Zahlungsnachweis z.B. gegenüber einer Kontrollstelle erfolgen kann.

Die Übertragung des Smartcardzertifikats vom Transponder 14 an den Abfragesender 12 ermöglicht es den administrativen Einrichtungen, eine sogenannte "Schattenbilanz" zu pflegen oder eine ständige Zählung durchzuführen, wie oft eine ausgegebene Smartcard 66 belastet worden ist und daß die in der ausgegebenen Smartcard 66 vorhandene Geldmenge mit der auch tatsächlich in diese Smartcard 66 geladene Geldmenge übereinstimmt. Dies verletzt nicht notwendigerweise die Privatsphäre des Benutzers, da im allgemeinen der Name eines Benutzers nicht mit einer ausgegebenen Smartcard 66 in Verbindung gebracht werden kann. Jede Transaktion hat eine zugeordnete Transaktionsnummer, so daß bei der Erstellung der Buchführung aller Transaktionen fehlende Transaktionen leicht identifiziert werden können.

Durch die Übertragung des Annäherungssignals, des Bereitschaftssignals, des Abfragesignals, des Antwortsignals, der Transaktionsabfrage, der Transaktionsantwort und der Transaktionsbestätigung sowie durch Aktualisieren der Informationen direkt zwischen den Transponderspeichern 80, 82 und dem Abfragesender 12 anstatt direkt zwischen der Smartcard 66 und dem Abfragesender 12, werden Zeitprobleme bezüglich der Datenübertragung in einem Kommunikationsfenster, in welchem sich der Transponder innerhalb der Funkkeule des Abfragesenders aufhält, überwunden. Durch die umfangreichen Sicherheitsverfahren, die Protokolle und den ständigen Austausch zwischen dem Abfragesender 12 und dem Transponder 14, sind die mit bekannten "Kartengeld"-Anwendungen verbundenen Sicherheitsbedenken größtenteils überwunden.

Die Transaktionsgeschwindigkeit ist bei dieser Ausführungsform enorm verbessert verglichen mit Systemen, bei denen die Smartcard 66 direkt mit Abfragesendern 12 über einen Transpondermodulator und -demodulator kommuniziert. Dies liegt daran, daß die meisten Smartcards 66 langsame, serielle Standardschnittstellen haben. Es ist wichtig, daß die Datenübermittlungszeit zwischen dem Abfragesender 12 und dem Transponder 14 unabhängig ist von der Zugriffszeit zur Ermittlung und Speicherung von Daten aus und in die Smartcard 66. Durch das zeitweise Ablegen von Daten in den Speichern 80, 82 des Transponders 14 kann die langsamere Kommunikation zwischen dem Transponder 14 und der Smartcard 66 stattfinden, nachdem die Kommunikation mit der Gebühreneinzugsstelle beendet worden ist.

Bei einer speziellen Ausführungsform kann die gesamte in der Smartcard 66 gespeicherte Geldmenge dem Transponder 14 übertragen werden. Vor dem Herausziehen der Smartcard 66 kann die verbliebene Geldmenge wieder in die Smartcard 66 rückübertragen werden. Bei diesem Vorgang wird die Bedeutung der Verschlüsselung von im Transponder 14 gespeicherten Daten offensichtlich. Es ist eine wichtige Anforderung, daß es keiner Person ermöglicht wird, im Transponder 14 gespeicherte Daten zu manipulieren oder durch Rückübertragung des Geldes vom Transponder 14 zur Smartcard 66 eine vergrößerte Geldmenge zu erzeugen. Die Rolle der Verschlüsselungseinrichtung 84 liegt darin, diese Daten zu verschlüsseln und in ablauf- und manipulationssichere Verarbeitungssequenzen einzubetten.

Bevorzugt ist eine vollständige Datentransaktion innerhalb von 10 Millisekunden (ms) durchführbar. Während dieser Zeit wird der Transponder 14 dem Abfragesignal des Abfragesenders 12 antworten. Gleichzeitig wird dabei die Gebühr festgelegt und dem Transponder 14 übermittelt. Es werden auch die Zertifikate erzeugt und der richtige Betrag vom Verfügungsbetrag innerhalb des Transponders 14 abgezogen. Während die Erfindung eine Durchführung dieser Transaktionen innerhalb von 10 ms ermöglicht, können dies bekannte Smartcard/Transpondereinrichtungen typischerweise nur in 300 bis 500 ms bewerkstelligen. Nachdem die Transaktion beendet ist, kann der Transponder 14 die Daten in der Smartcard 66 aktualisieren, wenn die Kommunikationsgeschwindigkeit nicht mehr entscheidend ist, d.h. wenn sich der Transponder 14 nicht mehr innerhalb des Erfassungsbereichs des Abfragesenders 12 aufhält.

Die Smartcard 66 kann sowohl von verschiedenen Benutzern als auch für verschiedene Anwendungen verwendet werden. Dadurch wird in dieser Anwendung das Problem der aktuellen und direkten Abspeicherung von Geldbeträgen im Transponder 14 überwunden, was den Nachteil der eingeschränkten Mobilität hätte, da der Transponder 14 gewöhnlich in einem einzigen Fahrzeug vorhanden und nicht für andere Verwendungsmöglichkeiten nutzbar ist. In der vorliegenden Ausführungsform kann ein Benutzer seine Smartcard 66 mit seinem Transponder 14 für Gebührenentrichtungen verwenden, kann sie aber auch für Warenautomaten, öffentliche Telefoneinrichtungen oder andere Anwendungsmöglichkeiten einsetzen.

Diese Ausführungsform hat des weiteren den Vorteil des verbesserten Datenschutzes und der größeren Flexibilität im Vergleich zu "Money-on-Tag"-Systemen, in denen lediglich Geld direkt auf einem "Tag" abgespeichert ist. Bei derartigen im Stand der Technik bekannten Systemen sind spezielle Agenturen oder Systembetreiber mit Spezialgeräten erforderlich, um in den Transponder 14 Geld zu laden. In der vorliegenden Ausführungsform wird der Transponder 14 mit Geld aus der Smartcard 66 geladen, welche wiederum Geld über Automaten ähnlich Geldausgabeautomaten erhalten haben kann.

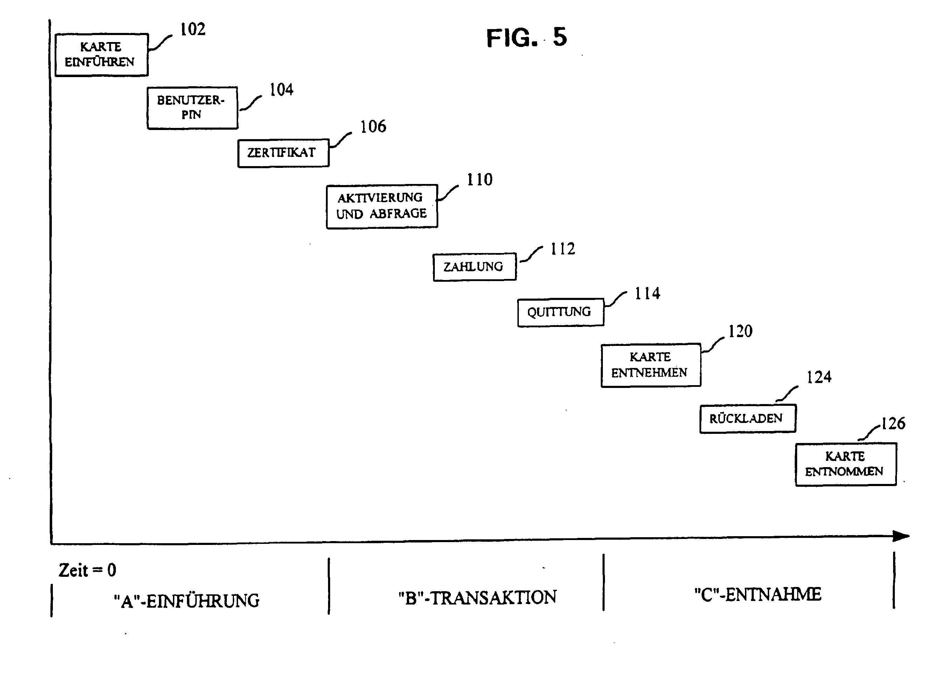

Figur 5 stellt ein Zeitdiagramm für eine Ausführungsform dieser Erfindung dar. Der Zeitablauf kann dabei in drei einzelne Phasen unterteilt werden. Die erste Phase "Phase A - Einführen" beschreibt den Teil der Benutzeroperation, wenn der Benutzer die Smartcard 66 in den Transponder 14 einführt. Dieser Schritt wird in Figur 5 mit dem Block 102 bezeichnet.

Als nächstes kann der Benutzer wahlweise eine persönliche Geheimnummer (PIN) in die Tastatur 76 eingeben, sofern der Transponder 14 entsprechend ausgestattet und das in der Smartcard 66 enthaltene Zahlungsmittel dies gestattet bzw. erfordert. Dies ist mit Block 104 bezeichnet. Nach der Eingabe wird die PIN vom Mikrocontroller 78 des Transponders 14 an die Smartcard 66 übergeben und von dieser mit einem in ihr gespeicherten Identifikationswert verglichen. Im positiven Fall ist die Autorisierung abgeschlossen, und es kann auf die zahlungsrelevanten Daten in der Smartcard 66 zugriffen werden. Abhängig vom gewünschten bzw. geforderten Sicherheitsgrad des Zahlungsmittels kann dieser Autorisierungsprozeß auch entfallen oder andersartig erfolgen.

Bei Block 106 erzeugt die Smartcard 66 ein Smartcardzertifikat, umfassend: 1) einen Teil unverschlüsselter Daten, die den Ort und die Zeit der Bereitstellung, die Smartcardnummer, die von der Smartcard heruntergeladene Geldmenge darstellenden Werteinheiten und evt. weitere, für den Zahlungssystembetreiber notwendige Informationen (z.B. Abbuchungszähler, Message Authentication Code) enthalten; und 2) einen verschlüsselten Bereich mit sicherheitsrelevanten und anderen Informationen, die zur Prüfung der Authentizität des Vorgangs benötigt werden. Falls der Mikrocontroller 78 diesen verschlüsselten Bereich erfolgreich interpretieren kann, wird das Zertifikat im Transponder 14 entweder im RAM 80 oder im EEPROM 82 unter Kontrolle des Mikrocontrollers 78 abgespeichert.

Nachdem dieses durchgeführt wurde, ist der Transponder 14 bereit, Gebührenerhebungstransaktionen mit dem Abfragesender 12 durchzuführen. Dieses ist in Figur 5 als "Phase B" gezeigt. Diese Phase beginnt, wenn der Transponder 14 eine Gebührenzone erreicht, was im Block 110 gezeigt ist. Der Abfragevorgang wird mit einem Annäherungs- oder Wecksignal beginnen, um den Transponder 14 auf den Eintritt in einen Gebührenbereich aufmerksam zu machen. Das Signal kann die o.g. Einzelheiten zur Gebührenstelle enthalten. Der Transponder 14 signalisiert in einem Bereitschaftssignal gegenüber dem Abfragesender 12, daß er für die Durchführung einer Transaktion gerüstet ist. Der Abfragesender schickt dann ein Abfragesignal (T) ab, das Angaben zu den vom Dienstanbieter akzeptierten Verträgen und Zahlungsverfahren enthält. Mit seinem Antwortsignal (R) informiert der Transponder 14 den Abfragesender 12, wie oben beschrieben, u.a. über die Fahrzeugklasse, Zahlungssonderkonditionen, das einzusetzende Zahlungsmittel, ein evtl. vorhandenes Eintrittsticket, das Verschlüsselungsverfahren und die zu verwendende Zufallszahl zur Authentisierung des Abfragesenders 12.

Bei Block 112 sendet der Abfragesender 12 an den Transponder 14 eine Transaktionsabfrage (PD), welche die zu entrichtende Gebühr enthält sowie Datum und Uhrzeit des Transaktionszeitpunkts, eine weitere Zufallszahl zur Authentisierung des Transponders 14, sowie eine Information zum Gebührentarif. Ebenfalls enthält die Transaktionsabfrage einen Message Authentication Code (MAC), der einen verschlüsselten Sicherungscode unter Verwendung eines Verschlüsselungsverfahrens wie z.B. des Data Encryption Standards (DES) darstellt. Nach der Authentisierung des Abfragesenders 12 durch den Transponder 14 und der Reduzierung des in den Transponderspeichern 80 bzw. 82 abgelegten Verfügungsbetrages sendet der Transponder 14 sein Verarbeitungsergebnis zusammen mit dem Smartcardzertifikat in einer Transaktionsantwort (P) an den Abfragesender 12. Die Antwort enthält als Transponderzertifikat ebenfalls einen Message Authentication Code (MAC), der vom Transponder 14 erzeugt und vom Abfragesender 12 zur Authentisierung des Transponders 14 und des Zahlungsvorganges geprüft wird.

Der Abfragesender 12 wird dann diese Information verarbeiten und eine Transaktionsbestätigung (CR) zur Beendigung der Transaktion zurücksenden, was im Block 114 dargestellt ist. Die Transaktionsbestätigung enthält die o.g. Informationen zur erfolgten Zahlung, zum Zahlungsort und - zeitpunkt, eine Quittungsnummer und einen Authentikator (z.B. MAC). Nach der erfolgreichen Entschlüsselung der Transaktionsbestätigung (CR) werden die Quittungsdaten in den Transponderspeichern 80 bzw. 82 so abgelegt, daß sowohl eine zusätzliche Nutzerinformation als auch ein Zahlungsnachweis gegenüber einer Kontrollstelle erfolgen kann. Die Schritte 110 bis 114 können so oft wiederholt werden, solange die im Speicher 80 bzw. 82 vorhandene Werteinheitenmenge nicht einen Minimalwert unterschreitet.

Die "Phase C" bezeichnet die Herausnahme der Smartcard auf Wunsch des Benutzers, was im Block 120 angedeutet ist. Zu diesem Zeitpunkt wird die gesamte im Transponder 14 verbliebene Geldmenge bevorzugt über die Schnittstelle 68 der Smartcard 66 rückübertragen. Die Rückübertragung wird bevorzugt verschlüsselt und eingekleidet in ein Authentikationsprotokoll durchgeführt, so daß insbesondere eine Rückübertragung nur möglich ist, wenn zuvor eine authentische und von der Smartcard 66 zertifizierte Abbuchung innerhalb des Transponders 14 erfolgt ist. Der in der Smartcard 66 vorhandene Geldbetrag wird auf den neuesten Stand gebracht (siehe Block 124). Wie in Block 126 gezeigt, kann nun die Smartcard 66 aus dem Transponder 14 herausgenommen werden.

Im Vorangegangenen sind einige wenige bevorzugte Ausführungsformen beschrieben worden. Es ist aber klar, daß der Umfang der Erfindung auch zu den beschriebenen abweichende Ausführungsformen umfaßt, wie aus den Patentan zu entnehmen ist.

Beispielsweise können Anzeigevorrichtungen Kathodenstrahlröhren oder andere Zeilenabtastvorrichtungen, Flüssigkristallanzeigen oder Plasmaanzeigen sein. Der Begriff "Mikrocomputer" ist in einigen Zusammenhängen in dem Sinne verwendet worden, daß ein Mikrocomputer einen Speicher benötigt, während ein "Mikroprozessor" diesen Speicher nicht benötigt. Trotzdem können diese Begriffe in der vorliegenden Beschreibung als synonym angesehen werden. Die Begriffe "Controller", "Prozessorschaltkreis" und "Steuerschaltkreis" umfassen ASICs (Application Specific Integrated Circuits), programmierbare integrierte Bausteine mit logischer Struktur wie PAL oder PLA, Dekoder, Speicherbausteine, nicht auf Software basierende Prozessoren, andere Schaltkreise, digitale Computer einschließlich Mikroprozessoren und Mikrocomputer beliebiger Architektur, oder Kombinationen davon. Mit Speichereinrichtungen sind gemeint SRAM (Static Random Access Memory), DRAM (Dynamic Random Access Memory), pseudostatische RAM, Haltekreise, EEPROM (Electronically-Erasable Programmable Read-Only Memory), EPROM (Erasable Programmable Read-Only Memory), Register oder andere im Stand der Technik bekannte Speichereinrichtungen. Diese Aufzählung erhebt keinen Anspruch auf Vollständigkeit bezüglich der Erfindung.

Frequenzumtast-Modulation (frequency shift keyed modulation, FSK) ist als ein mögliches Datenmodulationsverfahren anzusehen, aber auch Impuls-Pause-Modulation (pulse-pause modulation), Amplitudenumtastung (amplitude shift keying, ASK), Quadratur-AM-Modulation (QAM), Phasenumtastung (phase shift keying, PSK), Quadratur-Phasenumtastung (quadrature phase shift keying, QPSK) oder jede andere Modulationsart. Unterschiedliche Multiplexverfahren wie Zeit- oder Frequenzmodulation können ebenfalls angewandt werden, um Störsignaleinflüsse zu vermeiden. Eine Modulation kann auch durch Reflektionsmodulation (back-scatter modulation), durch aktive Modulation einer Trägerfrequenz oder durch andere Verfahren erreicht werden.

Eine Implementierung kann sowohl in diskreten Teilkomponenten als auch in voll-integrierten Schaltkreisen aus Silizium, Galliumarsenid oder anderen elektronischen Materialfamilien erfolgen. Es werden aber auch optische oder auf anderen Technologien basierende Ausführungsformen erwogen. Auf jeden Fall sollte klar sein, daß verschiedene Ausführungsformen der Erfindung Hardware, Software bzw. Firmware verwenden können.

Obwohl die Erfindung bezüglich einer anschaulichen Ausführungsform beschrieben wurde, soll damit keine Einschränkung impliziert werden. Für die Fachleute dieses Gebietes der Technik ist klar, daß mit der beispielhaften Beschreibung auch die unterschiedlichsten Modifikationen und Kombinationen sowohl der beschriebenen als auch anderer Ausführungsformen angesprochen werden sollen. Diese sollen durch die folgenden Ansprüche eingeschlossen werden.

## Patentansprüche

1. Verfahren zur automatischen Abwicklung von bargeldlosen, vorzugsweise berührungsfreien, Zahlvorgängen, insbesondere zur automatischen Erhebung von Gebühren und dergleichen, zwischen einem Leistungs- oder Dienstanbieter und einem Nutzer dieser Leistungen bzw. dieses Dienstes, der dafür mit einem bargeldlosen, insbesondere elektronischen Zahlungsmittel wie etwa einer Kreditkarte, einer Debitkarte oder einer elektronischen Geldbörse bezahlt, wobei das Verfahren im Zusammenhang eines offenen Zahlungssystems eingesetzt wird, welches neben transportspezifischen Zahlungsmitteln den Einsatz von universellen bargeldlosen Zahlungsmitteln ermöglicht, in welchem der Nutzer das Zahlungsmittel von einem Emittenten, insbesondere einer Bank oder dergleichen erhält und die Freigabe der Zahlung in Form einer bindenden Erklärung der Zahlungsbereitschaft erfolgt, während der Empfang der Zahlung in Form der Annahme der Erklärung erfolgt, und der Emittent dem Leistungs- oder Dienstanbieter, insbesondere über eine Verrechnungsstelle, die Gebühr oder dergleichen auszahlt und hierüber mit dem Nutzer abrechnet, folgende Schritte umfassend:
- Bereitstellung von Daten durch Einführen des Zahlungsmittels in einer Bezahlvorrichtung, welche wenigstens die Identifikation des Zahlungsmittels und der für die Zahlung und deren Verrechnung relevanten Einzeldaten wie verfügbarer Betrag oder Kontoidentifikation gestatten, sowie von Daten, die wenigstens die Identifikation der zu leistenden Zahlung ermöglichen;
- Bereitstellung einer nutzerseitigen Erkennungsvorrichtung, die der Nutzer mit sich führt, welche bei Nutzung der Leistung bzw. des Dienstes durch den Nutzer ein entsprechendes Signal, insbesondere in Form von Daten, die die erfolgte Nutzung repräsentieren, an die Bezahlvorrichtung abgibt;
- Empfang des von der Erkennungsvorrichtung abgegebenen Signals und automatische Festlegung der zu leistenden Zahlung insbesondere Gebühr, anhand einer Tabelle oder durch einen Algorithmus in der Bezahlvorrichtung; und
- Freigabe der Zahlung in Form einer bindenden Erklärung in der Bezahlvorrichtung;
- Erstellung und Ablage einer Quittung entsprechend einer zu leistenden Zahlung in der Bezahlvorrichtung; wobei die Freigabe der Zahlung und die Quittungsablage durch Auswertung entsprechender Verrechnungsdaten in der Bezahlvorrichtung erfolgen, und wobei die Datenstruktur der Verrechnungsdaten so gewählt ist, daß sie für die Weiterverarbeitung beim Emittenten und ggf. bei der Verrechnungsstelle eingesetzt wird.

2. Verfahren nach Anspruch 1, wobei die Zahlung eine Benutzungsgebühr, insbesondere für ein Transportmittel, eine Straße, ein Gebäude und besonders bevorzugt eine Gebühr für die Benutzung einer Autostraße durch ein Fahrzeug ist.

3. Verfahren nach einem der Ansprüche 1 oder 2,
**dadurch gekennzeichnet, daß** die Zahlung durch den Nutzer in Form einer Vorausbezahlung oder einer Nachbezahlung z.B. durch Kontoangabe oder dergleichen, realisiert wird.

4. Verfahren nach einem der Ansprüche 1 bis 3,
**dadurch gekennzeichnet, daß** die Tabelle oder der Algorithmus in der nutzerseitigen Bezahlvorrichtung vorliegt, wobei die zu leistende Zahlung entweder direkt im Zahlungsmittel abgebucht wird oder bis zur nächsten Datenübertragung mit einer externen Erfassungsstelle gespeichert wird.

5. Verfahren nach Anspruch 4,
**dadurch gekennzeichnet, daß** ein Datentransfer der Datenübertragung an einer Kommunikationsschnittstelle berührungsfrei, insbesondere über Funk erfolgt.

6. Verfahren nach Anspruch 4,
**dadurch gekennzeichnet, daß** die Auslösung einer Zahlung über ein Global Navigation Satellite System (GNSS) erfolgt.

7. Verfahren nach Anspruch 1,
**gekennzeichnet durch** Bereitstellen von apparativen bzw. funktionalen Einrichtungen zum Schutz vor unbefugtem Zugang zu Informationen, unbefugter Modifikation von Informationen, Hardware und Software sowie von Systemzusammenhängen, unbefugter Beeinträchtigung der Funktionalität von Systemen und Komponenten und vor unbefugten Eingriffen in die Nachweisbarkeit von Datentransfers und Zahlungsvorgängen.

8. Verfahren nach Anspruch 7,
**wobei** die Maßnahmen zum Schutz vor bewußten Angriffen und unbeabsichtigten Ereignissen auf der Verwendung kryptographischer Mechanismen basieren, und insbesondere kryptographische Mechanismen zur Authentisierung von Daten, Vorgängen und Komponenten, die an einer Kommunikation beteiligt sind, eingesetzt werden.

9. Verfahren nach einem der Ansprüche 7 oder 8,
**dadurch gekennzeichnet, daß** zum Schutz vor bewußten Angriffen Authentikationsmechanismen auf Basis von Zufallszahlen, Message Authentication Codes, digitalen Signaturen und dergleichen eingesetzt werden.

10. Verfahren nach einem der Ansprüche 7 bis 9, umfassend ein Einsetzen von unterschiedlichen oder identischen Standardisierten Sicherheitsverfahren (SAMs) beim Dienstanbieter und dem Emittenten des Zahlungsmittels.

11. Verfahren nach Anspruch 10, wobei die Datentransfers teilweise oder vollständig in verschlüsselter Form erfolgen und insbesondere die Daten zur Fehlererkennung durch kryptographische Maßnahmen kodiert werden.

12. Verfahren nach einem der vorhergehenden Ansprüche,
**dadurch gekennzeichnet, daß** die Weiterleitung von Verrechnungsdaten über Funk oder dergleichen, über eine Kommunikationsleitung oder über die Weiterleitung von Speichermedien erfolgt.

13. Verfahren nach einem der vorhergehenden Ansprüche,
**dadurch gekennzeichnet, daß** der Datentransfer von Verrechnungsdaten in Form von Nachrichten erfolgt, die aus einem Message_Header Datenelement und einem Protocoll_Data_Unit bestehen, wobei der Message_Header die geltende Version des Protokolls identifiziert und das Protocoll_Data_Unit Daten umfaßt, die die Nachrichtenklasse, den Nachrichtentyp, die Identität des Nachrichtensenders sowie die Identität des Nachrichtenempfängers und die Identität der Nachricht umfassen, woran sich eine Sequenz von Datenobjekten anschließt, die mit der eigentlichen Zahlung verbundene Daten enthält.

14. Verfahren nach Anspruch 13,
**dadurch gekennzeichnet, daß** die Message_Header, Message_Class und Message_Type Datenelemente als 1-Byte-Zahlen ausgelegt sind, während die Sender_ID, Receiver_ID und Message_ID Datenobjekte als 4-Byte-Zahlen ausgelegt sind.

15. Verfahren nach einem der vorhergehenden Ansprüche,
**dadurch gekennzeichnet, daß** die Daten in Form von Datenobjekten (Data Objects) übermittelt werden, die Datenelemente in Form von 4-Byte-Zahlen und Sicherheitsparametern z.B. als Message Authentication Code (MAC) oder als digitale Signaturen umfassen.

16. Verfahren nach Anspruches 15,
**dadurch gekennzeichnet, daß** die Datenobjekte zusätzlich Datenelemente in Form von 20-Byte-Informationen enthalten, die aus 8-Byte-Zahlen und 2-Byte-Zahlen sowie einer 8-Byte-Hexadezimalzahl zusammengesetzt sind.

17. Verfahren nach einem der vorhergehenden Ansprüche,
**dadurch gekennzeichnet, daß** die Datenobjekte zusätzlich Datenelemente in Form von 2-Byte-Zahlen umfassen.

18. Verfahren nach einem der vorhergehenden Ansprüche,
**dadurch gekennzeichnet, daß** die Datenobjekte Datenelemente in Form von 18-Byte-Informationen umfassen, die aus einer 8-Byte-Zahl, einer 2-Byte-Zahl und einer 8-Byte-Hexadezimalzahl bestehen.

19. Verfahren nach einem der vorhergehenden Ansprüche,
**dadurch gekennzeichnet, daß** der gesamte Datenfluß vom Anbieter über ggf. die Konzentratorstelle, die Verrechnungsstelle bis zum Emittenten in Form von Nachrichten übereinstimmender Struktur unter Verwendung der in den vorstehenden Ansprüchen definierten Datenobjekte erfolgt.

20. Verfahren nach einem der vorhergehenden Ansprüche,
**dadurch gekennzeichnet, daß** dem Emittenten des elektronischen Zahlungsmittels vom Betreiber der Ladeterminals Daten zur Überwachung der Systemsicherheit in Form solcher Datenobjekte übergeben werden, die strukturell den Datenobjekten entsprechend, die an der Kommunikationsschnittstelle zwischen Bezahlvorrichtung und Erhebungsvorrichtung ausgetauscht werden.

21. System zur automatischen Abwicklung von bargeldlosen, vorzugsweise berührungsfreien, Zahlungsvorgänge, insbesondere zur automatischen Erhebung von Gebühren und dergleichen, zwischen einem Leistungs- oder Dienstanbieter und einem Nutzer dieser Leistung bzw. dieses Dienstes, der dafür mit einem bargeldlosen, insbesondere elektronischen Zahlungsmittel wie etwa einer Kreditkarte, einer Debitkarte oder einer elektronischen Geldbörse bezahlt, wobei das System im Zusammenhang eines offenen Zahlungssystems eingesetzt wird, welches neben transportspezifischen Zahlungsmitteln den Einsatz universeller bargeldloser Zahlungsmittel ermöglicht, in welchem der Nutzer das Zahlungsmittel von einem Emittenten, insbesondere einer Bank oder dergleichen erhält und die Freigabe der Zahlung in Form einer bindenden Erklärung der Zahlungsbereitschaft erfolgt, während der Empfang der Zahlung in Form der Annahme der Erklärung erfolgt, und der Emittent dem Leistungs- oder Dienstanbieter, insbesondere über eine Verrechnungsstelle, die Gebühr oder dergleichen auszahlt und hierüber mit dem Nutzer abrechnet, umfassend:
- eine Bezahlvorrichtung, die der Nutzer mit sich führt, zur Bereitstellung von Daten durch den Nutzer, mittels Einführung des Zahlungsmittels in die Bezahlvorrichtung, wobei die Daten wenigstens die Identifikation des Zahlungsmittels und der für die Zahlung und deren Verrechnung relevanten Einzeldaten wie verfügbarer Betrag oder Kontoidentifikation gestatten,
- Bereitstellung einer nutzersseitigen Erkennungsvorrichtung, welche bei Nutzung der Leistung bzw. des Dienstes durch den Nutzer ein entsprechendes Signal, insbesondere in Form von Daten, die die erfolgte Nutzung repräsentieren, an die Bezahlvorrichtung abgibt;
- wobei die Bezahlvorrichtung zum Empfang des von der Erkennungsvorrichtung abgegebenen Signals ausgestattet ist und zur automatischen Festlegung der zu leistenden Zahlung, insbesondere Gebühr, anhand einer Tabelle oder durch einen Algorithmus;
- wobei die Bezahlvorrichtung ausgebildet ist zur Freigabe der Zahlung in Form der bindenden Erklärung;
- wobei die Bezahlvorrichtung ausgebildet ist zur Erstellung und Ablage einer Quittung entsprechend einer zu leistenden Zahlung; und
- wobei die Bezahlvorrichtung ausgebildet ist zur Freigabe der Zahlung und Quittungsablage durch Auswertung entsprechender Verrechnungsdaten;
- wobei die Datenstruktur derart gewählt ist, dass sie für die Weiterverarbeitung beim Emittenten gegebenenfalls bei der Verrechnungsstelle einsetzbar sind.

22. System nach Anspruch 21, umfassend:
ein Elektronik-Modul (20) und eine Richtantenne (18).

23. System nach Anspruch 22,
**dadurch gekennzeichnet, daß** das Elektronik-Modul (20) einen Transmitter (52), eine Schnittstelle (56) für einen Zentralrechner und einen Empfänger (54) umfaßt.

24. System nach einem der Ansprüche 21 bis 23, umfassend Transponder (14) der eine Schnittstelle (68) für IC-Karten aufweist.

25. System nach Anspruch 24,
**dadurch gekennzeichnet, daß** die IC-Karte eine Smartcard (66) ist.

26. System nach Anspruch 25,
**dadurch gekennzeichnet, daß** die Smartcard (66) über die Schnittstelle (68) und einen Mikrocontroller (78) mit dem Zwischenspeicher (80, 82) kommuniziert.

27. System nach einem der Ansprüche 24 bis 26,
**dadurch gekennzeichnet, daß** der Transponder (14) eine Verschlüsselungs/Entschlüsselungseinrichtung (84) aufweist.

28. System nach einem der Ansprüche 24 bis 27,
**dadurch gekennzeichnet, daß** der Transponder (14) eine Anwenderschnittstelle (72) mit Flüssigkristallanzeige (74) und einem Tastenfeld (76) aufweist.

29. System nach einem der Ansprüche 21 bis 28, umfassend einen Zwischenspeicher der aus einem RAM (80) und einem EEPROM (82) besteht.

30. System nach einem der Ansprüche 26 bis 29, umfassend einen Mikrocontroller (78), der an ein analoges ASIC (32), ein digitales ASIC (34) und eine Antenne (30, 31) angeschlossen ist.

## Claims

1. Method for the automatic settling of cashless, preferably non-contact payment operations, in particular for the automatic levying of charges and the like, between a performance or service provider and a user of said performances or said service, who pays with a cashless, in particular electronic, means of payment, such as, for example, a credit card, a debit card or an electronic purse, wherein the method is used in conjunction with an open payment system which, in addition to transport-specific means of payment, also facilitates the use of universal cashless means of payment in which the user obtains the means of payment from an issuing body, in particular a bank or the like, and the payment is released in the form of a binding declaration of the willingness to pay, while payment is received in the form of an acceptance of the declaration and the issuing body pays the charge or the like to the performance or service provider, in particular via a clearing point, and settles up with the user comprising the following steps:
- provision of data by the introduction of the means of payment in a payment device which permit at least the identification of the means of payment and the individual data items relevant for the payment and its clearing such as the amount available or account identification and of data which facilitate at least the identification of the payment to be made,
- release of the payment in the form of the binding declaration in the payment device,
- provision of a user-side identification device which the user carries with him
which, during the usage of the performance or service by the user, issues a corresponding signal, in particular in the form of data representing the usage made, to the payment device,
- reception of the signal issued by the identification device and automatic determination of the payment to be made, in particular a charge, using a table or by means of an algorithm in the payment device, and
- creation and filing of a receipt corresponding to a payment to be made in the payment device, wherein the release of the payment and the filing of the receipt take place by the evaluation of corresponding clearing data in the payment device and wherein the data structure of the clearing data is selected in such a way that it is used for the further processing at the issuing body and optionally at the clearing point.

2. Method according to claim 1, wherein the payment is a usage charge in particular for a transport means, a street, a building and particularly preferably a charge for the use of a motor road by a car.

3. Method according to either claim 1 or claim 2, **characterised in that** the payment by the user is realised in the form of an advance payment or a subsequent payment, for example by account details or the like.

4. Method according to any one of claims 1 to 3, **characterised in that** the table or the algorithm is present in the user-side payment device, wherein the payment to be made is either debited directly in the means of payment or stored until the next data transmission with an external acquisition point.

5. Method according to claim 4, **characterised in that** a data transfer of the data transmission at a communication interface takes place without contact in particular by means of radio.

6. Method according to claim 4, **characterised in that** the payment is triggered via a global navigation satellite system (GNSS).

7. Method according to claim 1, provision of apparatuses or functional devices to prevent unauthorised access to information, unauthorised modification of information, hardware and software and of system relationships, unauthorised impairment of the functionality of systems and components and unauthorised intervention in the verifiability of data transfers, payment operations.

8. Method according to claim 7, wherein the measures to prevent intentional attacks and unintentional events are based on the use of cryptographic mechanisms and in particular the use of cryptographic mechanisms for the authentication of data, processes and components participating in a communication.

9. Method according to either claim 7 or claim 8, **characterised in that**, to prevent intentional attacks, authentication mechanisms based on random numbers, message authentication codes, digital signatures and the like are used.

10. Method according to any one of claims 7 to 9 comprising one of different or identical standardised security methods (SAMs) at the service provider and the issuing body of the means of payment.

11. Method according to claim 10, wherein the data transfers take place partially or completely in encrypted form and in particular the data for error detection are encoded by means of cryptographic measures.

12. Method according to any one of the preceding claims, **characterised in that** the forwarding of clearing data takes place by means of radio or the like, via a communications line or via the forwarding of storage media.

13. Method according to any one of the preceding claims, **characterised in that** the data transfer of clearing data takes place in the form of messages comprising a Message_Header data item and a Protocol_Data_Unit, wherein the Message_Header identifies the valid version of the protocol and the Protocol_Data_Unit comprises data which comprise the message class, the message type, the identity of the message sender and the identity of the message recipient and the identity of the message to which is connected a sequence of data objects containing data connected to the actual payment.

14. Method according to claim 13, **characterised in that** the Message_Header, Message_Class and Message_Type data items are designed as 1-byte numbers, while the Sender_ID, Receiver_ID and Message_ID data objects are designed as 4-byte numbers.

15. Method according to any one of the preceding claims, **characterised in that** the data are transferred in the form of data objects comprising data items in the form of 4-byte numbers and security parameters, for example as a message authentication code (MAC) or as digital signatures.

16. Method according to claim 15, **characterised in that** the data objects also contain data items in the form of 20-byte information data, which are made up of 8-byte numbers and 2-byte numbers and an 8-byte hexadecimal number.

17. Method according to any one of the preceding claims, **characterised in that** the data objects also comprise data items in the form of 2-byte numbers.

18. Method according to any one of the preceding claims, **characterised in that** the data objects comprise data items in the form of 18-byte information data comprising an 8-byte number, a 2-byte number and an 8-byte hexadecimal number.

19. Method according to any one of the preceding claims, **characterised in that** the entire data flow from the supplier takes place optionally via the concentrator point, the clearing point to the issuing body in the form of messages of a homologous structure using the data objects defined in the preceding claims.

20. Method according to any one of the preceding claims, **characterised in that** the operator of the loading terminal provides the issuing body of the electronic means of payment with data for monitoring the system security in the form of data objects which are structurally homologous with the data objects which are exchanged at the communication interface between the payment device and the levying device.

21. System for the automatic settling of cashless, preferably non-contact payment operations, in particular for the automatic levying of charges and the like, between a performance or service provider and a user of said performance or service, who pays with a cashless, in particular electronic, means of payment, such as, for example, a credit card, a debit card or an electronic purse, wherein the system is used in conjunction with an open payment system which, in addition to transport-specific means of payment, also facilitates the use of universal cashless means of payment in which the user obtains the means of payment from an issuing body, in particular a bank or the like, and the payment is released in the form of a binding declaration of the willingness to pay, while payment is received in the form of an acceptance of the declaration and the issuing body pays the charge or the like to the performance or service provider, in particular via a clearing point, and settles up with the user comprising:
- a payment device which the user carries with him for the provision of data by the user by means of the introduction of the means of payment into the payment device, wherein the data permit at least the identification of the means of payment and individual data items relevant for the payment and its clearing such as the amount available or account identification,
- provision of a user-side identification device which the user carries with him which, during the usage of the performance or service by the user, issues a corresponding signal, in particular in the form of data representing the usage made, to the payment device, wherein the payment device is designed for the reception of the signal issued by the levying device and for the determination of the payment to be made, in particular a charge, using a table or by means of an algorithm, wherein the payment device is designed to release the payment in the form of the binding declaration, and
- wherein the payment device is designed for the creation and filing of a receipt corresponding to a payment and wherein the payment device is designed for the release of the payment and the filing of the receipt by the evaluation of corresponding clearing data, wherein the data structure is selected in such a way that it can be used for the further processing at the issuing body and optionally at the clearing point.

22. Method according to claim 21, comprising an electronic module (20) and a directional antenna (18).

23. Method according to claim 22, **characterised in that** the electronic module (20) comprises a transmitter (52), an interface (56) for a central computer and a receiver (54).

24. Method according to any one of claims 21 to 23 comprising a transponder (14) with an interface (68) for IC cards.

25. Method according to claim 24, **characterised in that** the IC card is a smartcard (66).

26. Method according to claim 25, **characterised in that** the smartcard (66) communicates with the intermediate memory (80, 82) via the interface (68) and a microcontroller (78).

27. Method according to any one of claims 24 to 26, **characterised in that** the transponder (14) comprises an encryption/decryption device (84).

28. Method according to any one of claims 24 to 27, **characterised in that** the transponder (14) comprises a user interface (72) with a liquid crystal display (74) and a keypad (76).

29. Method according to any one of claims 21 to 28 comprising an intermediate memory consisting of a RAM (80) and an EEPROM (82).

30. Method according to any one of claims 26 to 29 comprising a microcontroller (78) which is connected to an analog ASIC (32), a digital ASIC (34) and an antenna (30, 31).

## Revendications

1. Procédé de réalisation automatique d'opérations de paiement par virement, de préférence sans contact, en particulier pour le prélèvement automatique de taxes et similaires, entre un fournisseur ou prestataire de services et un utilisateur de ces prestations et/ou services, qui effectue un règlement avec un moyen de paiement par virement, en particulier électronique, tel qu'une carte de crédit, une carte de débit ou une bourse électronique, le procédé étant utilisé en relation avec un système de paiement ouvert qui permet, parallèlement à des moyens de paiement spécifiques au ou de transport, l'utilisation de moyens de paiement universels par virement, dans lequel l'utilisateur reçoit le moyen de paiement d'un émetteur, en particulier d'une banque ou similaire, et le paiement est déclenché sous forme d'une déclaration coercitive ou liante de la disposition à payer, tandis que la réception du paiement a lieu sous forme de l'acceptation de la déclaration, et l'émetteur verse au fournisseur ou prestataire de services, en particulier via un centre de virement, la taxe ou similaire, et impute via celui-ci l'utilisateur, en incluant les étapes suivantes :
- Fourniture de données par l'introduction du moyen de paiement dans un dispositif de paiement, lesquelles permettent au moins l'identification du moyen de paiement et des données individuelles nécessaires au paiement et au virement, telles que le montant disponible ou l'identification de compte, ainsi que les données qui permettent au moins l'identification du paiement à effectuer ;
- Déclenchement du paiement sous la forme de la déclaration coercitive dans le dispositif de paiement ;
- Fourniture d'un dispositif de détection côté utilisateur que l'utilisateur emporte avec lui, qui émet au niveau du ou vers le dispositif de paiement, lors de l'utilisation de la prestation et/ou du service par l'utilisateur, un signal correspondant, en particulier sous forme de données qui représentent l'utilisation accomplie ;
- Réception du signal émis par le dispositif de détection et détermination automatique du paiement à effectuer, en particulier la taxe, au moyen d'un tableau ou par un algorithme dans le dispositif de paiement ; et
- Elaboration et dépôt d'un accusé de réception correspondant à un règlement à effectuer dans le dispositif de paiement ; le déclenchement du règlement et le dépôt de l'accusé de réception étant effectués par l'évaluation des données de virement correspondantes dans le dispositif de paiement, et la structure des données de virement étant choisie de telle sorte qu'elle est utilisée pour le traitement ultérieur au niveau de l'émetteur et éventuellement au niveau du centre de virement.

2. Procédé selon la revendication 1, le paiement étant une taxe d'utilisation, en particulier pour un moyen de transport, une route, un bâtiment, et en particulier de préférence une taxe pour l'utilisation d'une route pour automobile par un véhicule.

3. Procédé selon la revendication 1 ou 2,
**caractérisé en ce que** le paiement par l'utilisateur est réalisé sous forme d'un pré-paiement ou post-paiement, par exemple par indication du compte ou similaires.

4. Procédé selon l'une quelconque des revendications 1 à 3,
**caractérisé en ce que** le tableau ou l'algorithme est présent dans le dispositif de paiement côté utilisateur, le paiement à effectuer étant soit débité directement dans le moyen de paiement, soit enregistré jusqu'à la prochaine transmission de données avec un centre de comptage externe.

5. Procédé selon la revendication 4,
**caractérisé en ce qu'**un transfert de données de la transmission de données a lieu sans contact au niveau d'une interface de communication, en particulier par radio.

6. Procédé selon la revendication 4,
**caractérisé en ce que** le déclenchement d'un paiement a lieu par un système GNSS (système de navigation mondial par satellite).

7. Procédé selon la revendication 1,
**caractérisé par** la fourniture d'installations en appareils et/ou en fonctions pour la protection contre l'accès illicite aux informations, la modification illicite des informations, matériels et logiciels, ainsi que des communications systèmes, l'endommagement illicite de la fonctionnalité des systèmes et composants et des interventions illicites dans la détectivité du transfert de données, des opérations de paiement.

8. Procédé selon la revendication 7,
les mesures de protection contre les interventions illicites et les événements imprévus reposant sur l'utilisation de mécanismes cryptographiques, et en particulier des mécanismes cryptographiques étant utilisés pour l'authentification de données, processus et composants, qui participent à une communication.

9. Procédé selon l'une quelconque des revendications 7 ou 8,
**caractérisé en ce que** pour la protection contre les interventions illicites, des mécanismes d'authentification sont utilisés sur la base des nombres aléatoires, des codes d'authentification de messages, des signatures numériques et similaires.

10. Procédé selon l'une quelconque des revendications 7 à 9, comprenant un prestataire de services et l'émetteur du moyen de paiement de procédés de sécurité (SAM) différents ou identiques standardisés.

11. Procédé selon la revendication 10, les transferts de données ayant lieu partiellement ou entièrement sous forme codée, et en particulier les données destinées à la détection des anomalies sont codées par des mesures cryptographiques.

12. Procédé selon l'une quelconque des revendications précédentes,
**caractérisé en ce que** le transfert des données de virement par radio ou similaires a lieu par une ligne de communication ou par le transfert des supports d'enregistrement.

13. Procédé selon l'une quelconque des revendications précédentes,
**caractérisé en ce que** le transfert de données des données de virement a lieu sous la forme de messages qui sont composés d'un élément de données « Message_Header » et d'un élément « Protocoll_Data_Unit », l'élément « Message_Header » identifiant la version en vigueur du protocole, et l'élément « Protocoll_Data_Unit » comprenant des données qui comprennent la catégorie de messages, le type de message, l'identité de l'émetteur du message, ainsi que l'identité du récepteur du message, et l'identité du message, auxquelles se rattache une séquence d'objets de données qui contient des données reliées au règlement à proprement parler.

14. Procédé selon la revendication 13,
**caractérisé en ce que** les éléments de données « Message_Header », « Message_Class » et « Message_Type » sont conçus comme des nombres de 1 octet, tandis que les objets de données « Sender_ID », « Receiver_ID » et « Message_ID » sont conçus comme des nombres de 4 octets.

15. Procédé selon l'une quelconque des revendications précédentes,
**caractérisé en ce que** les données sont transmises sous forme d'objets de données (Data Objects), qui comprennent des éléments de données sous forme de nombres de 4 octets et des paramètres de sécurité par exemple en tant que code d'authentification de message (MAC) ou en tant que signatures numériques.

16. Procédé selon la revendication 15,
**caractérisé en ce que** les objets de données contiennent en plus des éléments de données sous forme d'informations de 20 octets qui sont composées de nombres de 8 octets et de nombres de 2 octets, ainsi que d'un nombre hexadécimal de 8 octets.

17. Procédé selon l'une quelconque des revendications précédentes,
**caractérisé en ce que** les objets de données comprennent en plus des éléments de données sous forme de nombres de 2 octets.

18. Procédé selon l'une quelconque des revendications précédentes,
**caractérisé en ce que** les objets de données comprennent des éléments de données sous forme d'informations de 18 octets qui sont composées d'un nombre de 8 octets, d'un nombre de 2 octets et d'un nombre hexadécimal de 8 octets.

19. Procédé selon l'une quelconque des revendications précédentes,
**caractérisé en ce que** le flux de données complet du prestataire via éventuellement le centre concentrateur, le centre de virement, à l'émetteur a lieu sous forme de messages de la structure concordante en utilisant les objets de données définis dans les revendications précédentes.

20. Procédé selon l'une quelconque des revendications précédentes,
**caractérisé en ce que** des données sont remises à l'émetteur du moyen de paiement électronique par l'exploitant du terminal de chargement pour contrôler la sécurité du système sous la forme de ces objets de données, lesquelles sont échangées, structurellement en fonction des objets de données, au niveau de l'interface de communication entre le dispositif de paiement et le dispositif de prélèvement.

21. Système pour la réalisation automatique des opérations de paiement par virement, de préférence sans contact, en particulier pour le prélèvement automatique de taxes et similaires, entre un fournisseur ou prestataire de services et un utilisateur de ces prestations et/ou services, qui effectue un règlement avec un moyen de paiement par virement en particulier électronique, tel qu'une carte de crédit, une carte de débit ou une bourse électronique, le système étant utilisé en relation avec un système de paiement ouvert, dans lequel l'utilisateur reçoit le moyen de paiement d'un émetteur, en particulier d'une banque ou similaire, et le paiement est déclenché sous forme d'une déclaration coercitive ou liante de la disposition à payer, tandis que la réception du paiement a lieu sous forme de l'acceptation de la déclaration, et l'émetteur verse au fournisseur ou prestataire de services, en particulier via un centre de virement, la taxe ou similaire, et impute via celui-ci l'utilisateur, système comprenant :
- Un dispositif de paiement que l'utilisateur emporte avec lui pour la fourniture de données par l'utilisateur au moyen de l'introduction du moyen de paiement dans le dispositif de paiement, moyennant quoi les données permettent au moins l'identification du moyen de paiement et des données individuelles nécessaires au paiement et au virement, telles que le montant disponible ou l'identification de compte ;
- Fourniture d'un dispositif de prélèvement côté utilisateur que l'utilisateur emporte avec lui, qui émet au niveau du dispositif de paiement, lors de l'utilisation de la prestation et/ou du service par l'utilisateur, un signal correspondant, en particulier sous forme de données qui représentent l'utilisation accomplie, moyennant quoi le dispositif de paiement est autorisé à recevoir le signal émis par le dispositif de détection et à déterminer automatiquement le paiement à effectuer, en particulier la taxe, au moyen d'un tableau ou par un algorithme, moyennant quoi le dispositif de paiement est configuré pour déclencher le paiement sous forme de déclaration coercitive ou liante ;
- le dispositif de paiement étant configuré pour l'élaboration et le dépôt d'un accusé de réception en fonction d'un paiement à effectuer ; et
- le dispositif de paiement étant configuré pour déclencher le paiement et le dépôt d'un accusé de réception par l'évaluation des données de virement correspondantes ;
- la structure de données étant sélectionnée de telle sorte qu'elle est utilisable pour le traitement ultérieur au niveau de l'émetteur et éventuellement au niveau du centre de virement.

22. Système selon la revendication 21, comprenant :
un module électronique (20) et une antenne directive (18).

23. Système selon la revendication 22,
**caractérisé en ce que** le module électronique (20) comprend un émetteur (52), une interface (56) pour un calculateur central et un récepteur (54).

24. Système selon l'une quelconque des revendications 21 à 23, comprenant
un transpondeur (14) comportant une interface (68) pour des cartes à circuits intégrés.

25. Système selon la revendication 24,
**caractérisé en ce que** la carte à circuits intégrés est une carte à puce (66).

26. Système selon la revendication 25,
**caractérisé en ce que** la carte à puce (66) communique via l'interface (68) et un microcontrôleur (78) avec la mémoire temporaire (80, 82).

27. Système selon l'une quelconque des revendications 24 à 26,
**caractérisé en ce que** le transpondeur (14) comprend une installation de codage/décodage (84).

28. Système selon l'une quelconque des revendications 24 à 27,
**caractérisé en ce que** le transpondeur (14) comprend une interface utilisateur (72) avec affichage à cristaux liquides (74) et un clavier de numérotation (76).

29. Système selon l'une quelconque des revendications 21 à 28, comprenant
une mémoire temporaire formée d'une mémoire vive (RAM) (80) et d'une mémoire morte (EEPROM) (82).

30. Système selon l'une quelconque des revendications 26 à 29, comprenant
un microcontrôleur (78) qui est raccordé à un circuit intégré analogique (32), un circuit intégré numérique (34) et une antenne (30, 31).
